# EUROPÄISCHE PATENTANMELDUNG

(11) **EP 4 401 056 A1**
(43) Veröffentlichungstag der Anmeldung: **17.07.2024**
(21) Anmeldenummer: 23151173.4
(22) Anmeldetag: 11.01.2023
(51) Int. Cl.: G07F 19/00, A47F 9/04, E04H 1/12, G06F 1/16, G07G 1/00

(54) **SELBSTBEDIENUNGSTERMINAL**

(71) Anmelder: Diebold Nixdorf Systems GmbH, 33106 Paderborn (DE)
(72) Erfinder: BOESENDORFER, Nicolas, 33106 Paderborn (DE); NIKOLIC, Zdravko, 33106 Paderborn (DE); PALITZA, Anja, 33106 Paderborn (DE); KIRSCHKE, Uwe, 33106 Paderborn (DE)
(74) Vertreter: Viering, Jentschura & Partner mbB Patent- und Rechtsanwälte

(57) **Zusammenfassung**

Ein Selbstbedienungsterminal (100) wird offenbart, aufweisend: ein Gehäuse (102) mit einem ersten Lineareinschubführungsabschnitt (108) und einem zweiten Lineareinschubführungsabschnitt (110), die zueinander parallel verlaufen und damit eine gemeinsame Lineareinschubrichtung (114) definieren und die quer zur Lineareinschubrichtung in einem Abstand voneinander angeordnet sind; eine an dem Gehäuse (102) befestigte und in Richtung zu eines Benutzer des Selbstbedienungsterminals (100) ausgerichtete Anzeige- und/oder Bedienvorrichtung (104); einen Prozessor, der eingerichtet ist, eine graphische Anzeige- und/oder Bedienoberfläche auf der Anzeige- und/oder Bedienvorrichtung (104) bereitzustellen, um den Benutzer bei einem Selbstbedienungsprozess am Selbstbedienungsterminal (100) zu unterstützen; ein Befestigungselement (112), das eingerichtet ist, lösbar an einer Basis (106) befestigt zu werden, und das einen ersten und einen zweiten Korrespondenz-Lineareinschubführungsabschnitt aufweist, sodass das Gehäuse (102) und das an der Basis (106) befestige Befestigungselement (112) entlang der Lineareinschubrichtung (114) via Lineareinschieben zusammenbaubar sind, um dadurch das Gehäuse (102) über das Befestigungselement (112) an der Basis (106) in lösbarer Weise festzulegen.

## Beschreibung

Verschiedene Ausführungsbeispiele betreffen ein Selbstbedienungsterminal.

An einem Selbstbedienungsterminal, wie beispielsweise einer Selbstbedienungskasse, kann ein Benutzer verschiedene Dienstleistungen (z.B. das Bezahlen eines Einkaufs) ohne Interaktion mit einer zusätzlichen Person in Anspruch nehmen. Für Betreiber eines solchen Selbstbedienungsterminals (z.B. einem Betreiber eines Geschäfts) kann es vorteilhaft sein, wenn das Selbstbedienungsterminal beispielsweise kostengünstig und flexibel ist.

Verschiedene Ausführungsformen betreffen ein solches kostengünstiges und flexibles Selbstbedienungsterminal. So wird gemäß verschiedenen Ausführungsformen ein Selbstbedienungsterminal bereitgestellt, welches flexibel mit (z.B. gewünschten und/oder erforderlichen) Peripheriegeräten verbunden werden kann. Dies wird beispielsweise ermöglicht, indem ein Gehäuse des Selbstbedienungsterminals (z.B. vor Ort in der Anwendung) modular erweiterbar ist. Dadurch kann ein Betreiber eines Geschäfts zum Beispiel je nach Wünschen und/oder Anforderungen vor Ort einen bestimmten Aufbau des Selbstbedienungsterminals (z.B. bestimmte Peripheriegeräte und/oder deren Anordnung) einrichten kann. So ermöglicht dies einerseits, dass das Gehäuse mit ein oder mehreren Peripheriegeräten (z.B. einem (z.B. Kassenbon-) Drucker, einen Kartenlesegerät, einen Verifizierungsgerät, einem Handscanner, etc.) erweitert werden kann, und andererseits, dass auch zu einem späteren Zeitpunkt vor Ort einen Aufbau des Selbstbedienungsterminals verändert (z.B. durch Austausch eines Peripheriegerätes, Hinzufügen eines Peripheriegeräts, Weglassen eines Peripheriegeräts, Vertauschen von Peripheriegeräten, etc.) werden kann. Dies erleichtert ebenfalls einen Austausch von Peripheriegeräten des Selbstbedienungsterminals (z.B. im Falle eines defekten Peripheriegerätes). Folglich können auf diese Weise die Kosten für den Betrieb des Selbstbedienungsterminals verringert werden bei gleichzeitiger Bereitstellung einer erhöhten Flexibilität bezüglich des Aufbaus (z.B. der Peripheriegeräte) und der Anpassung an neue Gegebenheiten (z.B. zusätzlich erforderliche Peripheriegeräte). Im Falle einer Wartung und/oder einer Reparatur des Selbstbedienungsterminals, kann es erforderlich sein, ein Gehäuse des Selbstbedienungsterminals zu öffnen, um beispielsweise Zugang zu einzelnen Komponenten, wie Anschlussplätzen, Controllern, Befestigungen, etc. zu erhalten. Gemäß verschiedenen Aspekten können die Kosten für den Betrieb des Selbstbedienungsterminals verringert werden, indem das Selbstbedienungsterminal auf eine einfache Weise geöffnet werden kann. Dies wird ermöglicht, indem eine Anzeige- und/oder Bedienvorrichtung zur Seite hin weggeschwenkt und dann eine Abdeckung an der Vorderseite des Gehäuses nach vorn hin aufgeklappt werden kann. Dies ermöglicht beispielsweise auch eine kompakte Bauweise des Selbstbedienungsterminals. Gemäß verschiedenen Ausführungsformen können Anschlussplätze an Rückseite innerhalb des Gehäuses angeordnet sein und Anschlusskabel können mittels einer Abdeckklappe in einem zur Rückseite angrenzenden Abschnitt gehalten werden, wodurch diese beispielsweise einen Zugang zu dem verbleibenden Abschnitt des Gehäuseinneren nicht behindern und so den Wartungs- und/oder Reparaturprozess erleichtern. Gemäß verschiedenen Aspekten können die Kosten des Selbstbedienungsterminals verringert werden, indem das Selbstbedienungsterminal auf einfache Weise zusammengebaut werden kann. Dies wird beispielsweise ermöglicht, indem Abschnitte des Gehäuses in ein Befestigungselement lineareingeschoben und mittels des Befestigungselements an einer Basis befestigt werden können. Ferner können hierbei beispielsweise Anschlusskabel auf einfache Weise in das Gehäuse hinein bzw. aus diesem herausgeführt werden (z.B. ohne die Gefahr, dass diese eingeklemmt werden).

Es zeigen
Figuren 1A bis 1C jeweils ein Selbstbedienungsterminal gemäß verschiedenen Ausführungsformen;
Figuren 1D und 1E beispielhafte Basiseinheiten, auf welcher das Selbstbedienungsterminal gemäß verschiedenen Ausführungsformen angeordnet werden kann;
Figur 1F ein an einer Wand angebrachtes Selbstbedienungsterminal gemäß verschiedenen Ausführungsformen;
Figur 2A bis 2E Aspekte bezüglich Lineareinschubführungsabschnitten eines Gehäuses des Selbstbedienungsterminals und bezüglich eines Befestigungselements mittels denen das Gehäuses gemäß verschiedenen Ausführungsformen lösbar an einer Basis befestigt werden kann;
Figur 3A bis 3L Aspekte bezüglich eines Verbindungselements mittels welchem ein oder mehrere Peripheriegeräte an einem Gehäuse des Selbstbedienungsterminals gemäß verschiedenen Ausführungsformen befestigt werden können;
Figur 4A bis 4E Aspekte bezüglich verschiedener Schwenkeinrichtungen des Selbstbedienungsterminals gemäß verschiedenen Ausführungsformen; und
Figur 5A bis 5D Aspekte bezüglich einer Konfiguration einer Rückseite des Selbstbedienungsterminals gemäß verschiedenen Ausführungsformen.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten" verwendet und für Seiten eines Selbstbedienungsterminals werden Begriffe wie "Oberseite", "Unterseite", "Vorderseite", "Rückseite", "Lateralseite" verwendet. Diese Richtungsterminologie wird aus Sicht eines Benutzers des Selbstbedienungsterminals beschrieben ist in keinerlei Weise einschränkend zu verstehen.

Der Begriff "Prozessor" kann als jede Art von Entität verstanden werden, die die Verarbeitung von Daten oder Signalen erlaubt. Die Daten oder Signale können beispielsweise gemäß zumindest einer (d.h. einer oder mehr als einer) spezifischen Funktion behandelt werden, die vom Prozessor ausgeführt wird. Ein Prozessor kann eine analoge Schaltung, eine digitale Schaltung, eine Mischsignalschaltung, eine Logikschaltung, einen Mikroprozessor, eine zentrale Verarbeitungseinheit (CPU), eine Grafikverarbeitungseinheit (GPU), einen digitalen Signalprozessor (DSP), eine programmierbare Gatter-Anordnung (FPGA), eine integrierte Schaltung oder eine beliebige Kombination davon aufweisen oder daraus gebildet sein. Jede andere Art der Implementierung der jeweiligen Funktionen, die nachstehend ausführlicher beschrieben werden, kann auch als Prozessor oder Logikschaltung verstanden werden. Es versteht sich, dass einer oder mehrere der hierin detailliert beschriebenen Verfahrensschritte von einem Prozessor ausgeführt (z.B. realisiert) werden können, durch eine oder mehrere spezifische Funktionen, die von dem Prozessor ausgeführt werden. Der Prozessor kann daher eingerichtet sein, eines der hierin beschriebenen Verfahren oder dessen Komponenten zur Informationsverarbeitung durchzuführen.

Für Betreiber eines Selbstbedienungsterminals, wie beispielsweise einer Selbstbedienungskasse, kann es vorteilhaft sein, wenn das Selbstbedienungsterminal kostengünstig und flexibel ist, und zwar sowohl initial als auch im späteren Betrieb. Zum Beispiel können sich die Anforderungen an das Selbstbedienungsterminal im Laufe der Zeit verändern, so dass zum Beispiel ein bestimmtes Peripheriegerät erst zu einem späteren Zeitpunkt benötigt und/oder gewünscht wird. Verschiedene Ausführungsformen betreffen ein Selbstbedienungsterminal, das modular erweiterbar ist, wodurch das Selbstbedienungsterminal flexibel mit Peripheriegeräten verbunden werden kann, wodurch ebenfalls die Kosten gesenkt werden. Die Kosten können zum Beispiel beim Zusammenbau des Selbstbedienungsterminals gesenkt werden. Verschiedene Ausführungsformen betreffen ein Selbstbedienungsterminal, das auf eine einfache Weise zusammengebaut werden kann. Die Kosten können zum Beispiel beim Betrieb des Selbstbedienungsterminals gesenkt werden. Verschiedene Ausführungsformen betreffen ein Selbstbedienungsterminal, welches auf eine einfache Weise gewartet und/oder repariert werden kann. So kann das Selbstbedienungsterminal beispielsweise auf eine einfache Weise geöffnet werden, um einen Zugang zu einem Gehäuseinneren zu erhalten. Dies kann beispielsweise auch ein Verbinden des Gehäuses mit den Peripheriegeräten erleichtern.

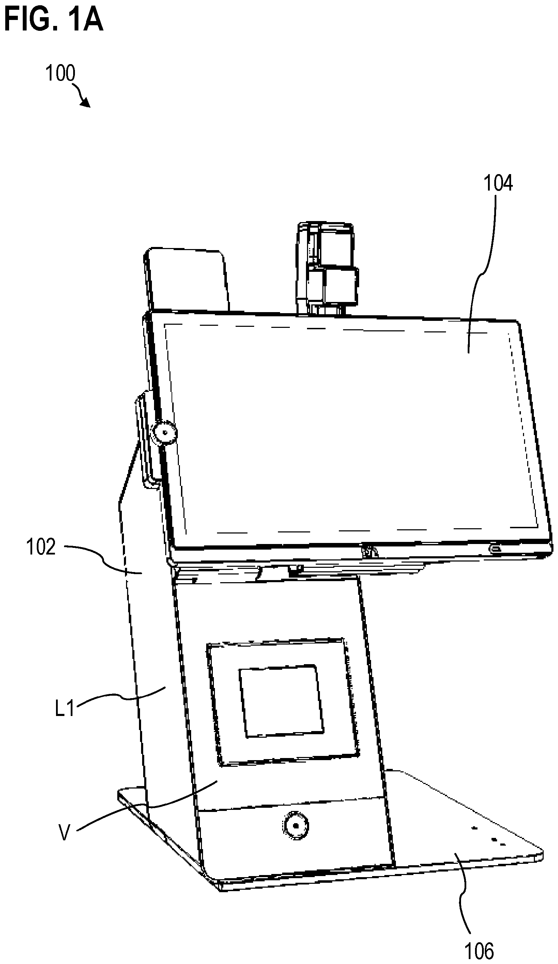

**FIG. 1A** bis **FIG.1C** zeigen verschiedene Perspektivansichten eines Selbstbedienungsterminals 100 gemäß verschiedenen Ausführungsformen. Das Selbstbedienungsterminal 100 kann zum Beispiel eine Selbstbedienungskasse oder ein Selbstbedienungskiosk sein.

Das Selbstbedienungsterminal 100 kann ein Gehäuse 102 aufweisen. Das Gehäuse 102 des Selbstbedienungsterminals 100 kann eine einem Benutzer des Selbstbedienungsterminals (z.B. einem Kunden der Selbstbedienungskasse oder des Selbstbedienungskiosks) zugewandte Vorderseite, V, aufweisen.

Das Gehäuse 102 kann eine der Vorderseite, V, gegenüberliegende Rückseite, R, aufweisen. Das Gehäuse 102 kann eine erste Lateralseite, L1, (in manchen Aspekten auch als linke Seite bezeichnet) lateral zu der Vorderseite, V, aufweisen. Das Gehäuse 102 kann eine der ersten Lateralseite, L1, gegenüberliegende zweite Lateralseite, L2, (in manchen Aspekten auch als rechte Seite bezeichnet) lateral zu der Vorderseite, V, aufweisen. Das Gehäuse 102 kann eine Oberseite, O, und eine der Oberseite gegenüberliegende Unterseite, U, aufweisen. Das Gehäuse 102 kann eine sich durch die Oberseite und die Unterseite verlaufende Hochachse definieren.

Das Gehäuse 102 kann aus einem Bauteil oder aus mehreren Bauteilen bestehen.

Das Selbstbedienungsterminal 100 kann eine Anzeige- und/oder Bedienvorrichtung 104 aufweisen. Die Anzeige- und/oder Bedienvorrichtung 104 kann an dem Gehäuse 102 befestigt sein. Die Anzeige- und/oder Bedienvorrichtung 104 kann in Richtung zu dem Benutzer des Selbstbedienungsterminals 100 ausgerichtet sein. Die die Anzeige- und/oder Bedienvorrichtung 104 kann zum Beispiel einen Bildschirm aufweisen. Die die Anzeige- und/oder Bedienvorrichtung 104 kann zum Beispiel einen Touchscreen aufweisen, welcher (als Benutzerschnittstelle) eine Bedienung des Selbstbedienungsterminals 100 ermöglicht.

Das Selbstbedienungsterminal 100 kann ferner einen oder mehrere Prozessoren aufweisen. Die ein oder mehreren Prozessoren 110 können, wie hierin beschrieben, jede Art von Logik-implementierender Entität sein. Die ein oder mehreren Prozessoren 110 können eingerichtet sein, eine graphische Anzeige- und/oder Bedienoberfläche auf der Anzeige- und/oder Bedienvorrichtung 104 bereitzustellen. Die Anzeige- und/oder Bedienoberfläche kann den Benutzer bei einem Selbstbedienungsprozess am Selbstbedienungsterminal 100 unterstützen. In manchen Aspekten kann eine Software (z.B. ein Kassenprogramm) zum Betreiben des Selbstbedienungsterminals 100 von den ein oder mehreren Prozessoren implementiert sein bzw. werden. In anderen Aspekten kann die Software auf einem (mittels eines drahtgebundenen und/oder drahtlosen Netzwerkes mit dem Selbstbedienungsterminal 100 verbundenen) (z.B. Terminal-) Server (z.B. mittels Cloudverarbeitung) implementiert sein bzw. werden und die ein oder mehreren Prozessoren können eine entsprechende Anzeige- und/oder Bedienoberfläche auf der Anzeige- und/oder Bedienvorrichtung 104 (z.B. gemäß von dem Server empfangenen Instruktionen) bereitstellen (z.B. können die ein oder mehreren Prozessoren Teil eines Thin Client sein).

Das Selbstbedienungsterminal 100 kann eine Speichervorrichtung aufweisen. Die ein oder mehreren Prozessoren können eingerichtet sein, die Speichervorrichtung bei der Verarbeitung von Daten zu verwenden. Die Speichervorrichtung kann zumindest einen Speicher aufweisen. Ein Speicher kann zum Beispiel ein flüchtiger Speicher, zum Beispiel ein DRAM (dynamischer Direktzugriffsspeicher), oder ein nichtflüchtiger Speicher, zum Beispiel ein PROM (programmierbarer Festwertspeicher), ein EPROM (löschbarer PROM), ein EEPROM (elektrisch löschbarer PROM) oder ein Flash-Speicher, wie beispielsweise eine Speichereinrichtung mit schwebendem Gate, eine ladungsabfangende Speichereinrichtung, ein MRAM (magnetoresistiver Direktzugriffsspeicher) oder ein PCR_AM (Phasenwechsel-Direktzugriffsspeicher), sein.

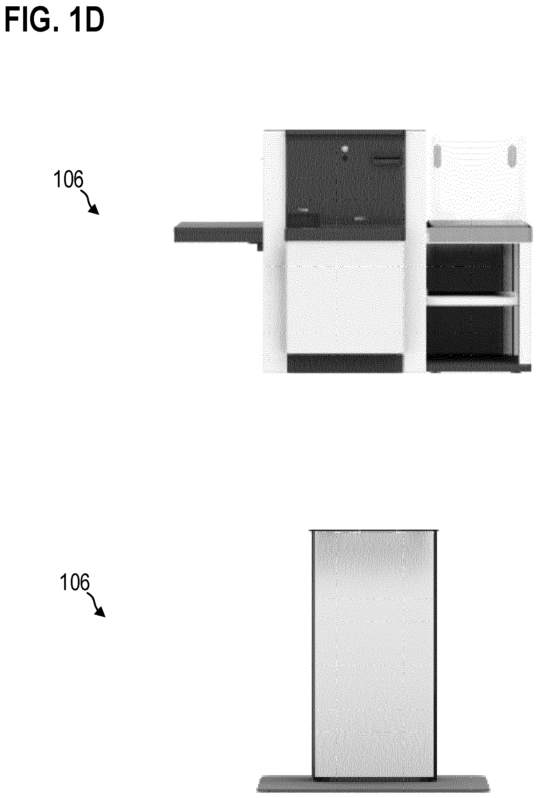

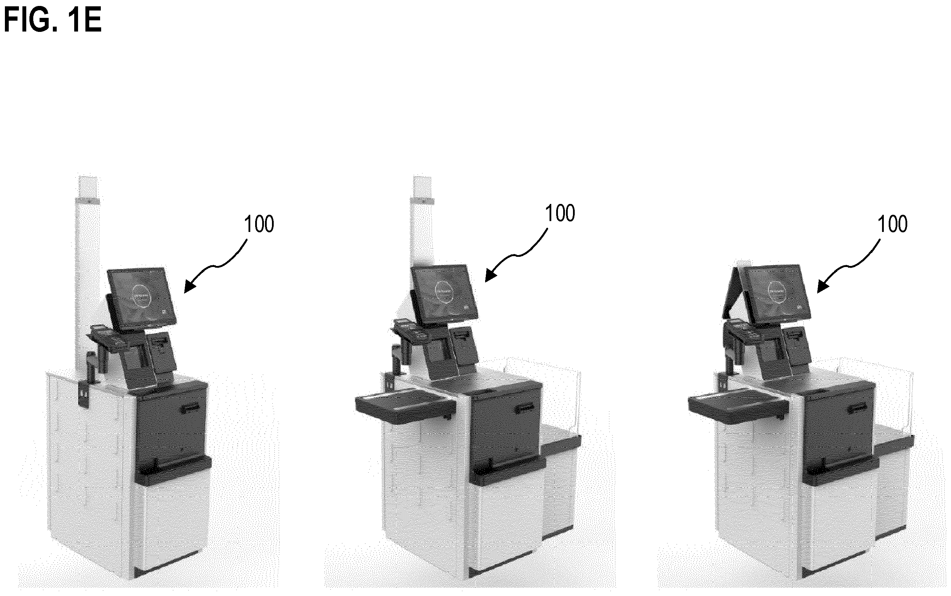

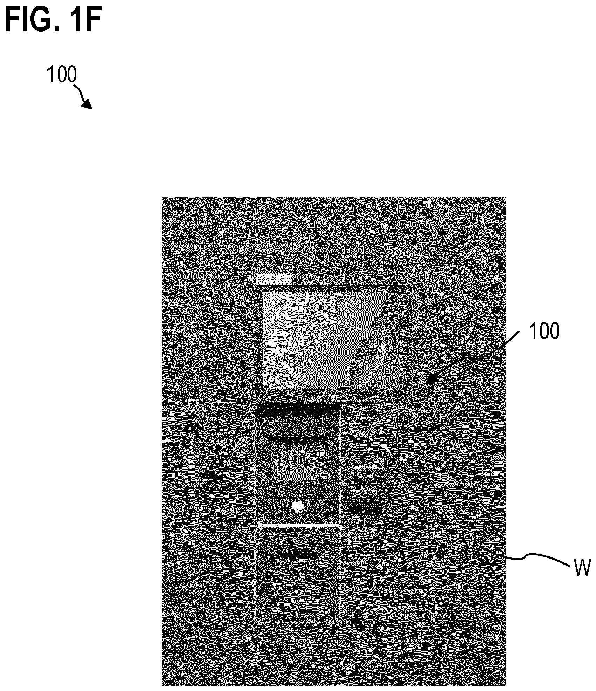

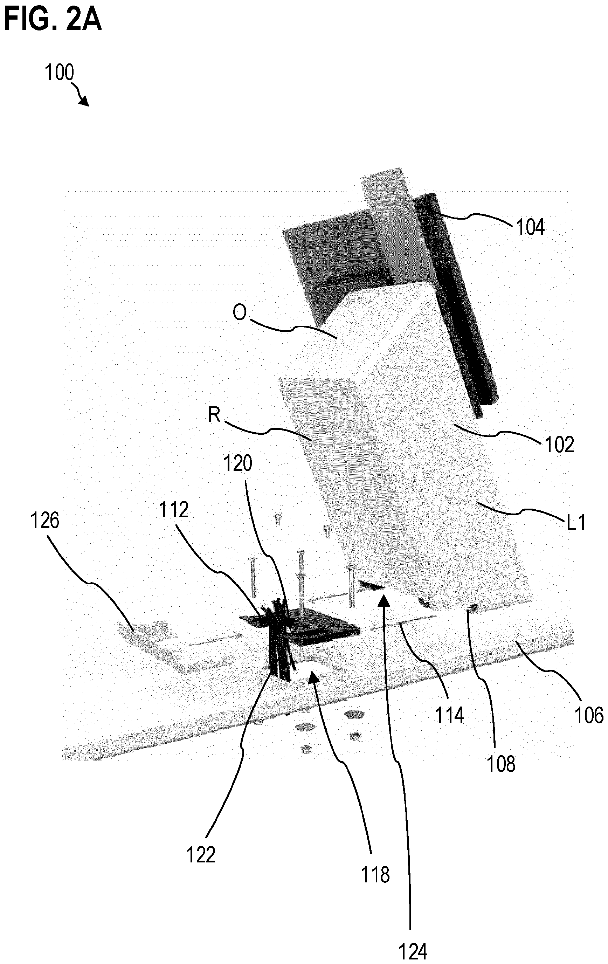

Das Selbstbedienungsterminal 100 kann eingerichtet sein, lösbar an einer Basis 106 befestigbar zu sein. Eine beispielhafte Ausgestaltung des Selbstbedienungsterminals 100 gemäß welcher das Selbstbedienungsterminal 100 lösbar an der Basis 106 befestigbar ist, wird beispielsweise mit Bezug auf FIG.2A bis FIG.2E beschrieben. Die Basis 106 kann, wie zum Beispiel in FIG.1A bis FIG.1C gezeigt, eine Basisplatte sein. Die Basis 106 kann, wie zum Beispiel oben in FIG.1D gezeigt, eine Basiseinheit mit einem Bargeldmodul aufweisen oder sein. Die Basis 106 kann, wie zum Beispiel unten in FIG.1D gezeigt, eine Standsäule als Basiseinheit aufweisen oder sein. Gemäß verschiedenen Ausführungsformen kann das Selbstbedienungsterminal 100 lösbar an einer Basisplatte als Basis 106 befestigbar sein und die Basisplatte kann lösbar an einer Basiseinheit (z.B. einer Standsäule oder einer Basiseinheit mit Bargeldmodul) befestigbar sein. FIG.1E zeigt das Selbstbedienungsterminal 100 (mit verschiedenen optionalen Peripheriegeräten) befestigt auf verschiedenen Basiseinheiten. Auch kann das an der Basis 106 befestigte Selbstbedienungsterminal 100 auf einem Gegenstand (z.B. einem Tisch, einer Ablage, etc.) verwendet werden, ohne daran befestigt zu werden. Alternativ zu den Basiseinheiten kann das Selbstbedienungsterminal 100, wie in FIG.1F gezeigt, eingerichtet sein, lösbar an einer Wand, W, befestigbar zu sein.

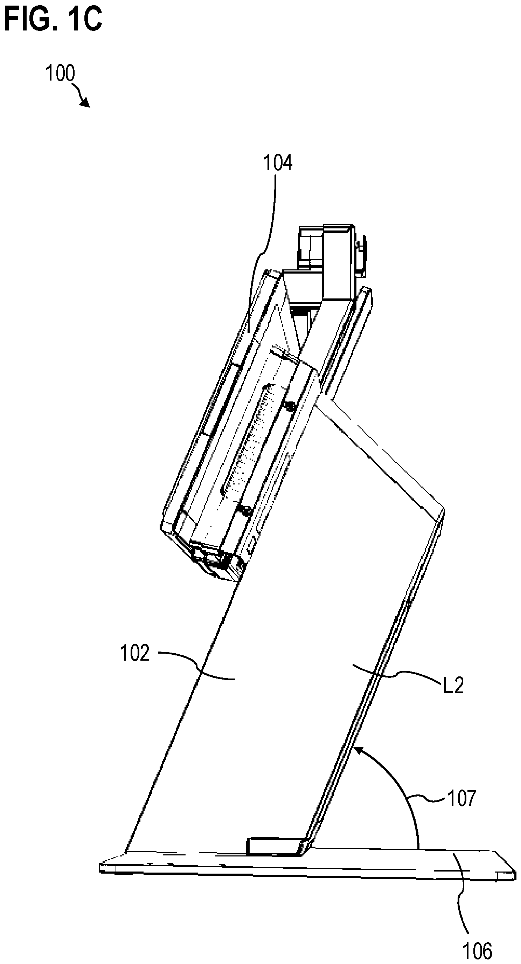

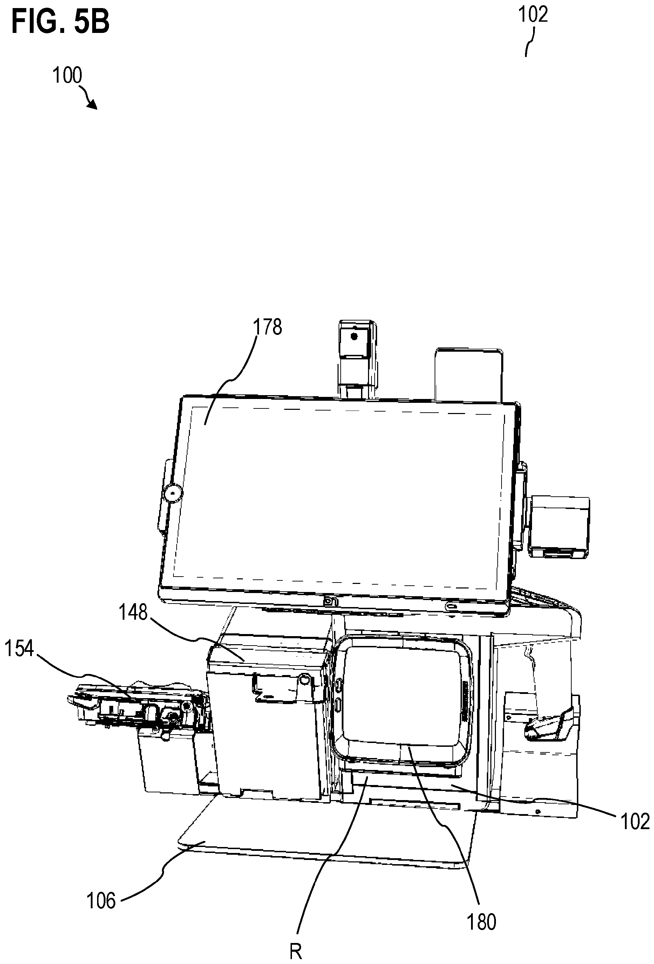

In manchen Ausführungsformen kann das Gehäuse 102 eingerichtet sein, im Wesentlichen senkrecht auf der Basis 106 zu stehen. In anderen Ausführungsformen kann das das Gehäuse 102 eingerichtet sein, wie beispielsweise in FIG.1C gezeigt, in einem Winkel 107 kleiner als oder gleich 80° (z.B. kleiner als oder gleich 75°, z.B. kleiner als oder gleich 70°, etc.) auf der Basis 106 zu stehen. Anschaulich kann in diesem Fall die Rückseite, R, des Gehäuses 102 eine Rückseitenebene definieren, die in dem Winkel 107 kleiner gleich 80° zu einer von der Unterseite definierten Unterseitenebene verläuft und die Vorderseite, V, des Gehäuses 102 kann eine Vorderseitenebene definieren, die sich von der Unterseite, U, in Richtung zu der Oberseite, O, nach hinten geneigt (also von dem Benutzer weg) erstrecken. Anschaulich kann das Gehäuse 102 schräg nach hinten geneigt sein. Dies kann beispielsweise ermöglichen, dass an der Rückseite, R, des Gehäuses 102 eine einem Bediensteten zugewandte Anzeige- und/oder Bedienvorrichtung bereitgestellt werden kann (siehe zum Beispiel FIG.5B bis FIG.5D). Ferner führt dies zu einer Verschiebung des Schwerpunktes des Selbstbedienungsterminals 100, was beispielsweise in dem Fall, dass ein Befestigungselement das Gehäuse 102 in einem zur Vorderseite, V, des Gehäuses 102 benachbarten Abschnitt der Unterseite, U, an der Basis 106 befestigt, eine Stabilität des Selbstbedienungsterminals 100 erhöht wird.

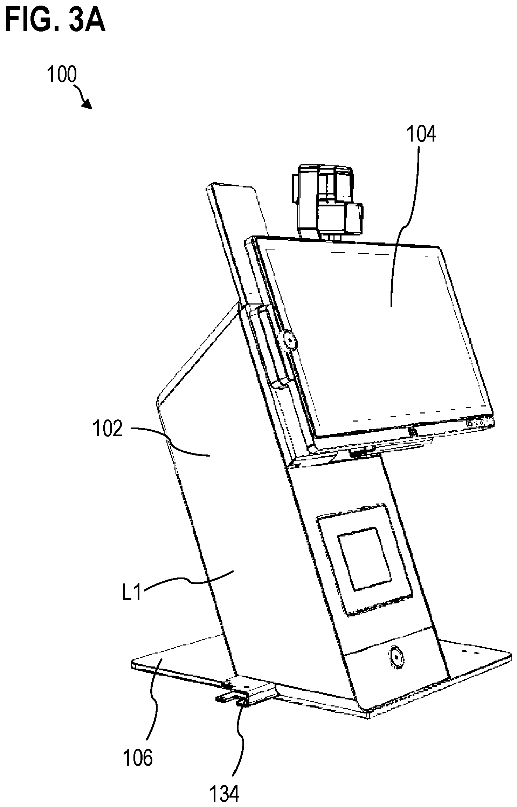

In den in FIG.1E und FIG.1F gezeigten Ausgestaltungen des Selbstbedienungsterminals 100 ist das Gehäuse 102 des Selbstbedienungsterminals 100 mit ein oder mehreren Peripheriegeräten verbunden. Gemäß verschiedenen Ausführungsformen kann das Gehäuse 102 derart eingerichtet sein, dass dieses mittels eines Verbindungselementes mit mindestens einem Peripheriegerät verbunden werden kann. Beispielhafte, diesbezügliche Ausgestaltungen des Selbstbedienungsterminals 100 werden beispielsweise mit Bezug auf FIG.3A bis FIG.3L beschrieben.

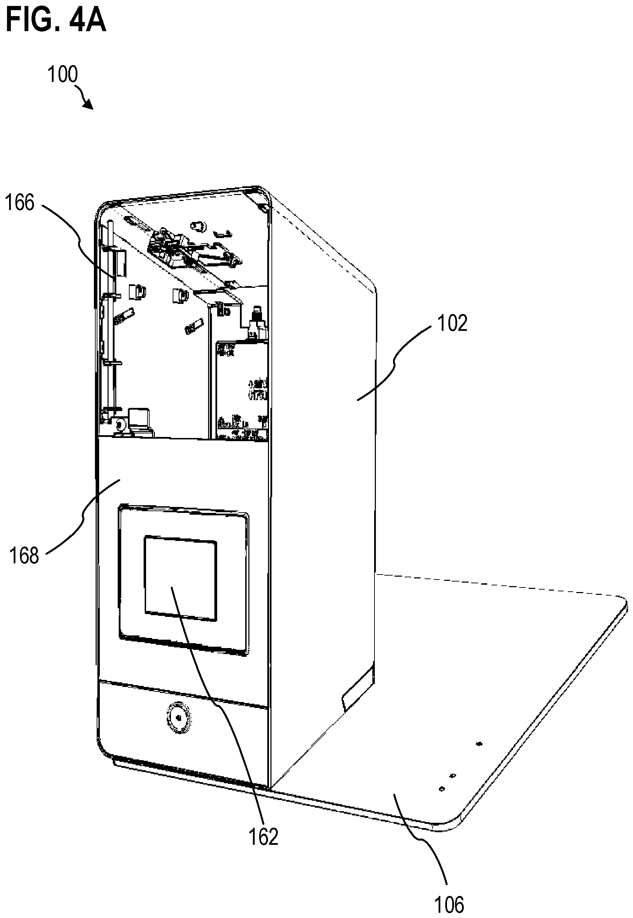

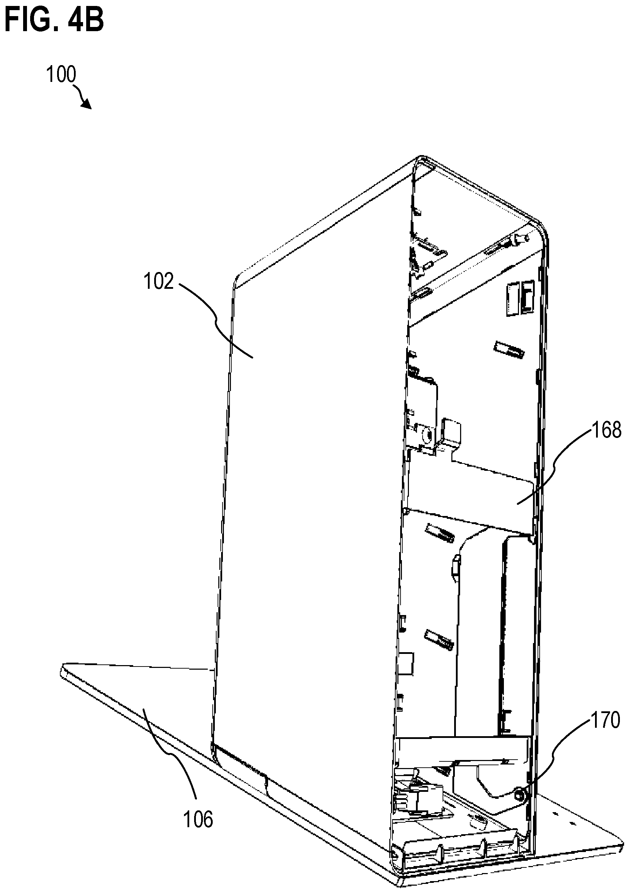

Auch kann es erforderlich und/oder erwünscht sein, eine einfache Wartung des Selbstbedienungsterminals 100 zu ermöglichen. Gemäß verschiedenen Ausführungsformen kann das Selbstbedienungsterminal 100 verschiedene Schwenkmechanismen aufweisen, welche ein (z.B. stufenweises) Öffnen des Gehäuses 102 auf einfache Weise ermöglichen. Diesbezügliche Ausgestaltungen des Selbstbedienungsterminals 100 werden beispielsweise mit Bezug auf FIG.4A bis FIG.4E beschrieben.

Gemäß verschiedenen Ausführungsformen kann das Gehäuse 102 an einer dem Benutzer des Selbstbedienungsterminals 100 nicht zugewandten Seite (z.B. der Unterseite, U, oder der Rückseite, R) mit einem ersten Lineareinschubführungsabschnitt und einem zweiten Lineareinschubführungsabschnitt ausgebildet sein, welche zum Zusammenbauen des Selbstbedienungsterminals 100 in einen ersten Korrespondenz-Lineareinschubführungsabschnitt und einen zweiten Korrespondenz-Lineareinschubführungsabschnitt eines Befestigungselementes lineareingeschoben werden können, um durch Befestigen des Befestigungselementes an der Basis 106 das Gehäuse 102 an der Basis 106 in lösbarer Weise festzulegen.

Um, wie beispielsweise in FIG.1F gezeigt, an der Wand, W, befestigbar zu sein, kann das Gehäuse 102 den ersten Lineareinschubführungsabschnitt und den zweiten Lineareinschubführungsabschnitt an dessen Rückseite, R, aufweisen. Um zum Beispiel an einer stehenden Basis 106 befestigbar zu sein, kann das Gehäuse 102 den ersten Lineareinschubführungsabschnitt und den zweiten Lineareinschubführungsabschnitt an dessen Unterseite, U, aufweisen. Im Folgenden wird mit Bezug auf **FIG.2A** bis **FIG.2E** das Gehäuse 102 beispielhaft für den Fall beschrieben, dass das Gehäuse 102 an dessen Unterseite, U, mit einem ersten Lineareinschubführungsabschnitt 108 und einem zweiten Lineareinschubführungsabschnitt 110 ausgebildet ist. Es wird verstanden, dass die beschriebenen Aspekte auch entsprechend auf den Fall, in dem der erste Lineareinschubführungsabschnitt und der zweite Lineareinschubführungsabschnitt an der Rückseite, R, des Gehäuses 102 ausgebildet sind, zutreffen können. In diesem Fall kann das Gehäuse 102 direkt an der Wand, W, befestigbar sein und/oder kann mit der Rückseite an der Basis 106 befestigbar sein und die Basis 106 kann dann an der Wand, W, befestigbar sein.

Mit Bezug auf FIG.2A kann das Selbstbedienungsterminal 100 ein Befestigungselement 112 aufweisen. Das Befestigungselement 112 kann eingerichtet sein, lösbar an der Basis 106 befestigt (z.B. mittels ein oder mehreren Schrauben an der Basis 106 verschraubt) zu werden.

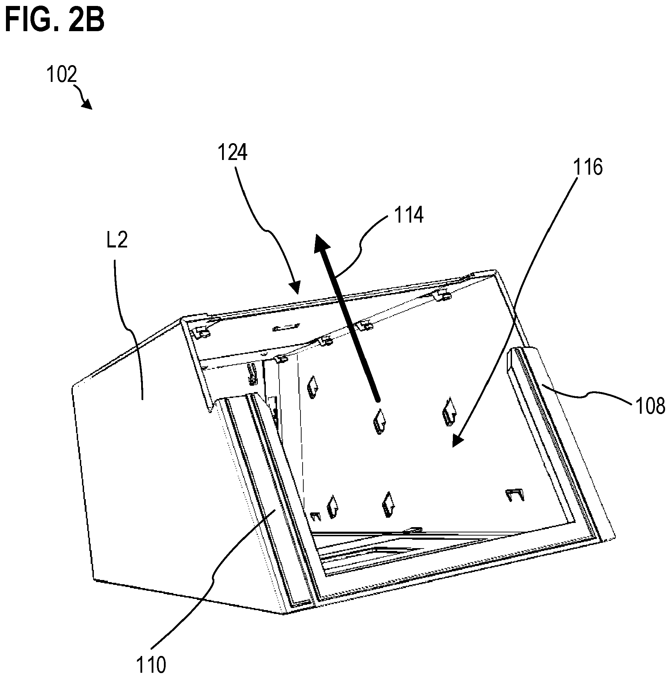

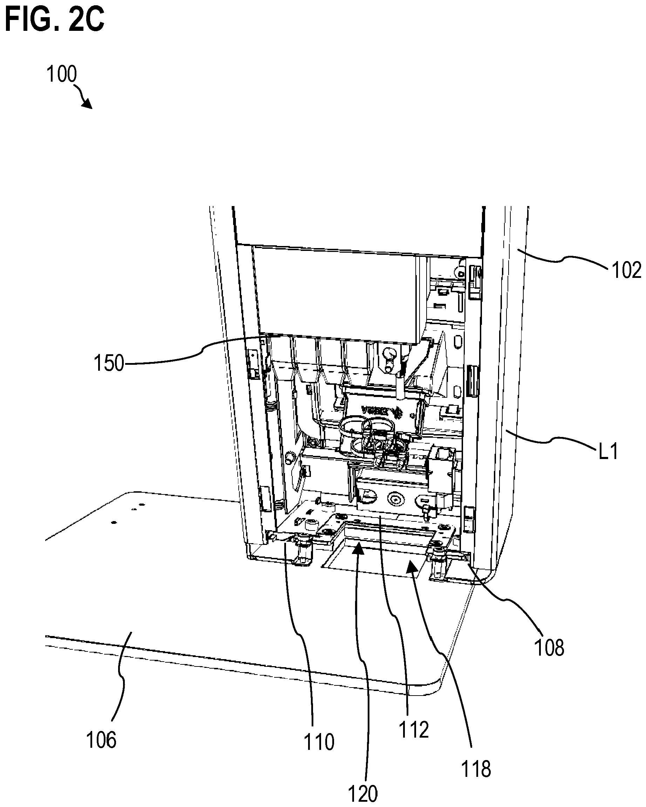

FIG.2B zeigt eine beispielhafte Ausgestaltung des Gehäuses 102. Der erste Lineareinschubführungsabschnitt 108 und der zweite Lineareinschubführungsabschnitt 110 können parallel zueinander verlaufen. Dies kann eine gemeinsame Lineareinschubrichtung 114 definieren. Der erste Lineareinschubführungsabschnitt 108 und der zweite Lineareinschubführungsabschnitt 110 können quer zur Lineareinschubrichtung 114 in einem Abstand voneinander bzw. zueinander angeordnet sein. Wie in FIG.2B gezeigt können der erste Lineareinschubführungsabschnitt 108 und der zweite Lineareinschubführungsabschnitt 110 beispielsweise in einem zu der Vorderseite, V, angrenzenden Abschnitt der Unterseite, U, ausgebildet sein. So kann, wie gezeigt, ein an die Rückseite, R, angrenzender Abschnitt der Unterseite, U, frei von dem ersten Lineareinschubführungsabschnitt 108 und dem zweiten Lineareinschubführungsabschnitt 110 sein. Wie hierin beschrieben, kann das Gehäuse 102 an der ersten Lateralseite, L1, und der zweiten Lateralseite, L2, jeweils eine Lateralseiten-Aussparung (z.B. eine erste Lateralseiten-Aussparung an der ersten Lateralseite und/oder eine zweite Lateralseiten-Aussparung an der zweiten Lateralseite) an einem an die Rückseite, R, angrenzenden Abschnitt aufweisen, wodurch zum Beispiel auch der an die Rückseite, R, angrenzende Abschnitt der Unterseite, U, frei von dem ersten Lineareinschubführungsabschnitt 108 und dem zweiten Lineareinschubführungsabschnitt 110 sein kann (siehe zum Beispiel FIG.2B). Das Gehäuse 102 kann zwischen dem ersten Lineareinschubführungsabschnitt 108 und dem zweiten Lineareinschubführungsabschnitt 110 mindestens eine Öffnung 116 aufweisen. Die mindestens eine Öffnung 116 kann zum Beispiel der Durchführung von Anschlusskabeln dienen (siehe zum Beispiel FIG.2A und FIG.2C).

Mit Bezug auf FIG.2A kann das Befestigungselement 112 einen ersten Korrespondenz-Lineareinschubführungsabschnitt und einen zweiten Korrespondenz-Lineareinschubführungsabschnitt aufweisen. Der erste Korrespondenz-Lineareinschubführungsabschnitt des Befestigungselements 112 kann zu dem ersten Lineareinschubführungsabschnitt 108 des Gehäuses 102 korrespondieren. Der zweite Korrespondenz-Lineareinschubführungsabschnitt des Befestigungselements 112 kann zu dem zweiten Lineareinschubführungsabschnitt 110 des Gehäuses 102 korrespondieren. Zum Zusammenbauen des Selbstbedienungsterminals 100 kann das Gehäuse 102 daher entlang der Lineareinschubrichtung 114 mit dem ersten Lineareinschubführungsabschnitt 108 und dem zweiten Lineareinschubführungsabschnitt 110 in den ersten Korrespondenz-Lineareinschubführungsabschnitt bzw. den zweiten Korrespondenz-Lineareinschubführungsabschnitt des Befestigungselements 112 lineareingeschoben werden. Dadurch kann das Gehäuse 102 über das Befestigungselement 112 in lösbarer Weise an der Basis 106 festgelegt werden bzw. sein. Gemäß verschiedenen Ausführungsformen kann das Befestigungselement 112 beim Zusammenbauen des Selbstbedienungsterminals 100 nach dem Lineareinschieben des Gehäuses 102 zusätzlich an der Basis 106 befestigt werden, um beispielsweise den ersten Lineareinschubführungsabschnitt 108 und den zweiten Lineareinschubführungsabschnitt 110 des Gehäuses 102 mittels des Befestigungselementes 112 an die Basis 106 durch Druckkraft anzudrücken (z.B. den ersten Lineareinschubführungsabschnitt 108 und den zweiten Lineareinschubführungsabschnitt 110 des Gehäuses 102 zwischen das Befestigungselement 112 und die Basis 106 einzuklemmen). Dies kann eine Stabilität des Selbstbedienungsterminals 100 im Betrieb (z.B. bei Bedienung der als Touchscreen eingerichteten Anzeige- und/oder Bedienvorrichtung 104) erhöhen. Zusätzlich oder alternativ kann das Befestigungselement 112 lösbar an dem Gehäuse 102 befestigt (z.B. mittels ein oder mehreren Schrauben verschraubt) werden.

Gemäß verschiedenen Ausführungsformen kann das Gehäuse 102 eine Gehäuse-Aussparung 124 an einem zu der Unterseite, U, angrenzenden Abschnitt der Rückseite, R, aufweisen (siehe zum Beispiel FIG.2A und FIG.2B). Optional kann sich die Gehäuse-Aussparung 124 in einen an die Unterseite, U, angrenzenden Abschnitt der ersten Lateralseite, L1, und/oder in einen an die Unterseite, U, angrenzenden Abschnitt der zweiten Lateralseite, L2, erstrecken (siehe zum Beispiel FIG.2A und FIG.2B). Anschaulich kann die Gehäuse-Aussparung die erste Lateralseiten-Aussparung und/oder die zweite Lateralseiten-Aussparung aufweisen. Die erste Lateralseiten-Aussparung an dem an die Unterseite, U, angrenzenden Abschnitt der ersten Lateralseite, L1, und/oder die zweite Lateralseiten-Aussparung an dem an die Unterseite, U, angrenzenden Abschnitt der zweiten Lateralseite, L2, kann dem Durchführen eines jeweiligen Verbindungselementes dienen mittels dessen mindestens ein Peripheriegerät mechanisch mit dem Gehäuse 102 verbunden werden kann (siehe hierzu beispielsweise FIG.3A bis FIG.3L und zugehörige Beschreibung).

**FIG.2C** zeigt eine Rückansicht eines mittels des Befestigungselements 112 an der Basis 106 befestigten Gehäuses 102 (wobei die Rückseite, R, des Gehäuses 102 sowie optionale Komponenten des Selbstbedienungsterminals 100 ausgeblendet sind).

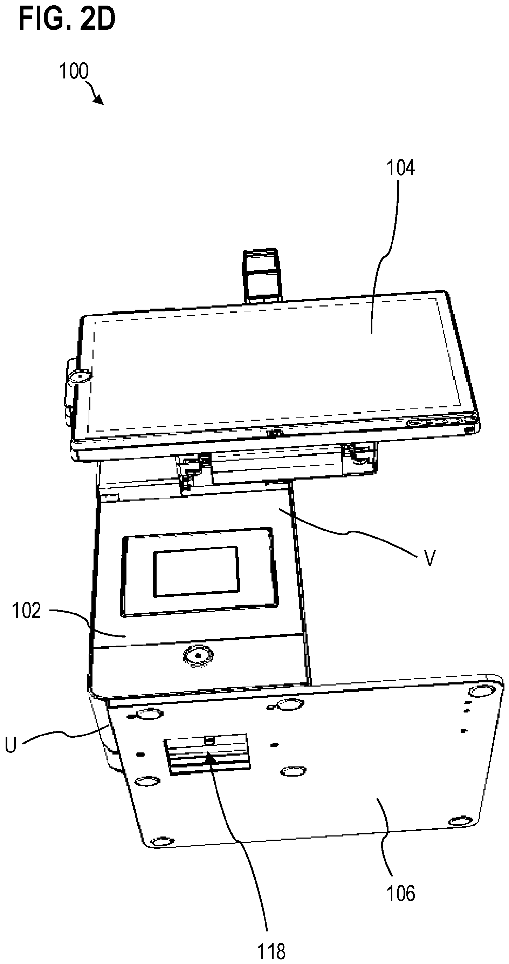

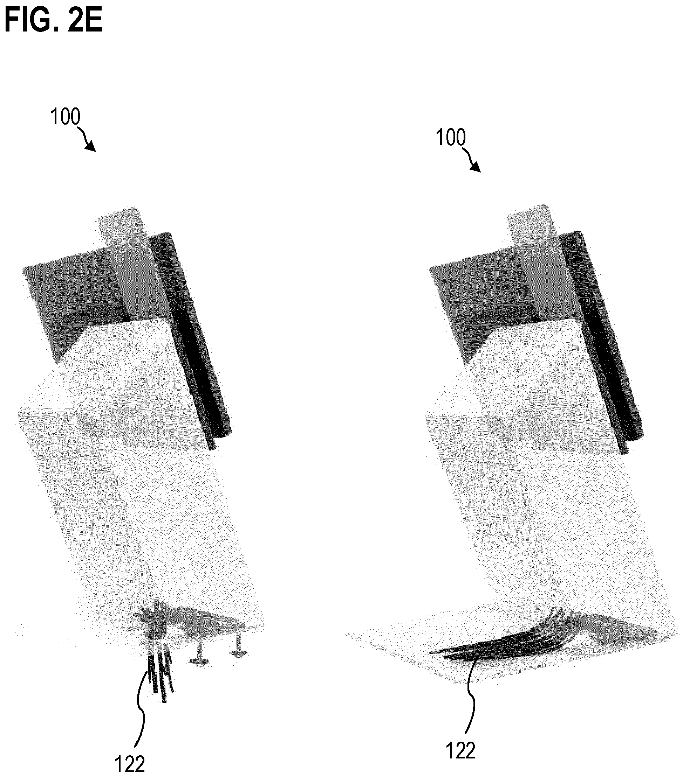

Wie beispielsweise in FIG.2A, FIG.2C und FIG.2D gezeigt, kann die Basis 106 eine Basis-Öffnung 118 aufweisen zur Durchführung von Anschlusskabeln. In manchen Ausführungsformen kann das Befestigungselement 112 eine oder mehrere Befestigungselement-Öffnungen aufweisen, welche bei an der Basis 106 befestigtem Befestigungselement 112 zumindest teilweise überlappend mit der Basis-Öffnung 118 der Basis 106 angeordnet sein können, so dass Anschlusskabel von dem Gehäuse 112 durch die ein oder mehreren Befestigungselement-Öffnungen des Befestigungselement 112 und durch die Basis-Öffnung 118 der Basis 106 hindurchführbar sind und/oder so dass Anschlusskabel von durch die Basis-Öffnung 118 und durch die ein oder mehreren Befestigungselement-Öffnungen hindurchführbar sind. Zusätzlich oder alternativ kann das Befestigungselement 112 eine Befestigungselement-Aussparung 120 aufweisen. Die Befestigungselement-Aussparung 120 kann, wenn das Gehäuse 102 über das Befestigungselement 112 an der Basis 106 in lösbarer Weise festgelegt ist, der Rückseite, R, des Gehäuses 102 zugewandt sein. Die Befestigungselement-Aussparung 120 kann zumindest teilweise überlappend mit der Basis-Öffnung 118 der Basis 106 angeordnet sein, so dass Anschlusskabel von dem Gehäuse 112 durch die Befestigungselement-Aussparung 120 und durch die Basis-Öffnung 118 hindurchführbar sind und/oder so dass Anschlusskabel von durch die Basis-Öffnung 118 und durch die Befestigungselement-Aussparung 120 hindurchführbar sind. FIG.2E zeigt auf der linken Seite ein mittels des Befestigungselements 112 an der Basis 106 befestigtes Gehäuses 102 bei dem Anschlusskabel 122 durch die Befestigungselement-Aussparung 120 und durch die Basis-Öffnung 118 hindurchgeführt sind.

Die Befestigungselement-Aussparung 120 des Befestigungselement 112 ermöglicht gemäß verschiedenen Ausführungsformen, dass die Anschlusskabel 122 zumindest teilweise durch die Befestigungselement-Aussparung 120 und durch den rückseitigen Abschnitt der Gehäuse-Aussparung 124 des Gehäuses 102 hindurch hindurchführbar sind. FIG.2E zeigt auf der rechten Seite ein mittels des Befestigungselements 112 an der Basis 106 befestigtes Gehäuses 102 bei dem die Anschlusskabel 122 durch die Befestigungselement-Aussparung 120 und durch den rückseitigen Abschnitt der Gehäuse-Aussparung 124 hindurchgeführt sind. Anschaulich zeigt sich, dass die Befestigungselement-Aussparung 120 ermöglichen kann, die Anschlusskabel 122 durch den rückseitigen Abschnitt der Gehäuse-Aussparung 124 aus dem Gehäuse 102 hinaus bzw. in dieses hinein zu führen und/oder durch die Basis-Öffnung 118 in der Basis 106 aus dem Gehäuse 102 hinaus bzw. in dieses hinein zu führen. Dies stellt beispielsweise Flexibilität der betreiberspezifischen Anwendung bereit: Wird beispielsweise die Standsäule (ohne Basis-Öffnung 118) als Basiseinheit verwendet, so können die Anschlusskabel 122 durch den rückseitigen Abschnitt der Gehäuse-Aussparung 124 geführt wird. Wird eine Basiseinheit mit Bargeldmodul verwendet, so können ein oder mehrere Anschlusskabel durch die Basis-Öffnung 118 hindurchgeführt werden (um zum Beispiel Komponenten des Bargeldmoduls mit einem in dem Gehäuse 102 bereitgestellten Controller zu verbinden und/oder um Anschlusskabel durch die Basiseinheit hindurch und aus dieser hinaus (bzw. mittels dieser in das Gehäuse 102 hinein) zu führen.

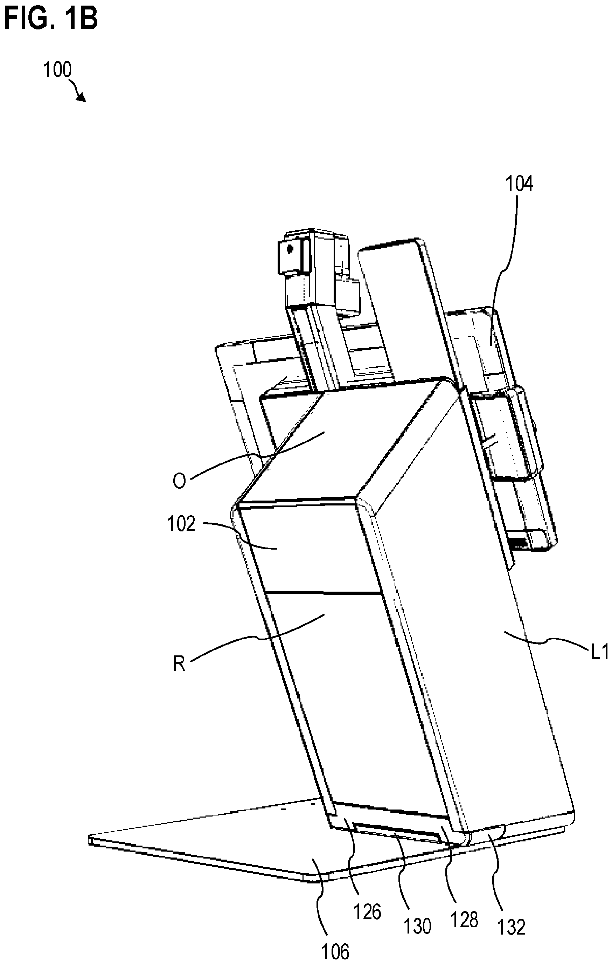

Optional kann das Selbstbedienungsterminal 100 ein (z.B. rückseitiges) Abdeckelement 126 (kurz Abdeckung, z.B. eine Abdeckklappe) aufweisen. Das Abdeckelement 126 kann eingerichtet sein, lösbar an dem Gehäuse 102 befestigt zu werden, um so zumindest ein Teil der Gehäuse-Aussparung 124 (z.B. im Wesentlichen die gesamte Aussparung 124) abzudecken. Zum Beispiel kann das Abdeckelement 126 gelöst (z.B. entfernt) werden, um, wie in FIG.2E gezeigt, die Anschlusskabel 122 durch die Gehäuse-Aussparung 124 hindurchzuführen. Wie in FIG.1B gezeigt, kann das Abdeckelement 126 einen ersten Abschnitt 128 und einen von dem ersten Abschnitt 128 verschiedenen und mit dem ersten Abschnitt 128 stofflich einstückig verbundenen, zweiten Abschnitt 130 aufweisen. Der zweite Abschnitt 130 kann, wenn das Abdeckelement 126 an dem Gehäuse 102 lösbar befestigt ist, angrenzend an die Unterseite, U, des Gehäuses 102 angeordnet sein. Der erste Abschnitt 128 und der zweite Abschnitt 130 des Abdeckelements 126 können mittels einer oder mehreren Sollbruchstellen miteinander verbunden sein. Dies erhöht die Flexibilität der Verwendung des Selbstbedienungsterminals 100: Werden die Anschlusskabel 122 beispielsweise durch die Öffnung 118 hindurchgeführt, kann das Abdeckelement 126 dazu dienen, die Aussparung 124 abzudecken. Soll mindestens eines der Anschlusskabel 122 durch den rückseitigen Abschnitt der Gehäuse-Aussparung 124 hindurchgeführt werden, so kann der zweite Abschnitt 130 des Abdeckelements 126 mittels der ein oder mehreren Sollbruchstellen von dem ersten Abschnitt 128 abgetrennt werden. In diesem Fall kann der erste Abschnitt 128 kann lösbar an dem Gehäuse 102 befestigt werden und das mindestens eine der Anschlusskabel 122 kann durch die durch Abtrennen des zweiten Abschnitts des Abdeckelements 126 erzeugte Abdeckelement-Aussparung des Abdeckelements 126 hindurchgeführt werden.

Neben der hierin beschriebenen Flexibilität ermöglicht das Befestigungselement 112 ferner ein Selbstbedienungsterminal 100 mit reduziertem Querschnitt (und folglich einem verringerten Platzbedarf). Die beschriebene (flexible) Anordnung der Anschlusskabel und die Verringerung des Querschnitts wird durch das hierin beschriebene Befestigungselement 112 ermöglicht; eine von Füllmaterial zur Stabilisierung des Gehäuses 102 würde dies nicht ermöglichen.

Wie voranstehend beschrieben, kann das Gehäuse 102 modular erweiterbar sein. **FIG.3A** bis **FIG.3L** zeigen jeweils Aspekte dieser modularen Erweiterbarkeit des Selbstbedienungsterminals 100. Auf diese Weise können flexibel Peripheriegeräte mechanisch mit dem Gehäuse 102 verbunden (und optional ferner an dieses mittels Anschlusskabeln angeschlossen) werden, um beispielsweise ein Peripheriegerät hinzuzufügen und/oder ein Peripheriegerät zu entfernen und/oder ein Peripheriegerät mit einem anderen Peripheriegerät auszutauschen und/oder eine jeweilige Position von bereits mechanisch verbundenen Peripheriegeräten zu verändern. In einem Beispiel kann während der Anwendung des Selbstbedienungsterminals 100 festgestellt werden, dass ein Verifizierungsgerät (als Peripheriegerät) gewünscht und/oder erforderlich ist und das hierin beschriebene Selbstbedienungsterminal 100 ermöglicht eine (nachträgliche) modulare Erweiterung durch Hinzufügen des Verifizierungsgeräts. In einem anderen Beispiel kann während der Anwendung des Selbstbedienungsterminals 100 festgestellt werden, dass die Position eine Kartenlesegerätes (als ein Peripheriegerät) bei den Benutzern (z.B. Kunden) für Verwirrung sorgt und das hierin beschriebene Selbstbedienungsterminal 100 ermöglicht eine (nachträgliche) Änderung der Position des Kartenlesegerätes.

Ein Peripheriegerät, wie hierin beschrieben, kann jede Art von Gerät sein, welches ein Selbstbedienungsterminal 100 verwenden kann, beispielsweise einen Selbstbedienungsprozess eines Benutzers unterstützten kann und/oder eine Sicherheit des Selbstbedienungsterminals 100 bereitstellen kann. Zum Beispiel kann ein Peripheriegerät eines der folgenden Geräte sein: einen (z.B. Kassenbon-) Drucker, ein mobiler, handgehaltener und/oder ein stationärer (z.B. Barcode-) Scanner, eine Kamera, ein Kartenlesegerät, ein Bediengerät, ein Verifizierungsgerät (z.B. mittels Gesichtserkennung, Fingerabdruckerkennung, etc.), eine Waage, etc.

Wie hierin beschrieben, kann das Gehäuse 102 eine erste Lateralseiten-Aussparung an einem zu der Unterseite, U, angrenzenden Abschnitt der ersten Lateralseite, L1, und/oder eine zweite Lateralseiten-Aussparung an einem zu der Unterseite, U, angrenzenden Abschnitt der zweite Lateralseite, L2, aufweisen; und optional können diese Teil der Gehäuse-Aussparung 124 sein. Im Folgenden wird das Selbstbedienungsterminal 100 zur Veranschaulichung dahingehend beschrieben, dass dieses die erste Lateralseiten-Aussparung und die zweite Lateralseiten-Aussparung als Teil der Gehäuse-Aussparung 124 aufweist. Es wird verstanden, dass die Beschreibung auch entsprechend dafür gilt, dass das Gehäuse 102 entweder die erste oder die zweite Lateralseiten-Aussparung aufweist, und auch dafür, dass die erste Lateralseiten-Aussparung und/oder die zweite Lateralseiten-Aussparung an einer anderen Position in dem Gehäuse 102 ausgebildet sind/ist bzw. nicht Teil der Gehäuse- 124 sind.

Die erste Lateralseiten-Aussparung und/oder die zweite Lateralseiten-Aussparung können/kann derart eingerichtet sein, dass durch diese hindurch ein Verbindungselement 134 zum mechanischen Verbinden eines Peripheriegerätes mit dem Gehäuse 102 in das Gehäuse 102 hinein hindurchführbar ist. Das Gehäuse 102 kann benachbart zu der ersten Lateralseiten-Aussparung mit einer zu dem Verbindungselement 134 korrespondierenden ersten Aufnahme ausgebildet sein, an welcher das Verbindungselement 134 befestigbar ist, um damit an dem Gehäuse 102 befestigbar zu sein. Das Gehäuse 102 kann benachbart zu der zweiten Lateralseiten-Aussparung mit einer zu dem Verbindungselement 134 korrespondierenden zweiten Aufnahme ausgebildet sein, an welcher das Verbindungselement 134 (oder ein anderes entsprechend dem Verbindungselement 134 eingerichtetes Verbindungselement) befestigbar ist, um damit an dem Gehäuse 102 befestigbar zu sein.

Das Gehäuse 102 kann an der ersten Lateralseite, L1, eine erste Blende aufweisen, die stofflich einstückig mit dem Gehäuse 102 verbunden ist. Das Gehäuse 102 kann an der zweiten Lateralseite, L2, eine zweite Blende aufweisen, die stofflich einstückig mit dem Gehäuse 102 verbunden ist. Die erste Blende und/oder die zweite Blende kann/können mittels ein oder mehrerer Sollbruchstellen mit dem Gehäuse verbunden sein. Dies erhöht die Flexibilität der Verwendung des Selbstbedienungsterminals 100: Ist kein Verbindungselement 134 verbunden, kann die erste Blende dazu dienen, die erste Lateralseiten-Aussparung abzudecken, und die zweite Blende kann dazu dienen, die zweite Lateralseiten-Aussparung abzudecken. Soll ein Verbindungselement 134 zum mechanischen Verbinden des Gehäuses 102 mit einem Peripheriegerät durch die erste Lateralseiten-Aussparung (oder die zweite Aussparung) hindurchgeführt werden, so kann die erste Blende (bzw. die zweite Blende) mittels den ein oder mehreren Sollbruchstellen von dem ersten Abschnitt 128 abgetrennt werden, um so das Verbindungselement 134 durch die erste (bzw. zweite) Lateralseiten-Aussparung hindurchführen zu können.

Alternativ kann das Abdeckelement 126 einen dritten Abschnitt 132 aufweisen, der stofflich einstückig mit dem ersten Abschnitt 128 verbunden ist (siehe zum Beispiel FIG.1B). Der dritte Abschnitt 132 kann, wenn das Abdeckelement 126 an dem Gehäuse 102 lösbar befestigt ist, die erste Lateralseiten-Aussparung und/oder die zweite Lateralseiten-Aussparung zumindest teilweise abdecken. Zum Beispiel kann der dritte Abschnitt 132 mittels einer oder mehreren Sollbruchstellen mit dem ersten Abschnitt 128 verbunden sein. Dies erhöht die Flexibilität der Verwendung des Selbstbedienungsterminals 100: Ist kein Verbindungselement 134 verbunden, kann das Abdeckelement 126 dazu dienen, die Gehäuse-Aussparung 124 abzudecken. Soll ein Verbindungselement 134 zum mechanischen Verbinden des Gehäuses 102 mit einem Peripheriegerät durch die erste Lateralseiten-Aussparung (oder die zweite Lateralseiten-Aussparung) hindurchgeführt werden, so kann der die erste Lateralseiten-Aussparung (oder die zweite Lateralseiten-Aussparung) zumindest teilweise abdeckende dritte Abschnitt 132 des Abdeckelements 126 mittels der ein oder mehreren Sollbruchstellen von dem ersten Abschnitt 128 abgetrennt werden. In diesem Fall kann der erste Abschnitt 128 kann lösbar an dem Gehäuse 102 befestigt werden und das Verbindungselement 134 kann durch die erste Lateralseiten-Aussparung (oder die zweite Lateralseiten-Aussparung) hindurchgeführt werden.

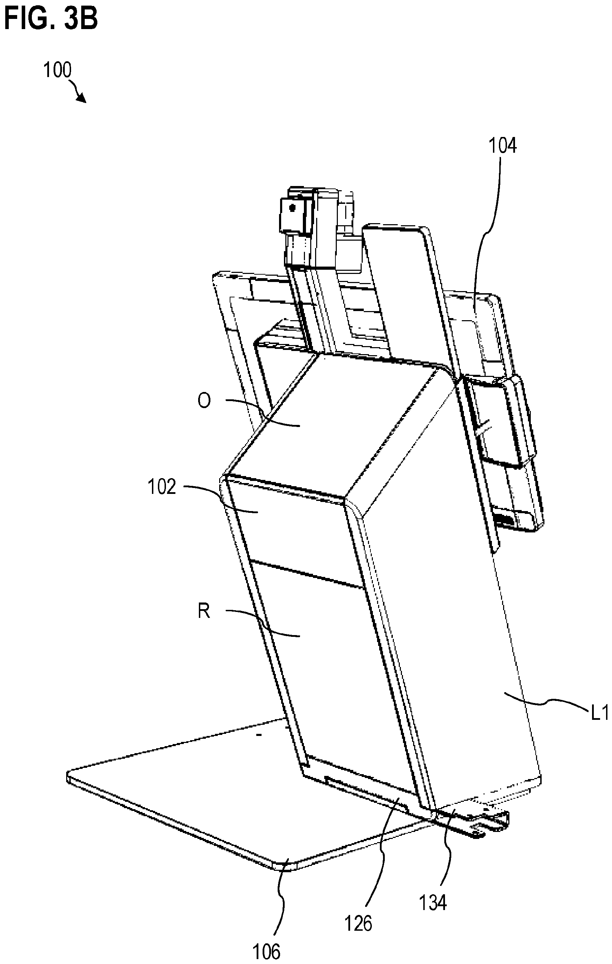

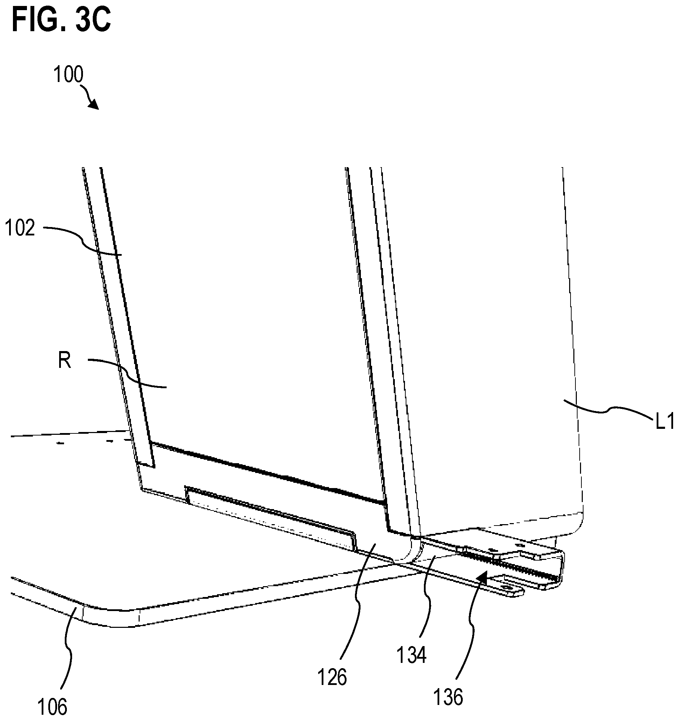

FIG.3A und FIG.3B zeigen verschiedene Perspektivansichten des Selbstbedienungsterminals 100, an dem das Verbindungselement 134 befestigt ist. FIG.3C bis FIG.3F zeigen jeweils einen Ausschnitt des Selbstbedienungsterminals 100, der Aspekte des Verbindungselementes 134 und/oder des Gehäuses 102 zeigt. In FIG.3B deckt das Abdeckelement 126 die Gehäuse-Aussparung 124 ab. In FIG.3C ist das Abdeckelement 126 entfernt.

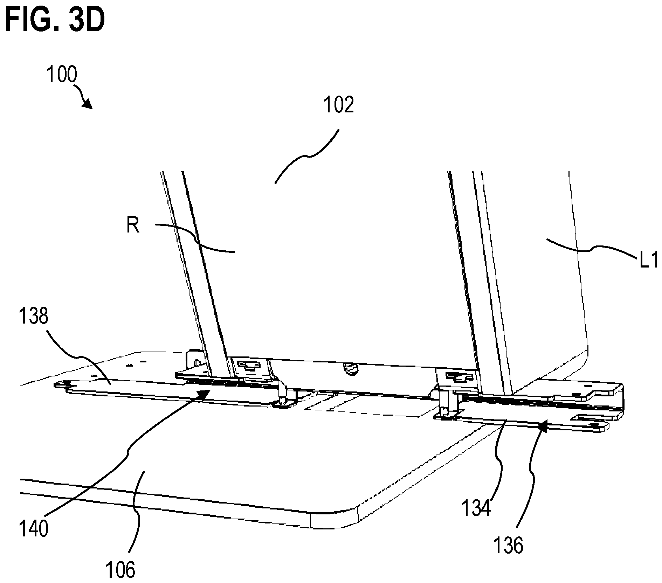

Wie in den in FIG.3C und FIG.3D dargestellten Ausschnitten gezeigt, kann das Verbindungselement 134 einen Durchlassraum 136 aufweisen. Der Durchlassraum 136 kann sich bei an der (ersten oder zweiten) Aufnahme befestigtem Verbindungselement 134 von außerhalb des Gehäuses 102 durch die (erste oder zweite) Lateralseiten-Aussparung hindurch in das Gehäuse 102 hinein erstrecken. Dies kann ermöglichen, eines oder mehrere Anschlusskabel des Peripheriegerätes von außerhalb des Gehäuses 102 über den Durchlassraum 136 durch die Lateralseiten-Aussparung hindurch in das Gehäuse hineinzuführen.

Bei der in FIG.3C gezeigten Ausgestaltung des Selbstbedienungsterminals 100 ist das Verbindungselement 134 durch die erste Lateralseiten-Aussparung hindurchgeführt und mit dem Gehäuse 102 mechanisch verbunden. Bei der in FIG.3D gezeigten Ausgestaltung des Selbstbedienungsterminals 100 ist das Verbindungselement 134 ein erstes Verbindungselement 134, welches durch die erste Lateralseiten-Aussparung hindurchgeführt und mit dem Gehäuse 102 mechanisch verbunden ist. In diesem Fall kann der Durchlassraum 136 des Verbindungselementes 134 ein erster Durchlassraum 136 sein zum Durchführen eines oder mehrerer Anschlusskabel eines ersten Peripheriegerätes von außerhalb des Gehäuses 102 über den ersten Durchlassraum 136 durch die erste Lateralseiten-Aussparung hindurch in das Gehäuse 102 hinein. Ferner zeigt die Ausgestaltung nach FIG.3D ein zweites Verbindungselement 138, welches durch die zweite Lateralseiten-Aussparung (in der zweiten Lateralseite, L2) hindurchgeführt und mittels der zweiten Aufnahme mechanisch mit dem Gehäuse 102 verbunden ist. Das zweite Verbindungselement 138 kann einen zweiten Durchlassraum 140 aufweisen zum Durchführen eines oder mehrerer Anschlusskabel eines zweiten Peripheriegerätes von außerhalb des Gehäuses 102 über den zweiten Durchlassraum 140 durch die zweite Lateralseiten-Aussparung hindurch in das Gehäuse 102 hinein.

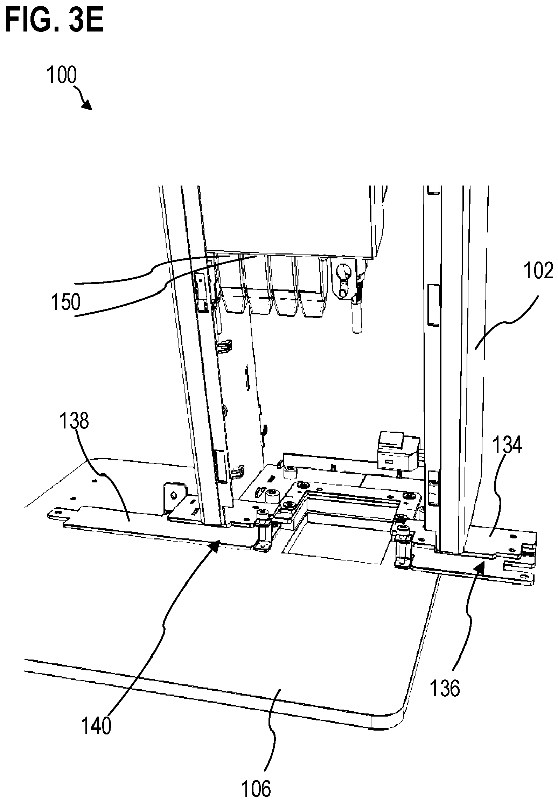

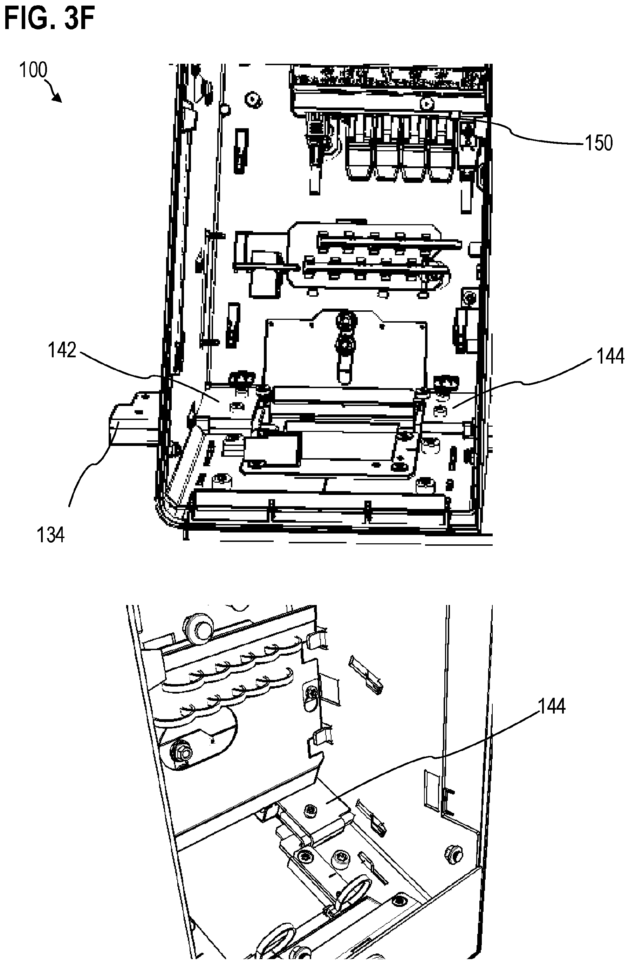

FIG.3E zeigt einen Ausschnitt einer Rückansicht des Selbstbedienungsterminals 100 mit ausgeblendeter Rückseite des Gehäuses 102 und mit ausgeblendeter erster Aufnahme und zweiter Aufnahme. FIG.3F zeigt zwei Ausschnitte einer Vorderansicht des Selbstbedienungsterminals 100 mit ausgeblendeter Vorderseite des Gehäuses 102, um beispielsweise die erste Aufnahme 142 und/oder die zweite Aufnahme 144 darzustellen. Die erste Aufnahme 142 und/oder die zweite Aufnahme 144 können Teil des Gehäuses 102 sein. Es wird verstanden, dass ein Verbindungselement auch zusätzlich oder alternativ mit dem Befestigungselement 112 mechanisch verbunden (z.B. verschraubt) werden kann.

Gemäß verschiedenen Ausführungsformen kann das Selbstbedienungsterminal 100 in dem Gehäuse 102 mehrere Anschlussplätze 150 aufweisen zum Anschließen elektrischer Geräte. Zum Beispiel können mit dem Gehäuse 102 verbundene und/oder in dieses integrierte elektrische Geräte an einen oder mehrere der Anschlussplätze 150 angeschlossen werden oder sein. Gemäß verschiedenen Aspekten kann mindestens ein Anschlusskabel eines mittels des Verbindungselementes 134, 138 mechanisch mit dem Gehäuse 102 verbundenen Peripheriegerätes durch den Durchlassraum 136, 140 des Verbindungselementes 134, 138 in das Gehäuse 102 hineingeführt und mit einem Anschlussplatz der mehreren Anschlussplätze 150 verbunden sein bzw. werden. Hierfür kann das Selbstbedienungsterminal 100 beispielsweise mindestens eine Kabelführung 152 zum Führen des mindestens einen Anschlusskabels aufweisen. Die mindestens eine Kabelführung 152 kann in dem Gehäuse 102 zwischen den mehreren Anschlussplätzen 150 und der Unterseite des Gehäuses (also unterhalb der mehreren Anschlussplätze 150) angeordnet sein. Optional kann die mindestens eine Kabelführung 152 mechanisch mit der Rückseite des Gehäuses 102 verbunden sein. Anschaulich können die mehreren Anschlussplätze 150 zu der Oberseite näher gelegen sein als zu der Unterseite des Gehäuses 102.

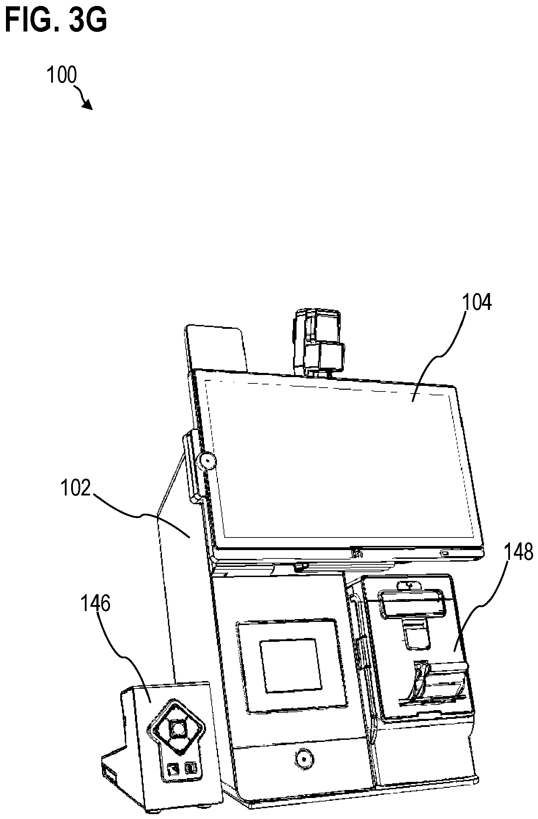

FIG.3G zeigt eine Ausgestaltung des Selbstbedienungsterminals 100 bei der ein erstes Peripheriegerät 146 (z.B. ein Verifizierungsgerät) mittels des ersten Verbindungselementes 134 mechanisch mit dem Gehäuse 102 verbunden ist und ein zweites Peripheriegerät 148 (z.B. ein Kassenbon-Drucker) mittels des zweiten Verbindungselementes 138 mechanisch mit dem Gehäuse 102 verbunden ist.

Gemäß verschiedenen Ausführungsformen können mehrere Peripheriegeräte mittels ein und derselben Aufnahme mit dem Gehäuse 102 mechanisch verbunden werden bzw. sein.

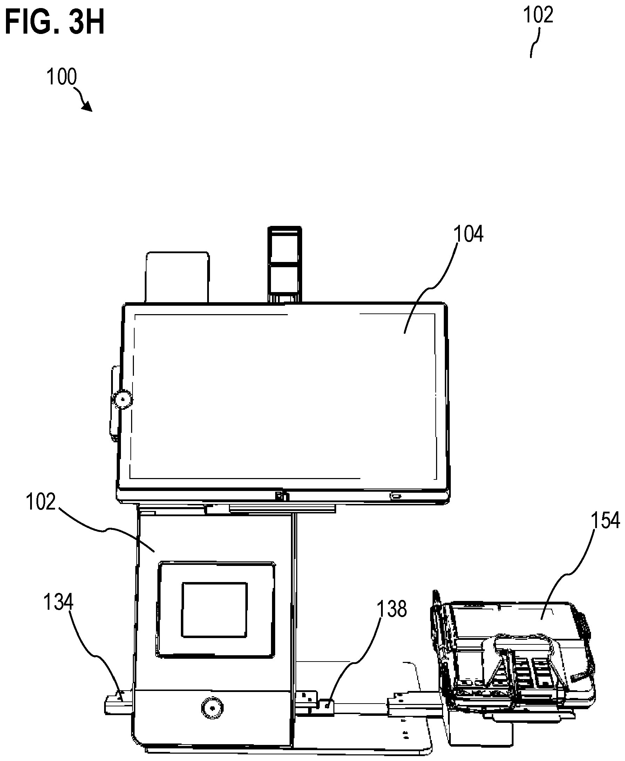

In manchen Aspekten kann das Verbindungselement eingerichtet sein, mit mehreren Peripheriegeräten verbunden zu werden. Wie in FIG.3H beispielhaft für das zweite Verbindungselement 138 dargestellt, kann das Verbindungselement derart eingerichtet sein, dass, wenn dieses mit einem Peripheriegerät (z.B. dem zweiten Peripheriegerät 146) mechanisch verbunden ist, ein Abschnitt des Verbindungselements freiliegt (also nicht von dem Peripheriegerät bedeckt ist, sodass dieser Abschnitt mit einem anderen Peripheriegerät (z.B. einem dritten Peripheriegerät 154) mechanisch verbunden werden kann, sodass beide Peripheriegeräte mittels des Verbindungselements an dem Gehäuse 102 befestigbar sind. Zum Beispiel kann das Peripheriegerät eine von einer ersten Seite des Peripheriegeräts zu einer der ersten Seite gegenüberliegenden zweiten Seite des Peripheriegeräts durchgängige Aussparung aufweisen durch welche sich das Verbindungselement hindurch erstrecken kann. Das Peripheriegerät kann eine zu dem Verbindungselement korrespondierende Aufnahme aufweisen, an welcher das Verbindungselement befestigbar ist.

In anderen Aspekten kann ein Peripheriegerät (z.B. das zweite Peripheriegerät 146) eine erste Gerät-Aussparung, durch welche das Verbindungselement hindurchführbar ist, an einer ersten Seite des Peripheriegeräts und eine zweite Gerät-Aussparung, durch welche hindurch ein anderes Verbindungselement zum mechanischen Verbinden des Peripheriegerätes mit einem anderen Peripheriegerät (z.B. das dritte Peripheriegerät 154) hindurchführbar ist, an einer der ersten Seite gegenüberliegenden zweiten Seite des Peripheriegeräts aufweisen. Anschaulich kann zum Beispiel das zweite Peripheriegerät 146 mittels des zweiten Verbindungselementes 138 mechanisch an dem Gehäuse 102 befestigbar sein und das dritte Peripheriegerät 154 kann mittels eines dritten Verbindungselementes mechanisch an dem zweiten Peripheriegerät 146 befestigbar zu sein, um so mittels des zweiten Peripheriegeräts 146 an dem Gehäuse 102 befestigbar sein. So kann zum Beispiel das zweite Peripheriegerät 146 eine erste Gerät-Aussparung und eine zu der ersten Gerät-Aussparung korrespondierende erste Gerät-Aufnahme, an welcher das Verbindungselement befestigt ist, und eine zweite Gerät-Aussparung und eine zu der zweiten Gerät-Aussparung korrespondierende zweite Gerät-Aufnahme, an welcher das andere Verbindungselement befestigbar ist, aufweisen. Auch das dritte Verbindungselement kann einen zugehörigen Durchlassraum zum Durchführen von Anschlusskabeln des dritten Peripheriegeräts 154 aufweisen.

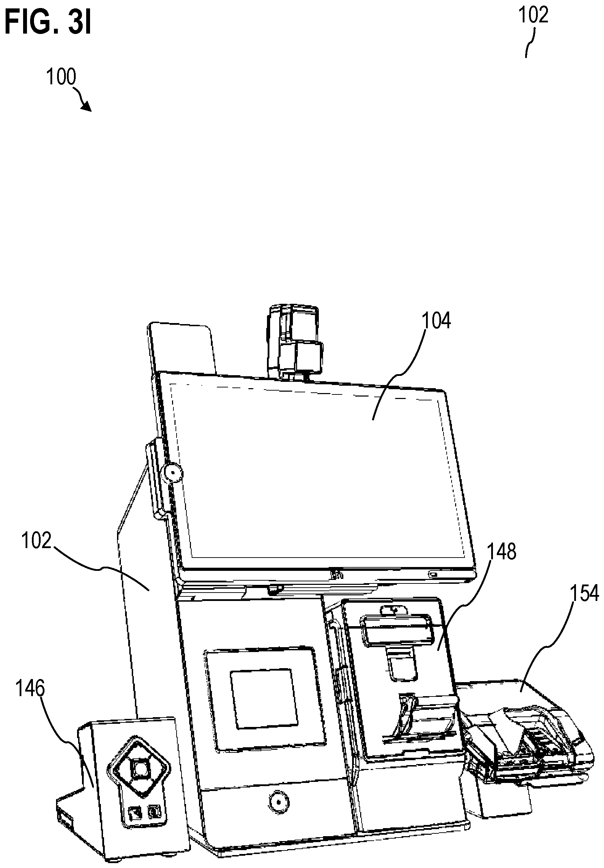

FIG.3I zeigt eine beispielhafte Ausgestaltung des Selbstbedienungsterminals 100 bei der das Gehäuse 102 mit dem ersten Peripheriegerät 144, dem zweiten Peripheriegerät 146 und dem dritten Peripheriegerät 154 mechanisch verbunden ist. Anschaulich zeigt dies ein modular erweitertes Selbstbedienungsterminal 100.

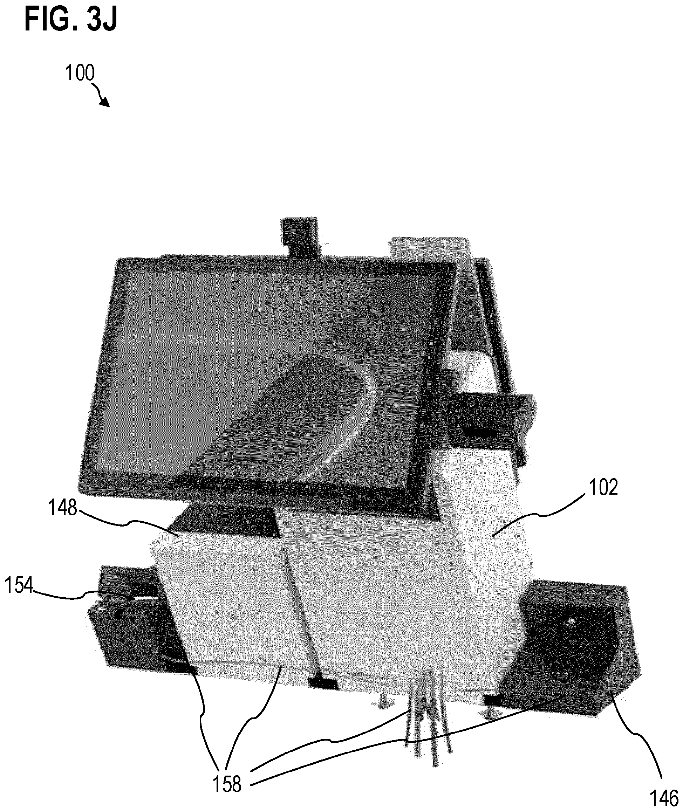

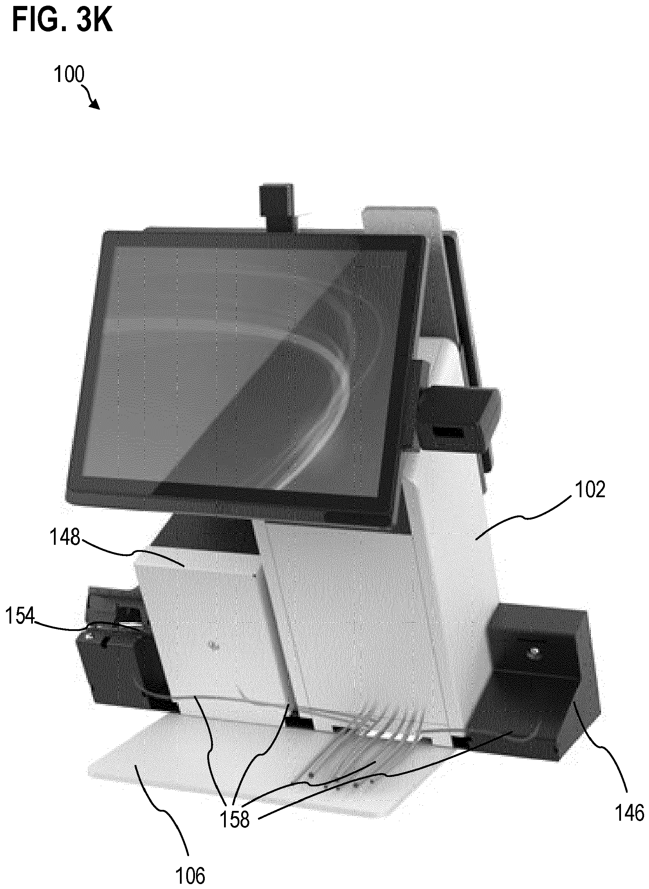

Wie hierin beschrieben, können die Verbindungselemente jeweils einen Durchlassraum zum Durchführen von Anschlusskabeln aufweisen. So kann zum Beispiel mindestens ein Anschlusskabel des dritten Peripheriegeräts 154 mittels durch die Durchlassräume hindurch in das Gehäuse 102 führbar sein, sodass mindestens ein Anschlusskabel an einen jeweiligen Anschlussplatz der mehreren Anschlussplätze 150 anschließbar ist. Gemäß verschiedenen Ausführungsformen kann mindestens ein Anschlusskabel eines Peripheriegeräts durch einen Durchlassraum eines Verbindungselementes in das Gehäuse 102 und durch die Gehäuse-Aussparung 124 hindurch aus dem Gehäuse 102 hinaus führbar sein. FIG.3J zeigt eine beispielhafte Kabelführung von Anschlusskabeln 158 zur Durchführung durch die Öffnung 118 der Basis 106. FIG.3K zeigt eine beispielhafte Kabelführung von Anschlusskabeln 158 durch den rückseitigen Abschnitt der Gehäuse-Aussparung 124.

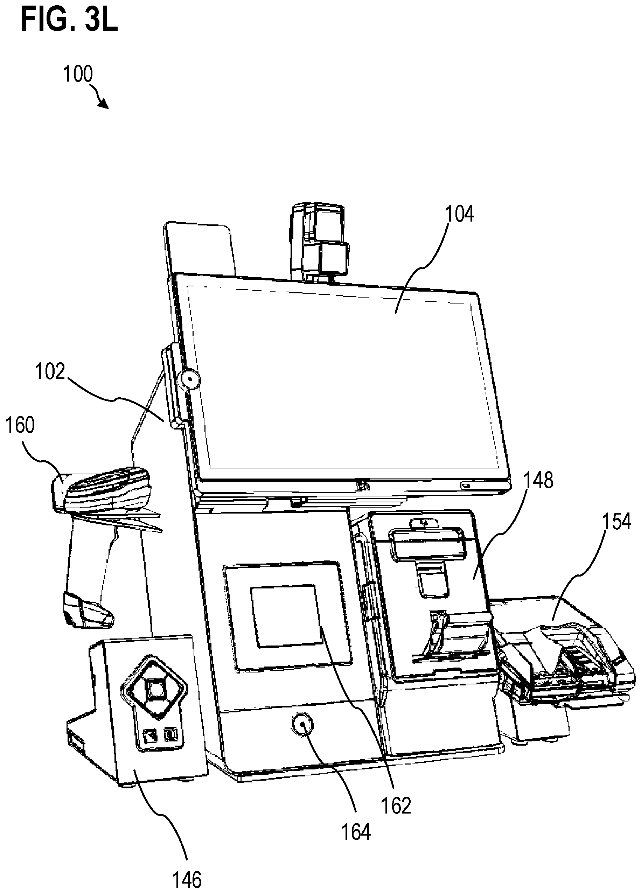

Es wird verstanden, dass das Selbstbedienungsterminal 100 andere (z.B. zusätzliche) Peripheriegeräte aufweisen kann. Zum Beispiel kann das Selbstbedienungsterminal 100, wie in FIG.3L gezeigt, eine Halterung 160 für einen handgehaltenen Scanner aufweisen. Optional kann das Selbstbedienungsterminal 100 eine stationäre Scannereinheit 162 (z.B. zum Scannen von Barcodes) aufweisen. Die stationäre Scannereinheit 162 kann, wie in FIG.3L gezeigt, beispielsweise in die Vorderseite, V, des Gehäuses 102 integriert sein. Optional kann das Selbstbedienungsterminal 100 zum Beispiel eine Zugangsschnittstelle 164 für einen Dallas-Schlüssel aufweisen. Es wird verstanden, dass dies Beispiele sind und das Selbstbedienungsterminal 100 zusätzlich oder alternativ verschiedene andere Peripheriegeräte, Benutzerschnittstellen, etc. aufweisen kann.

Gemäß verschiedenen Ausführungsformen kann das Selbstbedienungsterminal 100 verschiedene Schwenkmechanismen aufweisen, welche ein (z.B. stufenweises) Öffnen des Gehäuses 102 auf einfache Weise ermöglichen. Hierbei kann das Selbstbedienungsterminal 100 entsprechende Schwenkeinrichtungen aufweisen. FIG.4A bis FIG.4D zeigen jeweils einen Ausschnitt des Selbstbedienungsterminals 100 (unter Ausblendung mehrerer Komponenten), um die verschiedenen Schwenkeinrichtungen darzustellen.

Die Anzeige- und/oder Bedienvorrichtung 104 (z.B. als Teil an einer Anzeige- und/oder Bedieneinheit) kann mittels einer ersten Schwenkeinrichtung 166 schwenkbar an dem Gehäuse 102 angebracht sein. Die erste Schwenkeinrichtung 166 kann eine erste Schwenkachse definieren (um welche die Anzeige- und/oder Bedienvorrichtung schwenkbar ist). Die erste Schwenkachse 166 kann sich in einem Winkel von kleiner als oder gleich 30° (z.B. kleiner als oder gleich 20°, z.B. kleiner als oder gleich 10°, z.B. kleiner als oder gleich 5°) zur Vorderseite, V, erstrecken. Zum Beispiel kann sich die erste Schwenkachse 166, wie in FIG.4A gezeigt, im Wesentlichen parallel zur Vorderseite, V, des Gehäuses 102 erstrecken. Die erste Schwenkachse 166 kann in einem Winkel von kleiner als oder gleich 30° (z.B. kleiner als oder gleich 20°, z.B. kleiner als oder gleich 10°, z.B. kleiner als oder gleich 5°) zur Hochachse verlaufen. Zum Beispiel kann die erste Schwenkachse 166, wie in FIG.4A gezeigt, im Wesentlichen parallel zur Hochachse des Gehäuses 102 verlaufen. Anschaulich kann die Anzeige- und/oder Bedienvorrichtung 104 mittels der ersten Schwenkeinrichtung 166 von einer Arbeitsposition aus, in welcher sie sich auf der Vorderseite des Gehäuses 102 befindet, iln eine Ausschwenkposition, in welcher sie zu einer Lateralseite (z.B. der ersten Lateralseite, L1) des Gehäuses 102 hin weggeschwenkt ist, schwenkbar sein.

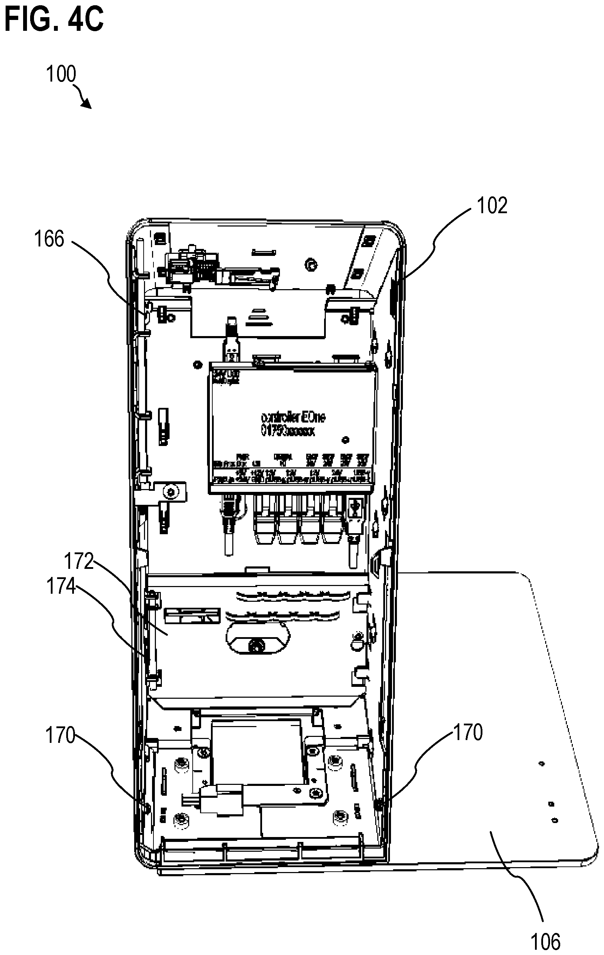

Das Gehäuse 102 kann auf der Vorderseite, V, mit einer Vorderseiten-Öffnung (in manchen Aspekten auch als Gehäuse-Öffnung bezeichnet) versehen sein. Das Selbstbedienungsterminal 100 kann ein Vorderseiten-Abdeckelement 168 aufweisen. Das Vorderseiten-Abdeckelement 168 kann mittels einer zweiten Schwenkeinrichtung 170 (siehe zum Beispiel FIG.4C) schwenkbar an dem Gehäuse 102 angebracht sein. Die zweite Schwenkeinrichtung 170 kann eine zweite Schwenkachse definieren. Die zweite Schwenkachse kann sich quer zur ersten Schwenkachse erstrecken. Die zweite Schwenkachse kann in einem Winkel von kleiner als oder gleich 30° (z.B. kleiner als oder gleich 20°, z.B. kleiner als oder gleich 10°, z.B. kleiner als oder gleich 5°) zur Vorderseite des Gehäuses 102 verlaufen. Zum Beispiel kann die zweite Schwenkachse, wie in FIG.4C gezeigt, im Wesentlichen parallel zur Vorderseite (z.B. zu einer von der Vorderseite definierten Vorderseitenebene) verlaufen. Anschaulich kann das Vorderseiten-Abdeckelement 168 mittels der zweiten Schwenkeinrichtung 170 von einer Abdeckposition aus, in welcher es sich auf der Vorderseite über der Vorderseiten-Öffnung befindet (um diese zumindest teilweise (z.B. vollständig) abzudecken), in eine Öffnungsposition, in welcher es nach vorne hin von der Vorderseite weggeschwenkt ist, schwenkbar sein.

Wie gezeigt, kann die erste Schwenkeinrichtung 166 zu der Oberseite, O, des Gehäuses 102 näher gelegen ist als zu der Unterseite, U. Die zweite Schwenkeinrichtung 170 kann zu der Unterseite, U, des Gehäuses 102 näher gelegen ist als zu der Oberseite, O.

Anschaulich kann die Anzeige- und/oder Bedienvorrichtung 104 mittels der ersten Schwenkeinrichtung in laterale Richtung wegschwenkbar sein und das Vorderseiten-Abdeckelement 168 kann mittels der zweiten Schwenkeinrichtung 170 nach vorn (in Richtung des Benutzers) wegschwenkbar sein.

Durch das Wegschwenken des Vorderseiten-Abdeckelements 168 kann die Vorderseiten-Öffnung an der Vorderseite des Gehäuses 102 freigelegt werden, was einen Zugang in das Gehäuse 102 hinein bereitstellt (z.B. für Wartungsarbeiten, für das Lösen eines mechanisch verbundenen Verbindungselementes, für das mechanische Befestigen eines Verbindungselementes an einer zugehörigen Aufnahme des Gehäuses 102, etc.).

Wie in FIG.4A gezeigt, kann das Selbstbedienungsterminal 100 optional die stationäre Scannereinheit 162 aufweisen, welche in das Vorderseiten-Abdeckelement 168 integriert sein kann. In diesem Fall kann die stationäre Scannereinheit 162 gemeinsam mit dem Vorderseiten-Abdeckelement 168 geschwenkt werden. Gemäß verschiedenen Ausführungsformen kann das Selbstbedienungsterminal 100 eine Antenneneinheit aufweisen. Die Antenneneinheit kann mechanisch mit dem Vorderseiten-Abdeckelement 168 verbunden sein. Die Antenneneinheit kann die Scanner-Einheit zumindest teilweise (z.B. vollständig) umgeben. Zum Beispiel kann die Scanner-Einheit162 und/oder die Antenneneinheit derart eingerichtet sein, dass diese nicht über eine von einer Vorderseite des Vorderseiten-Abdeckelementes 168 definierte Vorderseitenebene (in Richtung des Benutzers) hinausragt. So kann die Antenneneinheit zum Beispiel wenn das Vorderseiten-Abdeckelement 168 in der Abdeckposition ist, dem Benutzer bei dem Selbstbedienungsprozess am Selbstbedienungsterminal ein Erfassen und/oder Entwerten von radiofrequenten, elektromagnetischen, und/oder akustomagnetischen Etiketten und/oder von Radiofrequenzidentifikations-(RFID)-Etiketten ermöglichen (z.B. für ein Elektronisches Artikelsicherungssystem (EAS).

Gemäß verschiedenen Ausführungsformen kann das Selbstbedienungsterminal 100 (z.B. die Anzeige- und/oder Bedienvorrichtung 104 und das Vorderseiten-Abdeckelement 168) derart eingerichtet sein, dass die Anzeige- und/oder Bedienvorrichtung 104 in der Arbeitsposition ein Wegschwenken des Vorderseiten-Abdeckelements 168 von der Abdeckposition aus in die Öffnungsposition blockiert und dass die Anzeige- und/oder Bedienvorrichtung 104 in der Ausschwenkposition ein Wegschwenken des Vorderseiten-Abdeckelements 168 von der Abdeckposition aus in die Öffnungsposition nicht blockiert. Dies kann ein zweistufiges Öffnen des Gehäuses 102 bereitstellen, so dass das Vorderseiten-Abdeckelement 168 nur weggeschwenkt werden kann, wenn zuvor die Anzeige- und/oder Bedienvorrichtung 104 weggeschwenkt wird. Auf diese Weise können die Anzeige- und/oder Bedienvorrichtung 104 und das Vorderseiten-Abdeckelement 168 aus Richtung des Benutzers zumindest teilweise überlagert angeordnet sein, was beispielsweise einen verringerten Platzbedarf des Selbstbedienungsterminals 100 zur Folge hat. Auch kann auf diese Weise mittels eines einzigen Verriegelungs-Entriegelungsmechanismus das Schwenken von sowohl der Anzeige- und/oder Bedienvorrichtung 104 als auch des Vorderseiten-Abdeckelements 168 gesichert werden, indem der Verriegelungs-Entriegelungsmechanismus die erste Schwenkeinrichtung 166 verriegeln kann (wodurch auch die zweite Schwenkeinrichtung 170 blockiert wird). Zum Beispiel kann der Verriegelungs-Entriegelungsmechanismus eingerichtet sein, die erste Schwenkeinrichtung 166 mittels eines mechanischen und/oder digitalen Schlüssels zu entriegeln.

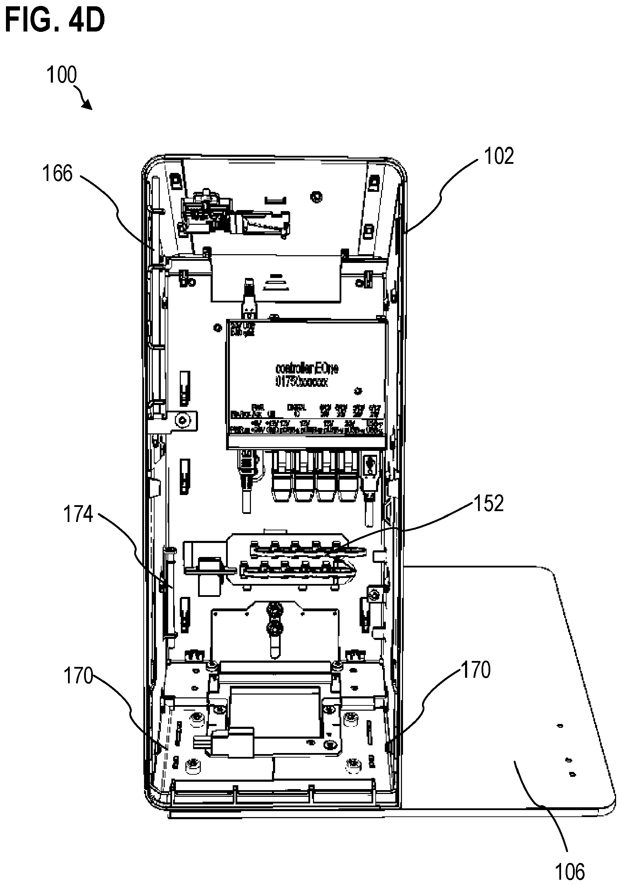

Alternativ oder zusätzlich zu der ersten Schwenkreinrichtung 166 und der zweiten Schwenkreinrichtung 170 kann das Selbstbedienungsterminal 100 eine dritte Schwenkreinrichtung 174 aufweisen. Hierbei kann das Selbstbedienungsterminal 100 eine Abdeckklappe 172 aufweisen. Die Abdeckklappe 172 kann in dem Gehäuse 102 angeordnet sein. Die Abdeckklappe 172 kann mittels der dritten Schwenkreinrichtung 174 mit dem Gehäuse 102 mechanisch verbunden und schwenkbar an diesem angebracht sein. Die dritte Schwenkreinrichtung 174 kann eine dritte Schwenkachse definieren. Die dritte Schwenkachse kann sich in einem Winkel von kleiner als oder gleich 30° (z.B. kleiner als oder gleich 20°, z.B. kleiner als oder gleich 10°, z.B. kleiner als oder gleich 5°) zur Vorderseite, V, erstrecken. Zum Beispiel kann sich die dritte Schwenkachse, wie in FIG.4C und FIG.4D gezeigt, im Wesentlichen parallel zur Vorderseite V, des Gehäuses 102 (z.B. optional im Wesentlichen parallel zur ersten Schwenkachse) erstrecken. Die dritte Schwenkachse in einem Winkel von kleiner als oder gleich 30° (z.B. kleiner als oder gleich 20°, z.B. kleiner als oder gleich 10°, z.B. kleiner als oder gleich 5°) zur Hochachse verlaufen. Zum Beispiel kann die dritte Schwenkachse im Wesentlichen parallel zur Hochachse verlaufen.

Die Abdeckklappe 172 kann eingerichtet sein zum zumindest teilweisen (z.B. vollständigen) Abdecken ein oder mehreren Kabelführungen 152 (zum Führen von Anschlusskabel) dienen. So kann die Abdeckklappe 172 mittels der dritten Schwenkeinrichtung 174 von einer Abdeckposition, in welcher die ein oder mehreren Kabelführungen 152 aus Richtung des Benutzers zumindest teilweise abgedeckt sind, in eine Aufdeckposition, in welcher die ein oder mehreren Kabelführungen 162 aus Richtung des Benutzers nicht abgedeckt sind, schwenkbar sein. Auf diese Weise können die Anschlusskabel in einem zur Rückseite des Gehäuses 102 angrenzenden Abschnitt innerhalb des Gehäuses 102 geführt werden und blockieren so zum Beispiel nicht die Wartungstätigkeit, wenn der Zugang zu dem Inneren des Gehäuses 102 mittels Schwenkens der Anzeige- und/oder Bedienvorrichtung 104 und Schwenkens des Vorderseiten-Abdeckelementes 168 bereitgestellt ist. Die Kabelführung in dem zur Rückseite des Gehäuses 102 angrenzenden Abschnitt kann ermöglicht werden durch die hierin beschriebene Anordnung unter Verwendung des Befestigungselementes 112 und/oder der Kabelführung bei der modularen Erweiterung durch die in dem zur Rückseite angrenzenden Abschnitt der jeweiligen Lateralseite ausgebildeten Aussparungen.

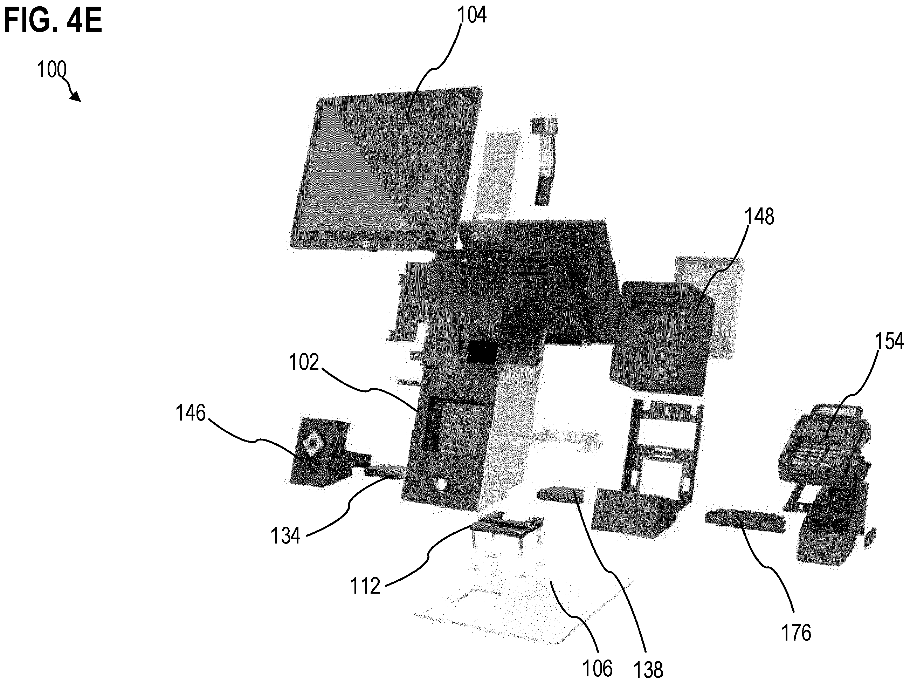

FIG.4E zeigt eine Explosionsansicht einer beispielhaften Ausgestaltung des Selbstbedienungsterminals 100 bei der das Selbstbedienungsterminal 100 unter anderem sowohl das Befestigungselement 112 zum Befestigen an der Basis 106, das erste Verbindungselement 134, das zweite Verbindungselement 138 und ein drittes Verbindungselement 176 zum mechanischen Verbinden des Selbstbedienungsterminals 100 mit dem ersten Peripheriegerät 146, dem zweiten Peripheriegerät 148 und dem dritten Peripheriegerät 154, als auch den ersten Schwenkmechanismus 166 und den zweiten Schwenkmechanismus 170 aufweist.

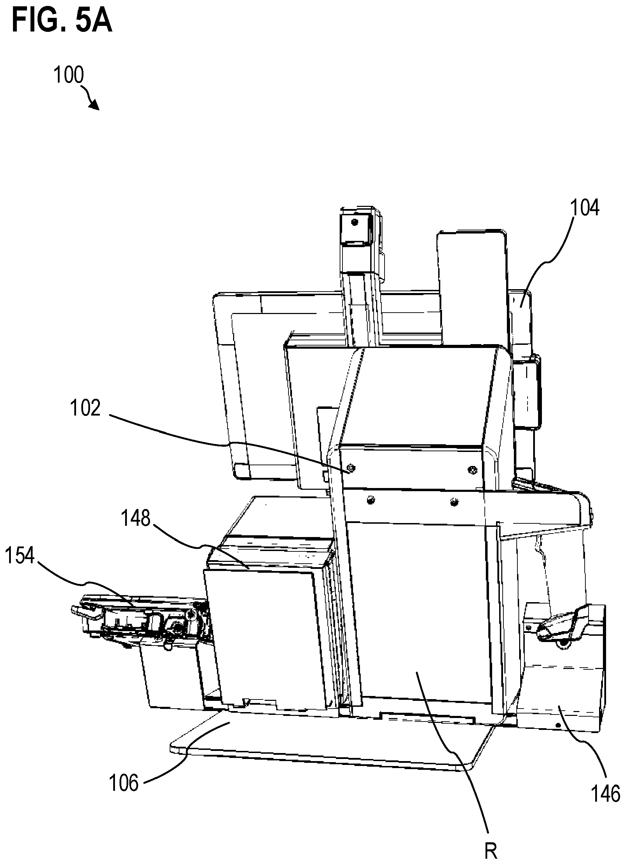

Das Selbstbedienungsterminal 100 kann in manchen Anwendungen der ausschließlichen Selbstbedienung (z.B. in einem Lebensmittelgeschäft) dienen. In diesem Fall kann zum Beispiel die Rückseite, R, des Selbstbedienungsterminals 100, wie in FIG.5A gezeigt, im Wesentlichen frei von Peripheriegeräten sein. Anschaulich können die an das Selbstbedienungsterminal 100 angeschlossenen Geräte in Richtung des Benutzers ausgerichtet sein, um den Selbstbedienungsprozess des Benutzers (z.B. Kunden) zu unterstützen.

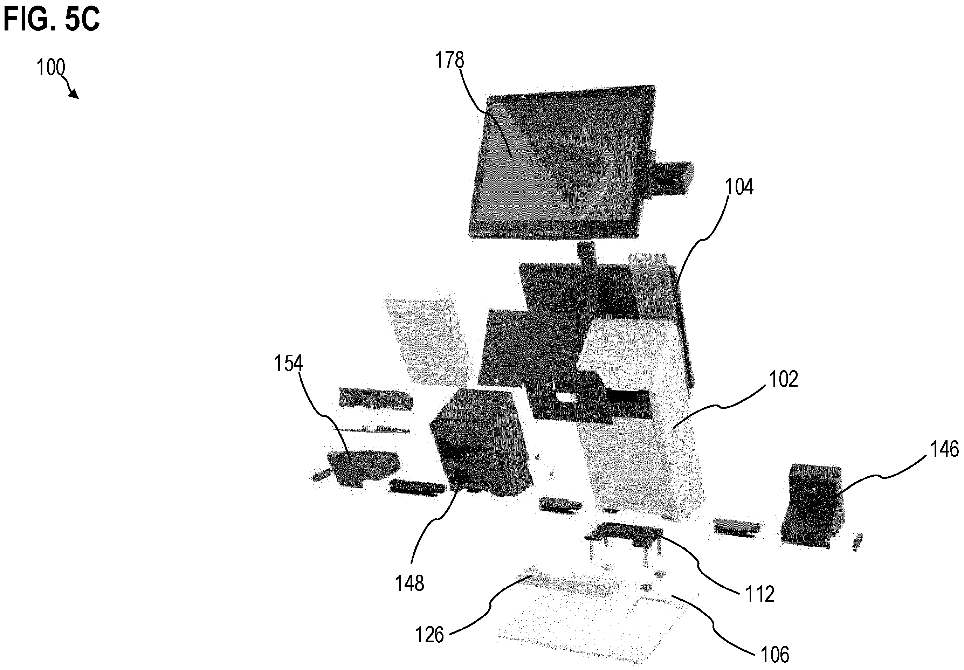

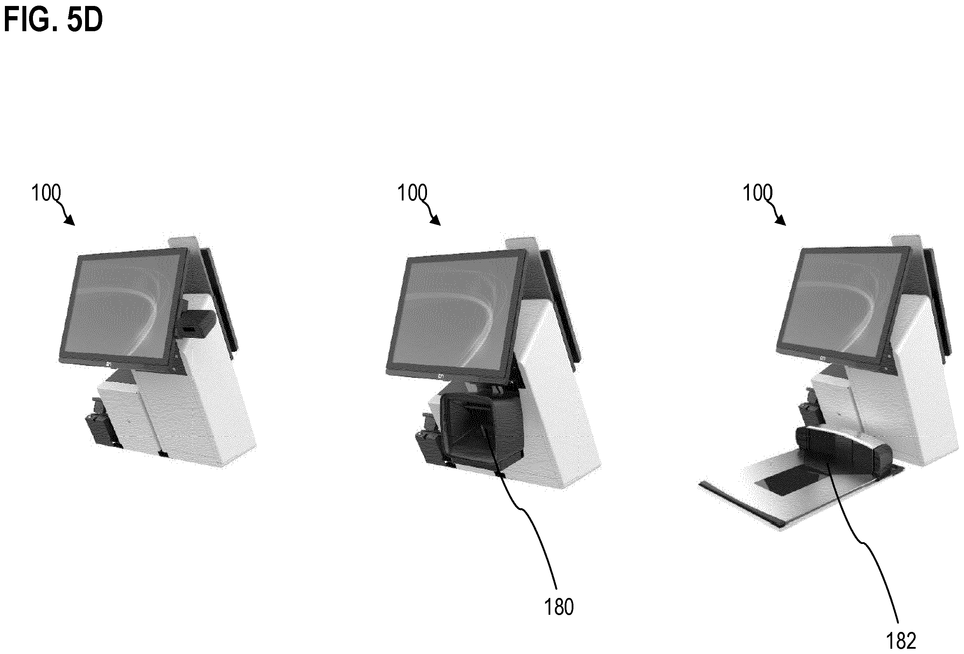

In anderen Anwendungen kann das Selbstbedienungsterminal 100 ein oder mehrere Peripheriegeräte an der Rückseite, R, des Gehäuses 102 aufweisen. Die ein oder mehreren Peripheriegeräte können beispielsweise einem Bediensteten (welcher den Selbstbedienungsprozess des Benutzers überwachen und/oder steuern und/oder unterstützen kann) zugewandt sein. In manchen Ausführungsformen kann das Selbstbedienungsterminal 100 die ein oder mehreren Peripheriegeräte nicht aufweisen, aber kann derart eingerichtet sein, dass dieses um rückseitige Peripheriegeräte erweiterbar ist. Anschaulich kann die Vorderseite des Selbstbedienungsterminals 100 eine Benutzer-Seite sein und die Rückseite des Selbstbedienungsterminals 100 kann eine Bediensteten-Seite (z.B. eine Assistenzseite) sein. FIG.5B zeigt eine beispielhafte Ausgestaltung des Selbstbedienungsterminals 100 bei der das Selbstbedienungsterminal 100 auf der dem Benutzer abgewandten Seite eine (z.B. dem Bediensteten oder einem anderen Benutzer zugewandte) Anzeige- und/oder Bedienvorrichtung 178 (z.B. einen Touchscreen) aufweist. Ferner kann das Selbstbedienungsterminal 100 eine (z.B. mechanisch mit der Rückseite, R, des Gehäuses 102 verbundene) stationäre Scanner-Einheit 180 aufweisen. FIG.5C zeigt eine beispielhafte Explosionsansicht (ähnlich zu FIG.4E) des Selbstbedienungsterminals 100 mit Sicht auf die Rückseite, R. Es wird verstanden, dass dies Beispiele sind und dass das Selbstbedienungsterminal 100 beliebige Peripheriegeräte aufweisen kann, die von dem Benutzer abgewandt (z.B. dem Bediensteten zugewandt) sind. Als ein Beispiel kann, wie in FIG.5D gezeigt, auf der Bediensteten-Seite eine Scanner-Einheit mit integrierter Waage 182 angeordnet sein. Gemäß verschiedenen Ausführungsformen kann die die Vorderseite des Selbstbedienungsterminals 100 eine erste Benutzer-Seite für einen Selbstbedienungsprozess eines ersten Benutzers (z.B. eines ersten Kunden) sein und die Rückseite des Selbstbedienungsterminals 100 kann eine zweite Benutzer-Seite für einen Selbstbedienungsprozess eines zweiten Benutzers (z.B. eines zweiten Kunden) sein. In diesem Fall kann die Rückseite ebenfalls mit entsprechenden Peripheriegeräten (z.B. einer zweiten Anzeige- und/oder Bedienvorrichtung, einer zweiten Scanner-Einheit, etc.) mechanisch verbunden und/oder mechanisch verbindbar sein. Anschaulich kann das Selbstbedienungsterminal 100 eine Hybridfunktionalität (z.B. für einen Kunden und einen Bediensteten) bereitstellen.

Das hierin beschriebene Selbstbedienungsterminal 100 bietet aufgrund der modularen Erweiterbarkeit eine erhöhte Flexibilität und kann damit (z.B. bei erforderlicher Anpassung des Aufbaus oder zusätzlicher Peripheriegeräte) Kosten auf Seite des Betreibers senken (z.B. die Gesamtbetriebskosten des Betreibers), da kostspielige Anpassungen nicht erforderlich sind. Der verringerte Querschnitt und der damit verringerte Platzbedarf kann die Kosten weiter senken. Aufgrund des verringerten Querschnitts kann das Selbstbedienungsterminal 100 zum Beispiel als Selbstbedienungskiosk (z.B. auf einem Tisch) auch bei wenig vorhandenem Platz eingesetzt werden.

Hierin werden verschiedene Aspekte des Selbstbedienungsterminals 100 beschrieben. Es wird verstanden, dass die hierin beschriebenen Prinzipien auch als entsprechende Verfahren ausgeführt werden können. So kann zum Beispiel ein Verfahren zum Zusammenbauen eines Selbstbedienungsterminals ein Befestigen eines Befestigungselements an einer Basis und ein Lineareinschieben von zwei Lineareinschubführungsabschnitten eines Gehäuses des Selbstbedienungsterminals in zugehörige Korrespondenz-Lineareinschubführungsabschnitte des Befestigungselements aufweisen. Auch kann ein Verfahren zum Zusammenbauen eines Selbstbedienungsterminals ein Einführen eines Verbindungselements in eine Aussparung eines Gehäuses des Selbstbedienungsterminals und ein Befestigen des Verbindungselements an einer Aufnahme des Selbstbedienungsterminals (und optional ferner ein Befestigen mindestens eines Peripheriegeräts an dem Verbindungselement) aufweisen.

Im Folgenden werden Bespiele beschrieben, welche verschiedene Aspekte des Selbstbedienungsterminals 100 veranschaulichen.

Beispiel 1 ist ein Selbstbedienungsterminal, aufweisend: ein Gehäuse mit einer einem Benutzer des Selbstbedienungsterminals zugewandten, ersten Seite und einer dem Benutzer des Selbstbedienungsterminals nicht zugewandten, zweiten Seite, wobei das Gehäuse an der zweiten Seite mit einem ersten Lineareinschubführungsabschnitt und einem zweiten Lineareinschubführungsabschnitt ausgebildet ist, die zueinander parallel verlaufen und damit eine gemeinsame Lineareinschubrichtung definieren und die quer zur Lineareinschubrichtung in einem Abstand voneinander angeordnet sind, und wobei das Gehäuse zwischen den beiden Lineareinschubführungsabschnitten mit wenigstens einer Öffnung zur Durchführung von Anschlusskabeln versehen ist; eine an dem Gehäuse befestigte und in Richtung zu dem Benutzer des Selbstbedienungsterminals ausgerichtete Anzeige- und/oder Bedienvorrichtung; einen oder mehrere Prozessoren, die eingerichtet sind, eine graphische Anzeige- und/oder Bedienoberfläche auf der Anzeige- und/oder Bedienvorrichtung bereitzustellen, um den Benutzer bei einem Selbstbedienungsprozess am Selbstbedienungsterminal zu unterstützen; ein Befestigungselement, das eingerichtet ist, lösbar an einer Basis befestigt zu werden, und das einen ersten und einen zweiten Korrespondenz-Lineareinschubführungsabschnitt aufweist, die zu dem ersten und dem zweiten Lineareinschubführungsabschnitt des Gehäuses korrespondieren, sodass das Gehäuse und das an der Basis befestige Befestigungselement entlang der Lineareinschubrichtung via Lineareinschieben zusammenbaubar sind, um dadurch das Gehäuse über das Befestigungselement an der Basis in lösbarer Weise festzulegen.

Beispiel 2 ist eingerichtet gemäß Beispiel 1, wobei die erste Seite eine Vorderseite des Gehäuses ist und wobei die zweite Seite eine Unterseite des Gehäuses ist.

Beispiel 3 ist eingerichtet gemäß Beispiel 2, wobei das Gehäuse eine der Unterseite gegenüberliegende Oberseite aufweist, wobei sich die Vorderseite zwischen der Unterseite und der Oberseite erstreckt, wobei die Vorderseite in einem Winkel von kleiner gleich 80°, optional kleiner gleich 70°, zur Unterseite verläuft und sich in Richtung zu der Oberseite nach hinten geneigt erstreckt.

Beispiel 4 ist eingerichtet gemäß Beispiel 2 oder 3, wobei das Befestigungselement eine Befestigungselement-Aussparung aufweist, die, wenn das Gehäuse über das Befestigungselement an der Basis in lösbarer Weise festgelegt ist, einer der Vorderseite gegenüberliegenden Rückseite des Gehäuses zugewandt ist, sodass die Anschlusskabel durch die Befestigungselement-Aussparung hindurch in eine zu der Befestigungselement-Aussparung korrespondieren Basis-Öffnung der Basis hinein und/oder durch die Befestigungselement-Aussparung und eine an einem zu der Unterseite angrenzenden Abschnitt der Rückseite ausgebildete Gehäuse-Aussparung hindurch hindurchführbar sind, um dadurch aus dem Gehäuse hinausgeführt zu werden.

Beispiel 5 ist ein Selbstbedienungsterminal gemäß einem der Beispiele 2 bis 4, wobei das Gehäuse eine der Vorderseite gegenüberliegende Rückseite aufweist, wobei der erste Lineareinschubführungsabschnitt und der zweite Lineareinschubführungsabschnitt des Gehäuses an der Unterseite in einem zu der Vorderseite angrenzenden Abschnitt und nicht in einem zu der Rückseite angrenzenden Abschnitt ausgebildet sind.

Beispiel 6 ist eingerichtet gemäß einem der Beispiele 2 bis 5, wobei das Befestigungselement eine Befestigungselement-Öffnung aufweist, sodass die Anschlusskabel durch die Befestigungselement-Öffnung hindurch in eine zu der Befestigungselement-Öffnung korrespondierende Basis-Öffnung der Basis hindurchführbar sind.

Beispiel 7 ist eingerichtet gemäß einem der Beispiele 2 bis 6, wobei das Gehäuse eine der Vorderseite gegenüberliegende Rückseite aufweist und zumindest an einem zu der Unterseite angrenzenden Abschnitt der Rückseite mit einer (bzw. der, wenn in Kombination mit Beispiel 4) Gehäuse-Aussparung versehen ist.

Beispiel 8 ist eingerichtet gemäß Beispiel 7, wobei das Gehäuse eine sich zwischen der Vorderseite und der Rückseite und lateral zu diesen erstreckende, erste Lateralseite und eine der ersten Lateralseite gegenüberliegende, zweite Lateralseite aufweist, wobei sich die Gehäuse-Aussparung ferner in einen zu der Unterseite und der Rückseite angrenzenden Abschnitt der ersten Lateralseite und/oder in einen zu der Unterseite und der Rückseite angrenzenden Abschnitt der zweiten Lateralseite erstreckt.

Beispiel 9 ist ein Selbstbedienungsterminal gemäß Beispiel 7 oder 8, ferner aufweisend: ein Abdeckelement, das eingerichtet ist, lösbar an dem Gehäuse befestigt zu werden, um die Gehäuse-Aussparung zumindest teilweise (z.B. vollständig) abzudecken.

Beispiel 10 ist ein Selbstbedienungsterminal gemäß einem der Beispiele 2 bis 9, wobei das Gehäuse eine der Vorderseite gegenüberliegende Rückseite aufweist, welche einem anderen Benutzer des Selbstbedienungsterminals (z.B. einem anderen Kunden oder einem Bediensteten) zugewandt ist, und wobei das Selbstbedienungsterminal ferner eine an dem Gehäuse befestigte und in Richtung zu dem anderen Benutzer des Selbstbedienungsterminals ausgerichtete andere Anzeige- und/oder Bedienvorrichtung aufweist. Die ein oder mehreren Prozessoren können zum Beispiel eingerichtet sein, eine graphische Anzeige- und/oder Bedienoberfläche auf der anderen Anzeige- und/oder Bedienvorrichtung bereitzustellen (um den anderen Benutzer bei einem Selbstbedienungsprozess am Selbstbedienungsterminal zu unterstützen und/oder um einen Bediensteten als anderen Benutzer zu ermöglichen, den Benutzer bei dem Selbstbedienungsprozess am Selbstbedienungsterminal zu unterstützen). Optional kann das Selbstbedienungsterminal zusätzliche Peripheriegeräte an der Rückseite aufweisen, wie beispielsweise eine andere Scanner-Einheit (die dem anderen Benutzer zugewandt ist).

Beispiel 11 ist eingerichtet gemäß Beispiel 1, wobei die erste Seite eine Vorderseite des Gehäuses ist und wobei die zweite Seite eine der Vorderseite gegenüberliegende Rückseite des Gehäuses ist.

Beispiel 12 ist eingerichtet gemäß Beispiel 11, wobei das Gehäuse an einer dritten Seite, sich zwischen der Vorderseite und der Rückseite erstreckt, an einem zu der Rückseite angrenzenden Abschnitt der dritten Seite eine Gehäuse-Aussparung aufweist.

Beispiel 13 ist ein Selbstbedienungsterminal gemäß einem der Beispiele 1 bis 12, wobei die Anzeige- und/oder Bedienvorrichtung ein Touchscreen aufweist.

Beispiel 14 ist eingerichtet gemäß einem der Beispiele 1 bis 13, wobei das Gehäuse an einer dritten Seite, die an die erste Seite und die zweite Seite angrenzt, an einem zu der zweiten Seite angrenzenden Abschnitt der dritten Seite eine Verbindungselementanschluss-Gehäuse-Aussparung aufweist, durch welche hindurch ein Verbindungselement zum mechanischen Verbinden eines Peripheriegerätes mit dem Selbstbedienungsterminal, optional mit dem Gehäuse, in das Gehäuse hinein hindurchführbar ist, wobei das Gehäuse benachbart zu der Verbindungselementanschluss-Gehäuse-Aussparung mit einer zu dem Verbindungselement korrespondierenden Aufnahme ausgebildet ist, an welcher das Verbindungselement befestigbar ist, um damit an dem Gehäuse befestigbar zu sein

Beispiel 15 ist das Selbstbedienungsterminal gemäß Beispiel 14, welches ferner das Verbindungselement aufweist.

Beispiel 16 ist eingerichtet gemäß Beispiel 15, wobei das Verbindungselement einen Durchlassraum hat, welcher sich bei an der Aufnahme befestigtem Verbindungselement von außerhalb des Gehäuses durch die Verbindungselementanschluss-Gehäuse-Aussparung hindurch in das Gehäuse hinein erstreckt, um dadurch zu ermöglichen, eines oder mehrere Anschlusskabel des Peripheriegerätes von außerhalb des Gehäuses über den Durchlassraum durch die Verbindungselementanschluss-Gehäuse-Aussparung hindurch in das Gehäuse hinein zu führen.

Beispiel 17 ist ein Selbstbedienungsterminal gemäß Beispiel 15 oder 16, ferner aufweisend ein mittels des Verbindungselementes mechanisch mit dem Selbstbedienungsterminal, optional mit dem Gehäuse, verbundenes Peripheriegerät.

Beispiel 18 ist eingerichtet gemäß Beispiel 17, wobei das Peripheriegerät eines der folgenden Peripheriegeräte aufweist: einen Drucker, einen (z.B. Barcode-) Scanner, eine Kamera, ein Kartenlesegerät, ein Bediengerät, ein Verifizierungsgerät (z.B. mittels Gesichtserkennung, Fingerabdruckerkennung, etc.), eine Waage, etc.

Beispiel 19 ist ein Selbstbedienungsterminal gemäß Beispiel 17 oder 18, wobei das Peripheriegerät eine erste Gerät-Aussparung, durch welche das Verbindungselement hindurchführt, an einer ersten Seite des Peripheriegeräts und eine zweite Gerät-Aussparung, durch welche hindurch ein anderes Verbindungselement zum mechanischen Verbinden des Peripheriegerätes mit einem anderen Peripheriegerät hindurchführbar ist, an einer der ersten Seite gegenüberliegenden, zweiten Seite des Peripheriegeräts aufweist, wobei das Peripheriegerät mit einer zu der ersten Gerät-Aussparung korrespondierenden ersten Aufnahme, an welcher das Verbindungselement befestigt ist, und einer zu der zweiten Gerät-Aussparung korrespondierenden zweiten Aufnahme, an welcher das andere Verbindungselement befestigbar ist, ausgebildet ist, sodass das andere Peripheriegerät mittels des Peripheriegeräts an dem Selbstbedienungsterminal, an optional an dem Gehäuse, befestigbar ist.

Beispiel 20 ist eingerichtet gemäß Beispiel 17 oder 18, wobei das Peripheriegerät eine von einer ersten Seite zu einer der ersten Seite gegenüberliegenden, zweiten Seite durchgängige Gerät-Aussparung aufweist, durch welche sich das Verbindungselement derart hindurch erstreckt, dass ein Abschnitt des Verbindungselements benachbart zu der zweiten Seite nicht von dem Peripheriegerät bedeckt ist, wobei der Abschnitt des Verbindungselements an einem anderen Peripheriegerät befestigbar ist zum mechanischen Verbinden des anderen Peripheriegerätes mit dem Selbstbedienungsterminal, optional mit dem Gehäuse.

Beispiel 21 ist eingerichtet gemäß einem der Beispiele 14 bis 20, wobei die Verbindungselementanschluss-Gehäuse-Aussparung mit einer Blende versehen ist, die stofflich einstückig, optional mittels einer oder mehreren Sollbruchstellen, mit der dritten Seite des Gehäuse verbunden ist.

Beispiel 22 ist eingerichtet gemäß einem der Beispiele 14 bis 20, sofern in Kombination mit Beispiel 9, wobei die Verbindungselementanschluss-Gehäuse-Aussparung Teil der Gehäuse-Aussparung ist und wobei die Verbindungselementanschluss-Gehäuse-Aussparung in dem zu der Unterseite und der Rückseite angrenzenden Abschnitt der ersten Lateralseite oder in dem zu der Unterseite und der Rückseite angrenzenden Abschnitt der zweiten Lateralseite ausgebildet ist, wobei das Abdeckelement einen ersten Abschnitt, welcher den sich in die Rückseite erstreckenden Abschnitt der Gehäuse-Aussparung zumindest teilweise abdeckt, und einen zweiten Abschnitt, welcher die Verbindungselementanschluss-Gehäuse-Aussparung zumindest teilweise abdeckt, aufweist, wobei der erste Abschnitt und der zweite Abschnitt des Abdeckelementes stofflich einstückig mittels einer oder mehreren Sollbruchstellen miteinander verbunden sind.

Beispiel 23 ist eingerichtet gemäß einem der Beispiele 14 bis 22, wobei das Gehäuse an einer der dritten Seite gegenüberliegenden, vierten Seite an einem zu der zweiten Seite angrenzenden Abschnitt der vierten Seite eine andere Verbindungselementanschluss-Gehäuse-Aussparung hat, durch welche hindurch ein anderes Verbindungselement zum mechanischen Verbinden eines anderen Peripheriegerätes mit dem Selbstbedienungsterminal, optional mit dem Gehäuse, in das Gehäuse hinein hindurchführbar ist, wobei das Selbstbedienungsterminal, optional das Gehäuse, benachbart zu der anderen Verbindungselementanschluss-Gehäuse-Aussparung mit einer zu dem anderen Verbindungselement korrespondierenden anderen Aufnahme ausgebildet ist, an welcher das andere Verbindungselement befestigbar ist, um damit an dem Selbstbedienungsterminal, optional dem Gehäuse, befestigbar zu sein.

Beispiel 24 ist das Selbstbedienungsterminal gemäß Beispiel 23, welches ferner das andere Verbindungselement und das andere Peripheriegerät aufweist, wobei das andere Peripheriegerät eine andere erste Gerät-Aussparung, durch welche das andere Verbindungselement hindurchführt, an einer ersten Seite des anderen Peripheriegeräts und eine andere zweite Gerät-Aussparung, durch welche hindurch ein noch anderes Verbindungselement zum mechanischen Verbinden des Peripheriegerätes mit einem noch anderen Peripheriegerät hindurchführbar ist, an einer der ersten Seite gegenüberliegenden, zweiten Seite des anderen Peripheriegeräts aufweist, wobei das andere Peripheriegerät mit einer zu der anderen ersten Gerät-Aussparung korrespondierenden anderen ersten Aufnahme, an welcher das andere Verbindungselement befestigt ist, und einer zu der anderen zweiten Gerät-Aussparung korrespondierenden anderen zweiten Aufnahme, an welcher das noch andere Verbindungselement befestigbar ist, ausgebildet ist, sodass das noch andere Peripheriegerät mittels des anderen Peripheriegeräts an dem Selbstbedienungsterminal, an optional an dem Gehäuse, befestigbar ist.

Beispiel 25 ist das Selbstbedienungsterminal gemäß Beispiel 24, welches ferner das andere Verbindungselement und das andere Peripheriegerät aufweist, wobei das andere Peripheriegerät eine von einer ersten Seite zu einer der ersten Seite gegenüberliegenden, zweiten Seite durchgängige andere Gerät-Aussparung aufweist, durch welche sich das andere Verbindungselement derart hindurch erstreckt, dass ein Abschnitt des anderen Verbindungselements benachbart zu der zweiten Seite nicht von dem anderen Peripheriegerät bedeckt ist, wobei der Abschnitt des anderen Verbindungselements an einem noch anderen Peripheriegerät befestigbar ist zum mechanischen Verbinden des noch anderen Peripheriegerätes mit dem Selbstbedienungsterminal, optional mit dem Gehäuse.

Beispiel 26 ist eingerichtet gemäß einem der Beispiele 16 bis 25, sofern in Kombination mit Beispiel 16, ferner aufweisend: mehrere Anschlussplätze innerhalb des Gehäuses zum Anschließen elektrischer Geräte; wobei mindestens ein Anschlusskabel der ein oder mehreren Anschlusskabel durch die Verbindungselementanschluss-Gehäuse-Aussparung hindurch in das Gehäuse hineinführbar und an einen Anschlussplatz der mehreren Anschlussplätze anschließbar ist; mindestens eine Kabelführung zum Führen des mindestens einen Anschlusskabels, wobei die mindestens eine Kabelführung in dem Gehäuse zwischen den mehreren Anschlussplätzen und der Verbindungselementanschluss-Gehäuse-Aussparung des Gehäuses angeordnet und mechanisch mit einer der ersten Seite gegenüberliegenden Seite des Gehäuses verbunden ist.

Beispiel 27 ist das Selbstbedienungsterminal gemäß Beispiel 26, ferner aufweisend: eine Abdeckklappe zum zumindest teilweisen Abdecken des in der mindestens einen Kabelführung geführten mindestens einen Anschlusskabels; eine (dritte) Schwenkeinrichtung, mittels derer die Abdeckklappe schwenkbar an dem Gehäuse angebracht ist und die eine Schwenkachse definiert, welche sich in einer Richtung erstreckt, die parallel oder in einem Winkel von kleiner gleich 30°, optional kleiner gleich 10°, oder ferner optional kleiner gleich 5°, zu einer von der ersten Seite definierten Erste-Seite-Ebene verläuft, sodass die Abdeckklappe mittels der Schwenkeinrichtung von einer Abdeckposition, in welcher die mindestens eine Kabelführung aus Richtung der ersten Seite zumindest teilweise abgedeckt sind, in eine Aufdeckposition, in welcher die die mindestens eine Kabelführung aus Richtung der ersten Seite nicht abgedeckt sind, schwenkbar ist.

Beispiel 28 ist eingerichtet gemäß Beispiel 26 oder 27, wobei die erste Seite eine Vorderseite ist, die sich zwischen einer Oberseite und einer Unterseite des Gehäuses erstreckt, wobei die mehreren Anschlussplätze zu der Oberseite näher gelegen sind als zu der Unterseite.

Beispiel 29 ist das Selbstbedienungsterminal gemäß einem der Beispiele 26 bis 28, sofern in Kombination mit Beispiel 8, ferner aufweisend mehrere Kabelführungen benachbart zu der mindestens einen Kabelführung zum Führen von Anschlusskabeln von den Anschlussplätzen durch die Gehäuse-Aussparung hindurch aus dem Gehäuse hinaus.

Beispiel 30 ist eingerichtet gemäß einem der Beispiele 1 bis 29, wobei das Gehäuse eine Oberseite und eine Unterseite aufweist und wobei die erste Seite eine sich zwischen der Oberseite und der Unterseite erstreckende Vorderseite ist, welche eine Vorderseitenebene definiert, und wobei das Gehäuse auf der Vorderseite mit einer Gehäuse-Öffnung versehen ist; und wobei das Selbstbedienungsterminal ferner aufweist: eine erste Schwenkeinrichtung, mittels derer die Anzeige- und/oder Bedienvorrichtung schwenkbar an dem Gehäuse angebracht ist und die eine erste Schwenkachse definiert, welche sich in einer Richtung erstreckt, die parallel oder in einem Winkel von kleiner gleich 30°, optional kleiner gleich 10°, oder ferner optional kleiner gleich 5°, zur Vorderseitenebene sowie parallel oder in einem Winkel von kleiner gleich 30°, optional kleiner gleich 10°, oder ferner optional kleiner gleich 5°, zur Hochachse verläuft, sodass die Anzeige- und/oder Bedienvorrichtung mittels der ersten Schwenkeinrichtung von einer Arbeitsposition aus, in welcher sie sich auf der Vorderseite des Gehäuses befindet, in eine Ausschwenkposition schwenkbar ist, in welcher sie zu einer Lateralseite des Gehäuses hin weggeschwenkt ist; ein Vorderseiten-Abdeckelement; eine zweite Schwenkeinrichtung, mittels derer das Vorderseiten-Abdeckelement schwenkbar an dem Gehäuse angebracht ist und die eine zweite Schwenkachse definiert, die sich quer zur ersten Schwenkachse sowie parallel oder in einem Winkel von kleiner gleich 30°, optional kleiner gleich 10°, oder ferner optional kleiner gleich 5°, zur Vorderseitenebene verläuft, sodass das Vorderseiten-Abdeckelement mittels der zweiten Schwenkeinrichtung von einer Abdeckposition aus, in welcher es sich auf der Vorderseite über der Öffnung befindet, um diese zumindest teilweise abzudecken, in eine Öffnungsposition schwenkbar ist, in welcher es nach vorne hin von der Vorderseite weggeschwenkt ist.

Beispiel 31 ist ein Selbstbedienungsterminal, aufweisend: ein Gehäuse mit einer einem Benutzer des Selbstbedienungsterminals zugewandten, ersten Seite und einer dem Benutzer des Selbstbedienungsterminals nicht zugewandten, zweiten Seite; eine an dem Gehäuse befestigte und in Richtung zu dem Benutzer des Selbstbedienungsterminals ausgerichtete Anzeige- und/oder Bedienvorrichtung; einen oder mehrere Prozessoren, die eingerichtet sind, eine graphische Anzeige- und/oder Bedienoberfläche auf der Anzeige- und/oder Bedienvorrichtung bereitzustellen, um den Benutzer bei einem Selbstbedienungsprozess am Selbstbedienungsterminal zu unterstützen; wobei das Gehäuse an einer dritten Seite, die an die erste Seite und die zweite Seite angrenzt, an einem zu der zweiten Seite angrenzenden Abschnitt der dritten Seite eine Verbindungselementanschluss-Gehäuse-Aussparung aufweist, durch welche hindurch ein Verbindungselement zum mechanischen Verbinden eines Peripheriegerätes mit dem Selbstbedienungsterminal, optional mit dem Gehäuse, in das Gehäuse hinein hindurchführbar ist, wobei das Selbstbedienungsterminal, optional das Gehäuse, benachbart zu der Verbindungselementanschluss-Gehäuse-Aussparung mit einer zu dem Verbindungselement korrespondierenden Aufnahme ausgebildet ist, an welcher das Verbindungselement befestigbar ist, um damit an dem Selbstbedienungsterminal, optional an dem Gehäuse, befestigbar zu sein.

Beispiel 32 ist das Selbstbedienungsterminal gemäß Beispiel 31, welches ferner das Verbindungselement aufweist.

Beispiel 33 ist eingerichtet gemäß Beispiel 32, wobei das Verbindungselement einen Durchlassraum hat, welcher sich bei an der Aufnahme befestigtem Verbindungselement, von außerhalb des Gehäuses durch die Verbindungselementanschluss-Gehäuse-Aussparung hindurch in das Gehäuse hinein erstreckt, um dadurch zu ermöglichen, eines oder mehrere Anschlusskabel des Peripheriegerätes von außerhalb des Gehäuses über den Durchlassraum durch die Verbindungselementanschluss-Gehäuse-Aussparung hindurch in das Gehäuse hinein zu führen.

Beispiel 34 ist ein Selbstbedienungsterminal gemäß Beispiel 32 oder 33, ferner aufweisend ein mittels des Verbindungselementes mechanisch mit dem Selbstbedienungsterminal, optional mit dem Gehäuse, verbundenes Peripheriegerät.

Beispiel 35 ist eingerichtet gemäß Beispiel 34, wobei das Peripheriegerät eines der folgenden Peripheriegeräte aufweist: einen Drucker, einen (z.B. Barcode-) Scanner, eine Kamera, ein Kartenlesegerät, ein Bediengerät, ein Verifizierungsgerät (z.B. mittels Gesichtserkennung, Fingerabdruckerkennung, etc.), eine Waage, etc.

Beispiel 36 ist ein Selbstbedienungsterminal gemäß Beispiel 34 oder 35, wobei das Peripheriegerät eine erste Gerät-Aussparung, durch welche das Verbindungselement hindurchgeführt ist, an einer ersten Seite des Peripheriegeräts und eine zweite Gerät-Aussparung, durch welche hindurch ein anderes Verbindungselement zum mechanischen Verbinden des Peripheriegerätes mit einem anderen Peripheriegerät hindurchführbar ist, an einer der ersten Seite gegenüberliegenden, zweiten Seite des Peripheriegeräts hat, wobei das Peripheriegerät mit einer zu der ersten Gerät-Aussparung korrespondierenden, ersten Gerät-Aufnahme, an welcher das Verbindungselement befestigt ist, und einer zu der zweiten Gerät-Aussparung korrespondierenden, zweiten Gerät-Aufnahme, an welcher das andere Verbindungselement befestigbar ist, ausgebildet ist, sodass das andere Peripheriegerät mittels des Peripheriegeräts an dem Selbstbedienungsterminal, optional dem Gehäuse, befestigbar ist.

Beispiel 37 ist eingerichtet gemäß Beispiel 34 oder 35, wobei das Peripheriegerät eine von einer ersten Seite zu einer der ersten Seite gegenüberliegenden, zweiten Seite durchgängige Gerät-Aussparung aufweist, durch welche sich das Verbindungselement derart hindurch erstreckt, dass ein Abschnitt des Verbindungselements benachbart zu der zweiten Seite nicht von dem Peripheriegerät bedeckt ist, wobei der Abschnitt des Verbindungselements an einem anderen Peripheriegerät befestigbar ist zum mechanischen Verbinden des anderen Peripheriegerätes mit dem Selbstbedienungsterminal, optional mit dem Gehäuse.

Beispiel 38 ist eingerichtet gemäß einem der Beispiele 31 bis 37, wobei die Verbindungselementanschluss-Gehäuse-Aussparung mit einer Blende versehen ist, die stofflich einstückig, optional mittels einer oder mehreren Sollbruchstellen, mit der dritten Seite des Gehäuses verbunden ist.

Beispiel 39 ist ein Selbstbedienungsterminal gemäß einem der Beispiele 31 bis 38, wobei die Verbindungselementanschluss-Gehäuse-Aussparung Teil einer Gehäuse-Aussparung ist, welche sich ferner in einen zu der dritten Seite angrenzenden Abschnitt der zweiten Seite erstreckt, und wobei das Selbstbedienungsterminal optional ferner ein Abdeckelement aufweist, das eingerichtet ist, lösbar an dem Gehäuse befestigt zu werden, um die Gehäuse-Aussparung zumindest teilweise (z.B. vollständig) abzudecken, wobei das Abdeckelement einen ersten Abschnitt, welcher den sich in die zweite Seite erstreckenden Abschnitt der Gehäuse-Aussparung zumindest teilweise abdeckt, und einen zweiten Abschnitt, welcher die Verbindungselementanschluss-Gehäuse-Aussparung zumindest teilweise abdeckt, aufweist, wobei der erste Abschnitt und der zweite Abschnitt des Abdeckelementes stofflich einstückig mittels einer oder mehreren Sollbruchstellen miteinander verbunden sind.

Beispiel 40 ist eingerichtet gemäß einem der Beispiele 31 bis 39, wobei das Gehäuse an einer der dritten Seite gegenüberliegenden, vierten Seite an einem zu der zweiten Seite angrenzenden Abschnitt der vierten Seite eine andere Verbindungselementanschluss-Gehäuse-Aussparung aufweist, durch welche hindurch ein anderes Verbindungselement zum mechanischen Verbinden eines anderen Peripheriegerätes mit dem Selbstbedienungsterminal, optional mit dem Gehäuse, in das Gehäuse hinein hindurchführbar ist, wobei das Gehäuse benachbart zu der anderen Verbindungselementanschluss-Gehäuse-Aussparung mit einer zu dem anderen Verbindungselement korrespondierenden anderen Aufnahme ausgebildet ist, an welcher das andere Verbindungselement befestigbar ist, um damit an dem Selbstbedienungsterminal, optional an dem Gehäuse befestigbar zu sein.

Beispiel 41 ist das Selbstbedienungsterminal gemäß Beispiel 40, welches ferner das andere Verbindungselement und das andere Peripheriegerät aufweist, wobei das andere Peripheriegerät eine andere erste Gerät-Aussparung, durch welche das andere Verbindungselement hindurchführt, an einer ersten Seite des anderen Peripheriegeräts und eine andere zweite Gerät-Aussparung, durch welche hindurch ein noch anderes Verbindungselement zum mechanischen Verbinden des Peripheriegerätes mit einem noch anderen Peripheriegerät hindurchführbar ist, an einer der ersten Seite gegenüberliegenden, zweiten Seite des anderen Peripheriegeräts aufweist, wobei das andere Peripheriegerät mit einer zu der anderen ersten Gerät-Aussparung korrespondierenden anderen ersten Aufnahme, an welcher das andere Verbindungselement befestigt ist, und einer zu der anderen zweiten Gerät-Aussparung korrespondierenden anderen zweiten Aufnahme, an welcher das noch andere Verbindungselement befestigbar ist, ausgebildet ist, sodass das noch andere Peripheriegerät mittels des anderen Peripheriegeräts an dem Selbstbedienungsterminal, an optional an dem Gehäuse, befestigbar ist.

Beispiel 42 ist das Selbstbedienungsterminal gemäß Beispiel 40, welches ferner das andere Verbindungselement und das andere Peripheriegerät aufweist, wobei das andere Peripheriegerät eine von einer ersten Seite zu einer der ersten Seite gegenüberliegenden, zweiten Seite durchgängige andere Gerät-Aussparung aufweist, durch welche sich das andere Verbindungselement derart hindurch erstreckt, dass ein Abschnitt des anderen Verbindungselements benachbart zu der zweiten Seite nicht von dem anderen Peripheriegerät bedeckt ist, wobei der Abschnitt des anderen Verbindungselements an einem noch anderen Peripheriegerät befestigbar ist zum mechanischen Verbinden des noch anderen Peripheriegerätes mit dem Selbstbedienungsterminal, optional mit dem Gehäuse.

Beispiel 43 ist eingerichtet gemäß einem der Beispiele 31 bis 42, wobei das Gehäuse an der zweiten Seite mit einem ersten Lineareinschubführungsabschnitt und einem zweiten Lineareinschubführungsabschnitt ausgebildet ist, die zueinander parallel verlaufen und damit eine gemeinsame Lineareinschubrichtung definieren und die quer zur Lineareinschubrichtung in einem Abstand voneinander angeordnet sind, und wobei das Gehäuse zwischen den beiden Lineareinschubführungsabschnitten mit wenigstens einer Öffnung zur Durchführung von Anschlusskabeln versehen ist; und wobei das Selbstbedienungsterminal ferner ein Befestigungselement aufweist, das eingerichtet ist, lösbar an einer Basis befestigt zu werden, und das einen ersten und einen zweiten Korrespondenz-Lineareinschubführungsabschnitt aufweist, die zu dem ersten und dem zweiten Lineareinschubführungsabschnitt des Gehäuses korrespondieren, sodass das Gehäuse und das an der Basis befestige Befestigungselement entlang der Lineareinschubrichtung via Lineareinschieben zusammenbaubar sind, um dadurch das Gehäuse über das Befestigungselement an der Basis in lösbarer Weise festzulegen.

Beispiel 44 ist eingerichtet gemäß Beispiel 43, wobei die erste Seite eine Vorderseite des Gehäuses ist und wobei die zweite Seite eine Unterseite des Gehäuses ist.

Beispiel 45 ist eingerichtet gemäß Beispiel 44, wobei das Gehäuse eine der Unterseite gegenüberliegende Oberseite aufweist, wobei sich die Vorderseite zwischen der Unterseite und der Oberseite erstreckt, wobei eine von der Vorderseite definierte Vorderseitenebene in einem Winkel von kleiner gleich 80°, optional kleiner gleich 70°, zu einer von der Unterseite definierten Unterseitenebene verläuft und sich in Richtung zu der Oberseite nach hinten geneigt erstreckt.

Beispiel 46 ist eingerichtet gemäß Beispiel 44 oder 45, wobei das Befestigungselement eine Befestigungselement-Aussparung aufweist, die, wenn das Gehäuse über das Befestigungselement an der Basis in lösbarer Weise festgelegt ist, einer der Vorderseite gegenüberliegenden Rückseite des Gehäuses zugewandt ist, sodass die Anschlusskabel durch die Befestigungselement-Aussparung hindurch in eine zu der Befestigungselement-Aussparung korrespondieren Basis-Öffnung der Basis hinein und/oder durch die Befestigungselement-Aussparung und eine an einem zu der Unterseite angrenzenden Abschnitt der Rückseite ausgebildete Rückseiten-Aussparung (z.B. als Teil der Gehäuse-Aussparung, wenn in Kombination mit Beispiel 39) hindurch hindurchführbar sind, um dadurch aus dem Gehäuse hinausgeführt zu werden.

Beispiel 47 ist eingerichtet gemäß Beispiel 44 oder 45, wobei das Befestigungselement eine Befestigungselement-Öffnung hat, sodass die Anschlusskabel durch die Befestigungselement-Öffnung hindurch in eine zu der Befestigungselement-Öffnung korrespondierende Basis-Öffnung der Basis hindurchführbar sind.

Beispiel 48 ist ein Selbstbedienungsterminal gemäß einem der Beispiele 44 bis 46, wobei das Gehäuse eine der Vorderseite gegenüberliegende Rückseite aufweist, wobei der erste Lineareinschubführungsabschnitt und der zweite Lineareinschubführungsabschnitt des Gehäuses an der Unterseite in einem zu der Vorderseite angrenzenden Abschnitt und nicht in einem zu der Rückseite angrenzenden Abschnitt ausgebildet sind.

Beispiel 49 ist ein Selbstbedienungsterminal gemäß einem der Beispiele 31 bis 48, wobei das Gehäuse eine der Vorderseite gegenüberliegende Rückseite aufweist, welche einem anderen Benutzer des Selbstbedienungsterminals (z.B. einem anderen Kunden oder einem Bediensteten) zugewandt ist, und wobei das Selbstbedienungsterminal ferner eine an dem Gehäuse befestigte und in Richtung zu dem anderen Benutzer des Selbstbedienungsterminals ausgerichtete andere Anzeige- und/oder Bedienvorrichtung aufweist. Die ein oder mehreren Prozessoren können zum Beispiel eingerichtet sein, eine graphische Anzeige- und/oder Bedienoberfläche auf der anderen Anzeige- und/oder Bedienvorrichtung bereitzustellen (um den anderen Benutzer bei einem Selbstbedienungsprozess am Selbstbedienungsterminal zu unterstützen und/oder um einen Bediensteten als anderen Benutzer zu ermöglichen, den Benutzer bei dem Selbstbedienungsprozess am Selbstbedienungsterminal zu unterstützen). Optional kann das Selbstbedienungsterminal zusätzliche Peripheriegeräte an der Rückseite aufweisen, wie beispielsweise eine andere Scanner-Einheit (die dem anderen Benutzer zugewandt ist).

Beispiel 50 ist eingerichtet gemäß Beispiel 43, wobei die erste Seite eine Vorderseite des Gehäuses ist und wobei die zweite Seite eine der Vorderseite gegenüberliegende Rückseite des Gehäuses ist.

Beispiel 51 ist eingerichtet gemäß Beispiel 50, wobei die dritte Seite eine Unterseite des Gehäuses ist.

Beispiel 52 ist ein Selbstbedienungsterminal gemäß einem der Beispiele 31 bis 51, wobei die Anzeige- und/oder Bedienvorrichtung ein Touchscreen aufweist.

Beispiel 53 ist ein Selbstbedienungsterminal, aufweisend: ein Gehäuse mit einer einem Benutzer des Selbstbedienungsterminals zugewandten, ersten Seite (z.B. Vorderseite) und einer der ersten Seite gegenüberliegenden, zweiten Seite (z.B. Rückseite); eine an dem Gehäuse befestigte und in Richtung zu dem Benutzer ausgerichtete Anzeige- und/oder Bedienvorrichtung; einen oder mehrere Prozessoren, die eingerichtet sind, eine graphische Anzeige- und/oder Bedienoberfläche auf der Anzeige- und/oder Bedienvorrichtung bereitzustellen, um den Benutzer bei einem Selbstbedienungsprozess am Selbstbedienungsterminal zu unterstützen; mehrere Anschlussplätze innerhalb des Gehäuses zum Anschließen elektrischer Geräte; wobei das Gehäuse an einer dritten Seite, die sich zwischen der ersten Seite und der zweiten Seite erstreckt, an einem zu der zweiten Seite angrenzenden Abschnitt der dritten Seite eine Gehäuse-Aussparung aufweist, durch welche hindurch mindestens ein Anschlusskabel hindurchführbar ist zum Anschließen eines außerhalb des Gehäuses angeordneten Peripheriegerätes an mindestens einen Anschlussplatz der mehreren Anschlussplätze; mindestens eine Kabelführung zum Führen des mindestens einen Anschlusskabels, wobei die mindestens eine Kabelführung in dem Gehäuse zwischen den mehreren Anschlussplätzen und der Gehäuse-Aussparung angeordnet und mechanisch mit der zweiten Seite des Gehäuses verbunden ist.

Beispiel 54 ist das Selbstbedienungsterminal gemäß Beispiel 53, ferner aufweisend: eine Abdeckklappe zum zumindest teilweisen Abdecken des in der mindestens einen Kabelführung geführten mindestens einen Anschlusskabels; eine Schwenkeinrichtung, mittels derer die Abdeckklappe schwenkbar an dem Gehäuse angebracht ist und die eine Schwenkachse definiert, welche sich in einer Richtung erstreckt, die parallel oder in einem Winkel von kleiner gleich 30°, optional kleiner gleich 10°, oder ferner optional kleiner gleich 5°, zu einer von der ersten Seite definierten Erste-Seite-Ebene verläuft, sodass die Abdeckklappe mittels der Schwenkeinrichtung von einer Abdeckposition, in welcher die mindestens eine Kabelführung aus Richtung der ersten Seite zumindest teilweise abgedeckt sind, in eine Aufdeckposition, in welcher die die mindestens eine Kabelführung aus Richtung der ersten Seite nicht abgedeckt sind, schwenkbar ist.

Beispiel 55 ist eingerichtet gemäß Beispiel 53 oder 54, wobei die erste Seite eine Vorderseite ist, die sich zwischen einer Oberseite und einer Unterseite des Gehäuses erstreckt, wobei die mehreren Anschlussplätze zu der Oberseite näher gelegen sind als zu der Unterseite.

Beispiel 56 ist ein Selbstbedienungsterminal gemäß einem der Beispiele 53 bis 55, ferner aufweisend mehrere Kabelführungen benachbart zu der mindestens einen Kabelführung zum Führen von Anschlusskabeln von den Anschlussplätzen durch eine andere Gehäuse-Aussparung in dem Gehäuse hindurch aus dem Gehäuse hinaus.

Beispiel 57 ist eingerichtet gemäß einem der Beispiele 53 bis 56, wobei die Gehäuse-Aussparung derart eingerichtet ist, dass durch diese hindurch ein Verbindungselement zum mechanischen Verbinden des Peripheriegerätes mit dem Selbstbedienungsterminal, optional mit dem Gehäuse, in das Gehäuse hinein hindurchführbar ist, wobei das Selbstbedienungsterminal, optional das Gehäuse, benachbart zu der Gehäuse-Aussparung mit einer zu dem Verbindungselement korrespondierenden Aufnahme ausgebildet ist, an welcher das Verbindungselement befestigbar ist, um damit an dem Selbstbedienungsterminal, optional an dem Gehäuse, befestigbar zu sein; und wobei das Verbindungselement einen Durchlassraum hat, welcher sich bei an der Aufnahme befestigtem Verbindungselement, von außerhalb des Gehäuses durch die Gehäuse-Aussparung hindurch in das Gehäuse hinein erstreckt, um dadurch zu ermöglichen, das mindestens eine Anschlusskabel des Peripheriegerätes von außerhalb des Gehäuses über den Durchlassraum durch die Gehäuse-Aussparung hindurch in das Gehäuse hinein zu führen.

Beispiel 58 ist das Selbstbedienungsterminal gemäß Beispiel 57, ferner aufweisend das Verbindungselement.

Beispiel 59 ist das Selbstbedienungsterminal gemäß Beispiel 57 oder 58, ferner aufweisend ein mittels des Verbindungselementes mechanisch mit dem Selbstbedienungsterminal, optional mit dem Gehäuse, verbundenes Peripheriegerät.

Beispiel 60 ist eingerichtet gemäß Beispiel 59, wobei das Peripheriegerät eines der folgenden Peripheriegeräte aufweist: einen Drucker, einen (z.B. Barcode-) Scanner, eine Kamera, ein Kartenlesegerät, ein Bediengerät, ein Verifizierungsgerät (z.B. mittels Gesichtserkennung, Fingerabdruckerkennung, etc.), eine Waage, etc.

Beispiel 61 ist ein Selbstbedienungsterminal gemäß Beispiel 59 oder 60, wobei das Peripheriegerät eine erste Gerät-Aussparung, durch welche das Verbindungselement hindurchführt, an einer ersten Seite des Peripheriegeräts und eine zweite Gerät-Aussparung, durch welche hindurch ein anderes Verbindungselement zum mechanischen Verbinden des Peripheriegerätes mit einem anderen Peripheriegerät hindurchführbar ist, an einer der ersten Seite gegenüberliegenden zweiten Seite des Peripheriegeräts hat, wobei das Peripheriegerät mit einer zu der ersten Gerät-Aussparung korrespondierenden, ersten Aufnahme, an welcher das Verbindungselement befestigt ist, und einer zu der zweiten Gerät-Aussparung korrespondierenden zweiten Aufnahme, an welcher das andere Verbindungselement befestigbar ist, ausgebildet ist, sodass das andere Peripheriegerät mittels des Peripheriegeräts an dem Selbstbedienungsterminal, optional an dem Gehäuse, befestigbar ist.

Beispiel 62 ist eingerichtet gemäß Beispiel 59 oder 60, wobei das Peripheriegerät eine von einer ersten Seite zu einer der ersten Seite gegenüberliegenden, zweiten Seite durchgängige Gerät-Aussparung hat, durch welche sich das Verbindungselement derart hindurch erstreckt, dass ein Abschnitt des Verbindungselements benachbart zu der zweiten Seite nicht von dem Peripheriegerät bedeckt ist, wobei der Abschnitt des Verbindungselements an einem anderen Peripheriegerät befestigbar ist zum mechanischen Verbinden des anderen Peripheriegerätes mit dem Selbstbedienungsterminal, optional mit dem Gehäuse.

Beispiel 63 ist eingerichtet gemäß einem der Beispiele 53 bis 62, wobei die Gehäuse-Aussparung mit einer Blende versehen ist, die stofflich einstückig, optional mittels einer oder mehreren Sollbruchstellen, mit dem Gehäuse verbunden ist.

Beispiel 64 ist ein Selbstbedienungsterminal gemäß einem der Beispiele 53 bis 62 wobei die zweite Seite der ersten Seite gegenüberliegt, wobei sich die Gehäuse-Aussparung ferner in einen zu der dritten Seite angrenzenden Abschnitt der zweiten Seite erstreckt und wobei das Selbstbedienungsterminal optional ferner ein Abdeckelement aufweist, das eingerichtet ist, lösbar an dem Gehäuse befestigt zu werden, um die Gehäuse-Aussparung zumindest teilweise (z.B. vollständig) abzudecken, wobei das Abdeckelement einen ersten Abschnitt, welcher den sich in die zweite Seite erstreckenden Abschnitt der Gehäuse-Aussparung zumindest teilweise abdeckt, und einen zweiten Abschnitt, welcher den sich in die dritte Seite erstreckenden Abschnitt der Gehäuse-Aussparung zumindest teilweise abdeckt, aufweist, wobei der erste Abschnitt und der zweite Abschnitt des Abdeckelementes stofflich einstückig mittels einer oder mehreren Sollbruchstellen miteinander verbunden sind.

Beispiel 65 ist eingerichtet gemäß einem der Beispiele 53 bis 64, wobei das Gehäuse an einer der dritten Seite gegenüberliegenden, vierten Seite an einem zu der zweiten Seite angrenzenden Abschnitt der vierten Seite eine andere Gehäuse-Aussparung aufweist oder wobei sich die Gehäuse-Aussparung ferner in den zu der zweiten Seite angrenzenden Abschnitt der vierten Seite erstreckt, wobei durch die andere Gehäuse-Aussparung bzw. die Gehäuse-Aussparung hindurch ein anderes Verbindungselement zum mechanischen Verbinden eines anderen Peripheriegerätes mit dem Selbstbedienungsterminal, optional mit dem Gehäuse, in das Gehäuse hinein hindurchführbar ist, wobei das Selbstbedienungsterminal, optional das Gehäuse, benachbart zu der anderen Gehäuse-Aussparung bzw. der Gehäuse-Aussparung mit einer zu dem anderen Verbindungselement korrespondierenden anderen Aufnahme ausgebildet ist, an welcher das andere Verbindungselement befestigbar ist, um damit an dem Selbstbedienungsterminal, optional an dem Gehäuse, befestigbar zu sein.

Beispiel 66 ist das Selbstbedienungsterminal gemäß Beispiel 65, welches ferner das andere Verbindungselement und das andere Peripheriegerät aufweist, wobei das andere Peripheriegerät eine andere erste Gerät-Aussparung, durch welche das andere Verbindungselement hindurchführt, an einer ersten Seite des anderen Peripheriegeräts und eine andere zweite Gerät-Aussparung, durch welche hindurch ein noch anderes Verbindungselement zum mechanischen Verbinden des Peripheriegerätes mit einem noch anderen Peripheriegerät hindurchführbar ist, an einer der ersten Seite gegenüberliegenden, zweiten Seite des anderen Peripheriegeräts aufweist, wobei das andere Peripheriegerät mit einer zu der anderen ersten Gerät-Aussparung korrespondierenden anderen ersten Aufnahme, an welcher das andere Verbindungselement befestigt ist, und einer zu der anderen zweiten Gerät-Aussparung korrespondierenden anderen zweiten Aufnahme, an welcher das noch andere Verbindungselement befestigbar ist, ausgebildet ist, sodass das noch andere Peripheriegerät mittels des anderen Peripheriegeräts an dem Selbstbedienungsterminal, an optional an dem Gehäuse, befestigbar ist.

Beispiel 67 ist das Selbstbedienungsterminal gemäß Beispiel 65, welches ferner das andere Verbindungselement und das andere Peripheriegerät aufweist, wobei das andere Peripheriegerät eine von einer ersten Seite zu einer der ersten Seite gegenüberliegenden, zweiten Seite durchgängige andere Gerät-Aussparung aufweist, durch welche sich das andere Verbindungselement derart hindurch erstreckt, dass ein Abschnitt des anderen Verbindungselements benachbart zu der zweiten Seite nicht von dem anderen Peripheriegerät bedeckt ist, wobei der Abschnitt des anderen Verbindungselements an einem noch anderen Peripheriegerät befestigbar ist zum mechanischen Verbinden des noch anderen Peripheriegerätes mit dem Selbstbedienungsterminal, optional mit dem Gehäuse.

Beispiel 68 ist eingerichtet gemäß einem der Beispiele 53 bis 67, wobei das Gehäuse an der zweiten Seite mit einem ersten Lineareinschubführungsabschnitt und einem zweiten Lineareinschubführungsabschnitt ausgebildet ist, die zueinander parallel verlaufen und damit eine gemeinsame Lineareinschubrichtung definieren und die quer zur Lineareinschubrichtung in einem Abstand voneinander angeordnet sind, und wobei das Gehäuse zwischen den beiden Lineareinschubführungsabschnitten mit wenigstens einer Öffnung zur Durchführung von Anschlusskabeln versehen ist; und wobei das Selbstbedienungsterminal ferner ein Befestigungselement aufweist, das eingerichtet ist, lösbar an einer Basis befestigt zu werden, und das einen ersten und einen zweiten Korrespondenz-Lineareinschubführungsabschnitt aufweist, die zu dem ersten und dem zweiten Lineareinschubführungsabschnitt des Gehäuses korrespondieren, sodass das Gehäuse und das an der Basis befestige Befestigungselement entlang der Lineareinschubrichtung via Lineareinschieben zusammenbaubar sind, um dadurch das Gehäuse über das Befestigungselement an der Basis in lösbarer Weise festzulegen.

Beispiel 69 ist eingerichtet gemäß Beispiel 68, wobei die erste Seite eine Vorderseite des Gehäuses ist und wobei die zweite Seite eine Unterseite des Gehäuses ist.

Beispiel 70 ist eingerichtet gemäß Beispiel 69, wobei das Gehäuse eine der Unterseite gegenüberliegende Oberseite aufweist, wobei sich die Vorderseite zwischen der Unterseite und der Oberseite erstreckt, wobei eine von der Vorderseite definierte Vorderseitenebene in einem Winkel von kleiner gleich 80°, optional kleiner gleich 70°, zu einer von der Unterseite definierten Unterseitenfläche verläuft und sich in Richtung zu der Oberseite nach hinten geneigt erstreckt.

Beispiel 71 ist eingerichtet gemäß Beispiel 69 oder 70, wobei das Befestigungselement eine Befestigungselement-Aussparung aufweist, die, wenn das Gehäuse über das Befestigungselement an der Basis in lösbarer Weise festgelegt ist, einer der Vorderseite gegenüberliegenden Rückseite des Gehäuses zugewandt ist, sodass die Anschlusskabel durch die Befestigungselement-Aussparung hindurch in eine zu der Befestigungselement-Aussparung korrespondieren Basis-Öffnung der Basis hinein und/oder durch die Befestigungselement-Aussparung und den zu der dritten Seite angrenzenden Abschnitt der Gehäuse-Aussparung hindurch hindurchführbar sind, um dadurch aus dem Gehäuse hinausgeführt zu werden.

Beispiel 72 ist eingerichtet gemäß einem der Beispiele 69 bis 71, wobei das Gehäuse eine der Vorderseite gegenüberliegende Rückseite aufweist, wobei der erste Lineareinschubführungsabschnitt und der zweite Lineareinschubführungsabschnitt des Gehäuses an der Unterseite in einem zu der Vorderseite angrenzenden Abschnitt und nicht in einem zu der Rückseite angrenzenden Abschnitt ausgebildet sind.

Beispiel 73 ist ein Selbstbedienungsterminal gemäß einem der Beispiele 69 bis 72, wobei das Befestigungselement eine Befestigungselement-Öffnung aufweist, sodass die Anschlusskabel durch die Befestigungselement-Öffnung hindurch in eine zu der Befestigungselement-Öffnung des Befestigungselements korrespondierende Basis-Öffnung der Basis hindurchführbar sind.

Beispiel 74 ist ein Selbstbedienungsterminal gemäß einem der Beispiele 69 bis 73, wobei das Gehäuse eine der Vorderseite gegenüberliegende Rückseite aufweist, welche einem anderen Benutzer des Selbstbedienungsterminals (z.B. einem anderen Kunden oder einem Bediensteten) zugewandt ist, und wobei das Selbstbedienungsterminal ferner eine an dem Gehäuse befestigte und in Richtung zu dem anderen Benutzer des Selbstbedienungsterminals ausgerichtete andere Anzeige- und/oder Bedienvorrichtung aufweist. Die ein oder mehreren Prozessoren können zum Beispiel eingerichtet sein, eine graphische Anzeige- und/oder Bedienoberfläche auf der anderen Anzeige- und/oder Bedienvorrichtung bereitzustellen (um den anderen Benutzer bei einem Selbstbedienungsprozess am Selbstbedienungsterminal zu unterstützen und/oder um einen Bediensteten als anderen Benutzer zu ermöglichen, den Benutzer bei dem Selbstbedienungsprozess am Selbstbedienungsterminal zu unterstützen). Optional kann das Selbstbedienungsterminal zusätzliche Peripheriegeräte an der Rückseite aufweisen, wie beispielsweise eine andere Scanner-Einheit (die dem anderen Benutzer zugewandt ist).

Beispiel 75 ist eingerichtet gemäß Beispiel 68, wobei die erste Seite eine Vorderseite des Gehäuses ist und wobei die zweite Seite eine der Vorderseite gegenüberliegende Rückseite des Gehäuses ist.

Beispiel 76 ist eingerichtet gemäß Beispiel 75, wobei die dritte Seite eine Unterseite des Gehäuses ist.

Beispiel 77 ist ein Selbstbedienungsterminal gemäß einem der Beispiele 53 bis 76, wobei die Anzeige- und/oder Bedienvorrichtung ein Touchscreen aufweist.

Beispiel 78 ist ein Selbstbedienungsterminal, aufweisend: ein Gehäuse mit einer Oberseite, einer Unterseite und einer sich zwischen der Oberseite und der Unterseite erstreckenden Vorderseite, die einem Benutzer des Selbstbedienungsterminals zugewandt ist und eine Vorderseitenebene definiert, wobei das Gehäuse eine sich durch die Oberseite und die Unterseite verlaufende Hochachse definiert, und wobei das Gehäuse auf der Vorderseite mit einer Gehäuse-Öffnung versehen ist; eine Anzeige- und/oder Bedienvorrichtung; eine erste Schwenkeinrichtung, mittels derer die Anzeige- und/oder Bedienvorrichtung schwenkbar an dem Gehäuse angebracht ist und die eine erste Schwenkachse definiert, welche sich in einer Richtung erstreckt, die parallel oder in einem Winkel von kleiner gleich 30°, optional kleiner gleich 10°, oder ferner optional kleiner gleich 5°, zur Vorderseitenebene sowie parallel oder in einem Winkel von kleiner gleich 30°, optional kleiner gleich 10°, oder ferner optional kleiner gleich 5°, zur Hochachse verläuft, sodass die Anzeige- und/oder Bedienvorrichtung mittels der ersten Schwenkeinrichtung von einer Arbeitsposition aus, in welcher sie sich auf der Vorderseite des Gehäuses befindet, in eine Ausschwenkposition schwenkbar ist, in welcher sie zu einer Lateralseite des Gehäuses hin weggeschwenkt ist; ein Vorderseiten-Abdeckelement; eine zweite Schwenkeinrichtung, mittels derer das Vorderseiten-Abdeckelement schwenkbar an dem Gehäuse angebracht ist und die eine zweite Schwenkachse definiert, die sich quer zur ersten Schwenkachse sowie parallel oder in einem Winkel von kleiner gleich 30°, optional kleiner gleich 10°, oder ferner optional kleiner gleich 5°, zur Vorderseitenebene verläuft, sodass das Vorderseiten-Abdeckelement mittels der zweiten Schwenkeinrichtung von einer Abdeckposition aus, in welcher es sich auf der Vorderseite über der Gehäuse-Öffnung befindet, um diese zumindest teilweise abzudecken, in eine Öffnungsposition schwenkbar ist, in welcher es nach vorne hin von der Vorderseite weggeschwenkt ist.

Beispiel 79 ist eingerichtet gemäß Beispiel 78, wobei die Anzeige- und/oder Bedienvorrichtung und das Vorderseiten-Abdeckelement derart eingerichtet sind, dass die Anzeige- und/oder Bedienvorrichtung in der Arbeitsposition ein Wegschwenken des Vorderseiten-Abdeckelements von der Abdeckposition aus in die Öffnungsposition blockiert und dass die Anzeige- und/oder Bedienvorrichtung in der Ausschwenkposition ein Wegschwenken des Vorderseiten-Abdeckelements von der Abdeckposition aus in die Öffnungsposition nicht blockiert.

Beispiel 80 ist ein Selbstbedienungsterminal gemäß Beispiel 78 oder 79, wobei die erste Schwenkeinrichtung zu der Oberseite näher gelegen ist als zu der Unterseite.

Beispiel 81 ist eingerichtet gemäß einem der Beispiele 78 bis 80, wobei die zweite Schwenkeinrichtung zu der Unterseite näher gelegen ist als zu der Oberseite.

Beispiel 82 ist ein Selbstbedienungsterminal gemäß einem der Beispiele 78 bis 81, ferner aufweisend: eine mit dem Vorderseiten-Abdeckelement mechanisch verbundene und sich durch eine Öffnung des Vorderseiten-Abdeckelements erstreckende Scanner-Einheit, um, wenn das Vorderseiten-Abdeckelement in der Abdeckposition ist, dem Benutzer bei dem Selbstbedienungsprozess am Selbstbedienungsterminal ein Scannen von Barcodes zu ermöglichen.

Beispiel 83 ist ein Selbstbedienungsterminal gemäß Beispiel 82, ferner aufweisend: eine mit dem Vorderseiten-Abdeckelement mechanisch verbundene Antenneneinheit, welche die Scanner-Einheit zumindest teilweise (z.B. vollständig) umgibt, um, wenn das Vorderseiten-Abdeckelement in der Abdeckposition ist, dem Benutzer bei dem Selbstbedienungsprozess am Selbstbedienungsterminal ein Erfassen und/oder Entwerten von radiofrequenten, elektromagnetischen, akustomagnetischen und/oder Radiofrequenzidentifikations-(RFID)-Etiketten zu ermöglichen (z.B. für ein Elektronisches Artikelsicherungssystem (EAS).

Beispiel 84 ist eingerichtet gemäß Beispiel 83, wobei die Scanner-Einheit und/oder die Antenneneinheit nicht über eine von einer Vorderseite des Vorderseiten-Abdeckelementes definierte Vorderseitenebene (in Richtung des Benutzers) hinausragt.

Beispiel 85 ist das Selbstbedienungsterminal gemäß einem der Beispiele 78 bis 84, ferner aufweisend: eine oder mehrere Kabelführungen in dem Gehäuse in einem dem Vorderseiten-Abdeckelement gegenüberliegenden Abschnitt des Gehäuses; eine Abdeckklappe zum zumindest teilweisen Abdecken der ein oder mehreren Kabelführungen (und von durch die ein oder mehreren Kabelführungen geführten Anschlusskabeln); und eine dritte Schwenkeinrichtung, mittels derer die Abdeckklappe schwenkbar an dem Gehäuse angebracht ist und die eine dritte Schwenkachse definiert, welche sich in einer Richtung erstreckt, die parallel oder in einem Winkel von kleiner gleich 30°, optional kleiner gleich 10°, oder ferner optional kleiner gleich 5°, zur Vorderseitenebene sowie parallel oder in einem Winkel von kleiner gleich 30°, optional kleiner gleich 10°, oder ferner optional kleiner gleich 5°, zur Hochachse verläuft, sodass die Abdeckklappe mittels der dritten Schwenkeinrichtung von einer Abdeckposition, in welcher die ein oder mehreren Kabelführungen aus Richtung des Vorderseiten-Abdeckelementes zumindest teilweise abgedeckt sind, in eine Aufdeckposition, in welcher die ein oder mehreren Kabelführungen aus Richtung des Vorderseiten-Abdeckelementes nicht abgedeckt sind, schwenkbar ist.

Beispiel 86 ist das Selbstbedienungsterminal gemäß einem der Beispiele 78 bis 85, ferner aufweisend: mehrere Anschlussplätze innerhalb des Gehäuses zum Anschließen elektrischer Geräte; wobei das Gehäuse an einer dritten Seite, die sich zwischen der Vorderseite und einer der Vorderseite gegenüberliegenden Rückseite erstreckt, an einem zu der Rückseite angrenzenden Abschnitt der dritten Seite eine Gehäuse-Aussparung hat, durch welche hindurch mindestens ein Anschlusskabel hindurchführbar ist zum Anschließen eines außerhalb des Gehäuses angeordneten Peripheriegerätes an mindestens einen Anschlussplatz der mehreren Anschlussplätze; mindestens eine Kabelführung (z.B. der ein oder mehreren Kabelführungen, wenn in Verbindung mit Beispiel 85) zum Führen des mindestens einen Anschlusskabels, wobei die mindestens eine Kabelführung in dem Gehäuse zwischen den mehreren Anschlussplätzen und der Gehäuse-Aussparung des Gehäuses angeordnet und mechanisch mit der Rückseite des Gehäuses verbunden ist.

Beispiel 87 ist eingerichtet gemäß Beispiel 86, wobei die mehreren Anschlussplätze zu der Oberseite näher gelegen sind als zu der Unterseite.

Beispiel 88 ist ein Selbstbedienungsterminal gemäß Beispiel 86 oder 87, ferner aufweisend mehrere Kabelführungen benachbart zu der mindestens einen Kabelführung zum Führen von Anschlusskabeln von den Anschlussplätzen durch eine andere Gehäuse-Aussparung in dem Gehäuse hindurch aus dem Gehäuse hinaus.

Beispiel 89 ist eingerichtet gemäß einem der Beispiele 86 bis 88, wobei die Gehäuse-Aussparung derart eingerichtet ist, dass durch diese hindurch ein Verbindungselement zum mechanischen Verbinden des Peripheriegerätes mit dem Selbstbedienungsterminal, optional mit dem Gehäuse, in das Gehäuse hinein hindurchführbar ist, wobei Selbstbedienungsterminal, optional das Gehäuse, benachbart zu der Gehäuse-Aussparung mit einer zu dem Verbindungselement korrespondierenden Aufnahme ausgebildet ist, an welcher das Verbindungselement befestigbar ist, um damit an dem Selbstbedienungsterminal, optional an dem Gehäuse, befestigbar zu sein; und wobei das Verbindungselement einen Durchlassraum hat, welcher sich bei an der Aufnahme befestigtem Verbindungselement, von außerhalb des Gehäuses durch die Gehäuse-Aussparung hindurch in das Gehäuse hinein erstreckt, um dadurch zu ermöglichen, das mindestens eine Anschlusskabel des Peripheriegerätes von außerhalb des Gehäuses über den Durchlassraum durch die Gehäuse-Aussparung hindurch in das Gehäuse hinein zu führen.

Beispiel 90 ist das Selbstbedienungsterminal gemäß Beispiel 89, ferner aufweisend das Verbindungselement.

Beispiel 91 ist das Selbstbedienungsterminal gemäß Beispiel 90, ferner aufweisend ein mittels des Verbindungselementes mechanisch mit dem Selbstbedienungsterminal, optional mit dem Gehäuse, verbundenes Peripheriegerät.

Beispiel 92 ist eingerichtet gemäß Beispiel 91, wobei das Peripheriegerät eines der folgenden Peripheriegeräte aufweist: einen Drucker, einen (z.B. Barcode-) Scanner, eine Kamera, ein Kartenlesegerät, ein Bediengerät, ein Verifizierungsgerät (z.B. mittels Gesichtserkennung, Fingerabdruckerkennung, etc.), eine Waage, etc.

Beispiel 93 ist ein Selbstbedienungsterminal gemäß Beispiel 91 oder 92, wobei das Peripheriegerät eine erste Gerät-Aussparung, durch welche das Verbindungselement hindurchführt, an einer ersten Seite des Peripheriegeräts und eine zweite Gerät-Aussparung, durch welche hindurch ein anderes Verbindungselement zum mechanischen Verbinden des Peripheriegerätes mit einem anderen Peripheriegerät hindurchführbar ist, an einer der ersten Seite gegenüberliegenden zweiten Seite des Peripheriegeräts aufweist, wobei das Peripheriegerät mit einer zu der ersten Gerät-Aussparung korrespondierenden, ersten Gerät-Aufnahme, an welcher das Verbindungselement befestigt ist, und einer zu der zweiten Gerät-Aussparung korrespondierenden, zweiten Gerät-Aufnahme, an welcher das andere Verbindungselement befestigbar ist, ausgebildet ist, sodass das andere Peripheriegerät mittels des Peripheriegeräts an dem Selbstbedienungsterminal, optional an dem Gehäuse, befestigbar ist.

Beispiel 94 ist eingerichtet gemäß Beispiel 91 oder 92, wobei das Peripheriegerät eine von einer ersten Seite zu einer der ersten Seite gegenüberliegenden zweiten Seite durchgängige Gerät-Aussparung aufweist, durch welche sich das Verbindungselement derart hindurch erstreckt, dass ein Abschnitt des Verbindungselements benachbart zu der zweiten Seite nicht von dem Peripheriegerät bedeckt ist, wobei der Abschnitt des Verbindungselements an einem anderen Peripheriegerät befestigbar ist zum mechanischen Verbinden des anderen Peripheriegerätes mit dem Selbstbedienungsterminal, optional mit dem Gehäuse.

Beispiel 95 ist eingerichtet gemäß einem der Beispiele 86 bis 94, wobei die Gehäuse-Aussparung mit einer Blende versehen ist, die stofflich einstückig, optional mittels einer oder mehreren Sollbruchstellen, mit der dritten Seite des Gehäuse verbunden ist.

Beispiel 96 ist ein Selbstbedienungsterminal gemäß einem der Beispiele 86 bis 95, wobei sich die Gehäuse-Aussparung ferner in einen zu der dritten Seite angrenzenden Abschnitt einer der Vorderseite gegenüberliegenden Rückseite erstreckt und wobei das Selbstbedienungsterminal ferner ein Abdeckelement aufweist, das eingerichtet ist, lösbar an dem Gehäuse befestigt zu werden, um die Gehäuse-Aussparung zumindest teilweise (z.B. vollständig) abzudecken, wobei das Abdeckelement optional einen ersten Abschnitt, welcher den sich in die Rückseite erstreckenden Abschnitt der Gehäuse-Aussparung zumindest teilweise abdeckt, und einen zweiten Abschnitt, welcher den sich in die dritte Seite erstreckenden Abschnitt der Gehäuse-Aussparung zumindest teilweise abdeckt, aufweist, wobei der erste Abschnitt und der zweite Abschnitt des Abdeckelementes stofflich einstückig mittels einer oder mehreren Sollbruchstellen miteinander verbunden sind.

Beispiel 97 ist eingerichtet gemäß einem der Beispiele 86 bis 96, wobei das Gehäuse an einer der dritten Seite gegenüberliegenden, vierten Seite an einem zu der zweiten Seite angrenzenden Abschnitt der vierten Seite eine andere Gehäuse-Aussparung aufweist oder wobei sich die Gehäuse-Aussparung ferner in den zu der zweiten Seite angrenzenden Abschnitt der vierten Seite erstreckt, wobei durch die andere Gehäuse-Aussparung bzw. die Gehäuse-Aussparung hindurch ein anderes Verbindungselement zum mechanischen Verbinden eines anderen Peripheriegerätes mit dem Selbstbedienungsterminal, optional mit dem Gehäuse, in das Gehäuse hinein hindurchführbar ist, wobei das Selbstbedienungsterminal, optional das Gehäuse, benachbart zu der anderen Gehäuse-Aussparung bzw. der Gehäuse-Aussparung mit einer zu dem anderen Verbindungselement korrespondierenden anderen Aufnahme ausgebildet ist, an welcher das andere Verbindungselement befestigbar ist, um damit an dem Selbstbedienungsterminal, optional an dem Gehäuse, befestigbar zu sein.

Beispiel 98 ist das Selbstbedienungsterminal gemäß Beispiel 97, welches ferner das andere Verbindungselement und das andere Peripheriegerät aufweist, wobei das andere Peripheriegerät eine andere erste Gerät-Aussparung, durch welche das andere Verbindungselement hindurchführt, an einer ersten Seite des anderen Peripheriegeräts und eine andere zweite Gerät-Aussparung, durch welche hindurch ein noch anderes Verbindungselement zum mechanischen Verbinden des Peripheriegerätes mit einem noch anderen Peripheriegerät hindurchführbar ist, an einer der ersten Seite gegenüberliegenden, zweiten Seite des anderen Peripheriegeräts aufweist, wobei das andere Peripheriegerät mit einer zu der anderen ersten Gerät-Aussparung korrespondierenden anderen ersten Aufnahme, an welcher das andere Verbindungselement befestigt ist, und einer zu der anderen zweiten Gerät-Aussparung korrespondierenden anderen zweiten Aufnahme, an welcher das noch andere Verbindungselement befestigbar ist, ausgebildet ist, sodass das noch andere Peripheriegerät mittels des anderen Peripheriegeräts an dem Selbstbedienungsterminal, an optional an dem Gehäuse, befestigbar ist.

Beispiel 99 ist das Selbstbedienungsterminal gemäß Beispiel 97, welches ferner das andere Verbindungselement und das andere Peripheriegerät aufweist, wobei das andere Peripheriegerät eine von einer ersten Seite zu einer der ersten Seite gegenüberliegenden, zweiten Seite durchgängige andere Gerät-Aussparung aufweist, durch welche sich das andere Verbindungselement derart hindurch erstreckt, dass ein Abschnitt des anderen Verbindungselements benachbart zu der zweiten Seite nicht von dem anderen Peripheriegerät bedeckt ist, wobei der Abschnitt des anderen Verbindungselements an einem noch anderen Peripheriegerät befestigbar ist zum mechanischen Verbinden des noch anderen Peripheriegerätes mit dem Selbstbedienungsterminal, optional mit dem Gehäuse.

Beispiel 100 ist eingerichtet gemäß einem der Beispiele 78 bis 99, wobei das Gehäuse an der Unterseite oder einer der Vorderseite gegenüberliegenden Rückseite mit einem ersten Lineareinschubführungsabschnitt und einem zweiten Lineareinschubführungsabschnitt ausgebildet ist, die zueinander parallel verlaufen und damit eine gemeinsame Lineareinschubrichtung definieren und die quer zur Lineareinschubrichtung in einem Abstand voneinander angeordnet sind, und wobei das Gehäuse zwischen den beiden Lineareinschubführungsabschnitten mit wenigstens einer Öffnung zur Durchführung von Anschlusskabeln versehen ist; und wobei das Selbstbedienungsterminal ferner ein Befestigungselement aufweist, das eingerichtet ist, lösbar an einer Basis befestigt zu werden, und das einen ersten und einen zweiten Korrespondenz-Lineareinschubführungsabschnitt aufweist, die zu dem ersten und dem zweiten Lineareinschubführungsabschnitt des Gehäuses korrespondieren, sodass das Gehäuse und das an der Basis befestige Befestigungselement entlang der Lineareinschubrichtung via Lineareinschieben zusammenbaubar sind, um dadurch das Gehäuse über das Befestigungselement an der Basis in lösbarer Weise festzulegen.

Beispiel 101 ist eingerichtet gemäß Beispiel 100, wobei die Unterseite des Gehäuses mit dem ersten Lineareinschubführungsabschnitt und dem zweiten Lineareinschubführungsabschnitt ausgebildet ist.

Beispiel 102 ist eingerichtet gemäß Beispiel 101, wobei eine von der Vorderseite definierte Vorderseitenebene in einem Winkel von kleiner gleich 80°, optional kleiner gleich 70°, zu einer von der Unterseite definierten Unterseitenebene verläuft und sich in Richtung zu der Oberseite schräg nach hinten geneigt erstreckt.

Beispiel 103 ist eingerichtet gemäß Beispiel 101 oder 102, wobei das Befestigungselement eine Befestigungselement-Aussparung aufweist, die, wenn das Gehäuse über das Befestigungselement an der Basis in lösbarer Weise festgelegt ist, einer der Vorderseite gegenüberliegenden Rückseite des Gehäuses zugewandt ist, sodass die Anschlusskabel durch die Befestigungselement-Aussparung hindurch in eine zu der Befestigungselement-Aussparung korrespondieren Basis-Öffnung der Basis hinein und/oder durch die Befestigungselement-Aussparung des Befestigungselements und die Gehäuse-Aussparung hindurch hindurchführbar sind, um dadurch aus dem Gehäuse hinausgeführt zu werden.

Beispiel 104 ist ein Selbstbedienungsterminal gemäß einem der Beispiele 101 bis 103, wobei der erste Lineareinschubführungsabschnitt und der zweite Lineareinschubführungsabschnitt des Gehäuses an der Unterseite in einem zu der Vorderseite angrenzenden Abschnitt und nicht in einem zu einer der Vorderseite gegenüberliegende Rückseite angrenzenden Abschnitt ausgebildet sind.

Beispiel 105 ist eingerichtet gemäß Beispiel 100, wobei eine der Vorderseite gegenüberliegende Rückseite des Gehäuses mit dem ersten Lineareinschubführungsabschnitt und dem zweiten Lineareinschubführungsabschnitt ausgebildet ist.

Beispiel 106 ist ein Selbstbedienungsterminal gemäß einem der Beispiele 78 bis 105, wobei die Anzeige- und/oder Bedienvorrichtung ein Touchscreen aufweist.

## Patentansprüche

1. Selbstbedienungsterminal (100), aufweisend:
• ein Gehäuse (102) mit einer einem Benutzer des Selbstbedienungsterminals (100) zugewandten, ersten Seite und einer dem Benutzer des Selbstbedienungsterminals (100) nicht zugewandten, zweiten Seite, wobei das Gehäuse (102) an der zweiten Seite mit einem ersten Lineareinschubführungsabschnitt (108) und einem zweiten Lineareinschubführungsabschnitt (110) ausgebildet ist, die zueinander parallel verlaufen und damit eine gemeinsame Lineareinschubrichtung (114) definieren und die quer zur Lineareinschubrichtung (114) in einem Abstand voneinander angeordnet sind, und wobei das Gehäuse (102) zwischen den beiden Lineareinschubführungsabschnitten (108, 110) mit wenigstens einer Öffnung (116) zur Durchführung von Anschlusskabeln (122) versehen ist;
• eine an dem Gehäuse (102) befestigte und in Richtung zu dem Benutzer des Selbstbedienungsterminals (100) ausgerichtete Anzeige- und/oder Bedienvorrichtung (104);
• einen oder mehrere Prozessoren, die eingerichtet sind, eine graphische Anzeige- und/oder Bedienoberfläche auf der Anzeige- und/oder Bedienvorrichtung (104) bereitzustellen, um den Benutzer bei einem Selbstbedienungsprozess am Selbstbedienungsterminal (100) zu unterstützen;
• ein Befestigungselement (112), das eingerichtet ist, lösbar an einer Basis (106) befestigt zu werden, und das einen ersten und einen zweiten Korrespondenz-Lineareinschubführungsabschnitt aufweist, die zu dem ersten und dem zweiten Lineareinschubführungsabschnitt (108, 110) des Gehäuses (102) korrespondieren, sodass das Gehäuse (102) und das an der Basis (106) befestige Befestigungselement (112) entlang der Lineareinschubrichtung (114) via Lineareinschieben zusammenbaubar sind, um dadurch das Gehäuse (102) über das Befestigungselement (112) an der Basis (106) in lösbarer Weise festzulegen.

2. Selbstbedienungsterminal (100) gemäß Anspruch 1,
wobei die erste Seite eine Vorderseite des Gehäuses (102) ist und wobei die zweite Seite eine Unterseite des Gehäuses (102) ist.

3. Selbstbedienungsterminal (100) gemäß Anspruch 2,
wobei das Gehäuse (102) eine der Unterseite gegenüberliegende Oberseite aufweist, wobei sich die Vorderseite zwischen der Unterseite und der Oberseite erstreckt, wobei die Vorderseite in einem Winkel (107) von kleiner gleich 80°, optional kleiner gleich 70°, zur Unterseite verläuft und sich in Richtung zu der Oberseite nach hinten geneigt erstreckt.

4. Selbstbedienungsterminal (100) gemäß Anspruch 2 oder 3, wobei das Befestigungselement (112) eine Befestigungselement-Aussparung (120) aufweist, die, wenn das Gehäuse (102) über das Befestigungselement (112) an der Basis (106) in lösbarer Weise festgelegt ist, einer der Vorderseite gegenüberliegenden Rückseite des Gehäuses (102) zugewandt ist, sodass die Anschlusskabel (122) durch die Befestigungselement-Aussparung (120) hindurch in eine zu der Befestigungselement-Aussparung (120) korrespondieren Basis-Öffnung (118) der Basis (106) hinein und/oder durch die Befestigungselement-Aussparung (120) und eine an einem zu der Unterseite angrenzenden Abschnitt der Rückseite ausgebildete Gehäuse-Aussparung (124) hindurch hindurchführbar sind, um dadurch aus dem Gehäuse (102) hinausgeführt zu werden.

5. Selbstbedienungsterminal (100) gemäß einem der Ansprüche 2 bis 4,
wobei das Gehäuse (102) eine der Vorderseite gegenüberliegende Rückseite aufweist, wobei der erste Lineareinschubführungsabschnitt (108) und der zweite Lineareinschubführungsabschnitt (110) des Gehäuses (102) an der Unterseite in einem zu der Vorderseite angrenzenden Abschnitt und nicht in einem zu der Rückseite angrenzenden Abschnitt ausgebildet sind.

6. Selbstbedienungsterminal (100) gemäß einem der Ansprüche 2 bis 5,
• wobei das Gehäuse eine der Vorderseite gegenüberliegende Rückseite aufweist, welche einem anderen Benutzer des Selbstbedienungsterminals zugewandt ist; und
• wobei das Selbstbedienungsterminal (100) ferner aufweist: eine an dem Gehäuse (102) befestigte und in Richtung zu dem anderen Benutzer ausgerichtete andere Anzeige- und/oder Bedienvorrichtung (178).

7. Selbstbedienungsterminal (100), aufweisend:
• ein Gehäuse (102) mit einer einem Benutzer des Selbstbedienungsterminals (100) zugewandten, ersten Seite und einer dem Benutzer des Selbstbedienungsterminals (100) nicht zugewandten, zweiten Seite;
• eine an dem Gehäuse (102) befestigte und in Richtung zu dem Benutzer des Selbstbedienungsterminals (100) ausgerichtete Anzeige- und/oder Bedienvorrichtung (104);
• einen oder mehrere Prozessoren, die eingerichtet sind, eine graphische Anzeige- und/oder Bedienoberfläche auf der Anzeige- und/oder Bedienvorrichtung (104) bereitzustellen, um den Benutzer bei einem Selbstbedienungsprozess am Selbstbedienungsterminal (100) zu unterstützen;
• wobei das Gehäuse (102) an einer dritten Seite, die an die erste Seite und die zweite Seite angrenzt, an einem zu der zweiten Seite angrenzenden Abschnitt der dritten Seite eine Verbindungselementanschluss-Gehäuse-Aussparung aufweist, durch welche hindurch ein Verbindungselement (134, 138) zum mechanischen Verbinden eines Peripheriegerätes (146, 148, 154) mit dem Selbstbedienungsterminal (100), optional mit dem Gehäuse (102), in das Gehäuse (102) hinein hindurchführbar ist, wobei das Selbstbedienungsterminal (100), optional das Gehäuse (102), benachbart zu der Verbindungselementanschluss-Gehäuse-Aussparung mit einer zu dem Verbindungselement (134, 138) korrespondierenden Aufnahme (142, 144) ausgebildet ist, an welcher das Verbindungselement (134, 138) befestigbar ist, um damit an dem Selbstbedienungsterminal (100), optional an dem Gehäuse (102), befestigbar zu sein.

8. Selbstbedienungsterminal (100) gemäß Anspruch 7, ferner aufweisend das Verbindungselement (134, 138), wobei das Verbindungselement (134, 138) optional einen Durchlassraum (136, 140) hat, welcher sich bei an der Aufnahme befestigtem Verbindungselement (134, 138), von außerhalb des Gehäuses (102) durch die Verbindungselementanschluss-Gehäuse-Aussparung hindurch in das Gehäuse (102) hinein erstreckt, um dadurch zu ermöglichen, eines oder mehrere Anschlusskabel des Peripheriegerätes von außerhalb des Gehäuses (102) über den Durchlassraum (136, 140) durch die Verbindungselementanschluss-Gehäuse-Aussparung hindurch in das Gehäuse (102) hinein zu führen.

9. Selbstbedienungsterminal (100) gemäß Anspruch 8, ferner aufweisend ein mittels des Verbindungselementes (134, 138) mechanisch mit dem Selbstbedienungsterminal (100), optional mit dem Gehäuse (102), verbundenes Peripheriegerät (146, 148, 154).

10. Selbstbedienungsterminal (100) gemäß Anspruch 9,
• wobei das Peripheriegerät (148) eine erste Gerät-Aussparung, durch welche das Verbindungselement hindurchgeführt ist, an einer ersten Seite des Peripheriegeräts (148) und eine zweite Gerät-Aussparung, durch welche hindurch ein anderes Verbindungselement zum mechanischen Verbinden des Peripheriegerätes (148) mit einem anderen Peripheriegerät (154) hindurchführbar ist, an einer der ersten Seite gegenüberliegenden, zweiten Seite des Peripheriegeräts (148) hat, wobei das Peripheriegerät (148) mit einer zu der ersten Gerät-Aussparung korrespondierenden, ersten Gerät-Aufnahme, an welcher das Verbindungselement befestigt ist, und einer zu der zweiten Gerät-Aussparung korrespondierenden, zweiten Gerät-Aufnahme, an welcher das andere Verbindungselement (154) befestigbar ist, ausgebildet ist, sodass das andere Peripheriegerät (154) mittels des Peripheriegeräts (148) an dem Selbstbedienungsterminal (100), optional dem Gehäuse (102), befestigbar ist; oder
• wobei das Peripheriegerät eine von einer ersten Seite zu einer der ersten Seite gegenüberliegenden, zweiten Seite durchgängige Gerät-Aussparung aufweist, durch welche sich das Verbindungselement (138) derart hindurch erstreckt, dass ein Abschnitt des Verbindungselements (138) benachbart zu der zweiten Seite nicht von dem Peripheriegerät bedeckt ist, wobei der Abschnitt des Verbindungselements (138) an einem anderen Peripheriegerät befestigbar ist zum mechanischen Verbinden des anderen Peripheriegerätes mit dem Selbstbedienungsterminal (100), optional mit dem Gehäuse (102).

11. Selbstbedienungsterminal (100), aufweisend:
• ein Gehäuse (102) mit einer einem Benutzer des Selbstbedienungsterminals (100) zugewandten, ersten Seite und einer der ersten Seite gegenüberliegenden, zweiten Seite;
• eine an dem Gehäuse (102) befestigte und in Richtung zu dem Benutzer ausgerichtete Anzeige- und/oder Bedienvorrichtung (104);
• einen oder mehrere Prozessoren, die eingerichtet sind, eine graphische Anzeige- und/oder Bedienoberfläche auf der Anzeige- und/oder Bedienvorrichtung (104) bereitzustellen, um den Benutzer bei einem Selbstbedienungsprozess am Selbstbedienungsterminal (100) zu unterstützen;
• mehrere Anschlussplätze (150) innerhalb des Gehäuses (102) zum Anschließen elektrischer Geräte;
• wobei das Gehäuse (102) an einer dritten Seite, die sich zwischen der ersten Seite und der zweiten Seite erstreckt, an einem zu der zweiten Seite angrenzenden Abschnitt der dritten Seite eine Gehäuse-Aussparung (124) aufweist, durch welche hindurch mindestens ein Anschlusskabel hindurchführbar ist zum Anschließen eines außerhalb des Gehäuses (102) angeordneten Peripheriegerätes an mindestens einen Anschlussplatz der mehreren Anschlussplätze (150);
• mindestens eine Kabelführung (152) zum Führen des mindestens einen Anschlusskabels, wobei die mindestens eine Kabelführung (152) in dem Gehäuse (102) zwischen den mehreren Anschlussplätzen (150) und der Gehäuse-Aussparung (124) angeordnet und mechanisch mit der zweiten Seite des Gehäuses (102) verbunden ist.

12. Selbstbedienungsterminal (100) gemäß Anspruch 11, ferner aufweisend:
• eine Abdeckklappe (172) zum zumindest teilweisen Abdecken des in der mindestens einen Kabelführung (152) geführten mindestens einen Anschlusskabels;
• eine Schwenkeinrichtung (174), mittels derer die Abdeckklappe (172) schwenkbar an dem Gehäuse (102) angebracht ist und die eine Schwenkachse definiert, welche sich in einer Richtung erstreckt, die parallel oder in einem Winkel von kleiner gleich 30°, optional kleiner gleich 10°, oder ferner optional kleiner gleich 5°, zu einer von der ersten Seite definierten Erste-Seite-Ebene verläuft, sodass die Abdeckklappe (172) mittels der Schwenkeinrichtung (174) von einer Abdeckposition, in welcher die mindestens eine Kabelführung (152) aus Richtung der ersten Seite zumindest teilweise abgedeckt sind, in eine Aufdeckposition, in welcher die die mindestens eine Kabelführung (152) aus Richtung der ersten Seite nicht abgedeckt sind, schwenkbar ist.

13. Selbstbedienungsterminal (100), aufweisend:
• ein Gehäuse (102) mit einer Oberseite, einer Unterseite und einer sich zwischen der Oberseite und der Unterseite erstreckenden Vorderseite, die einem Benutzer des Selbstbedienungsterminals (100) zugewandt ist und eine Vorderseitenebene definiert, wobei das Gehäuse (102) eine sich durch die Oberseite und die Unterseite verlaufende Hochachse definiert, und wobei das Gehäuse (102) auf der Vorderseite mit einer Gehäuse-Öffnung versehen ist;
• eine Anzeige- und/oder Bedienvorrichtung (104);
• eine erste Schwenkeinrichtung (166), mittels derer die Anzeige- und/oder Bedienvorrichtung (104) schwenkbar an dem Gehäuse (102) angebracht ist und die eine erste Schwenkachse definiert, welche sich in einer Richtung erstreckt, die parallel oder in einem Winkel von kleiner gleich 30°, optional kleiner gleich 10°, oder ferner optional kleiner gleich 5°, zur Vorderseitenebene sowie parallel oder in einem Winkel von kleiner gleich 30°, optional kleiner gleich 10°, oder ferner optional kleiner gleich 5°, zur Hochachse verläuft, sodass die Anzeige- und/oder Bedienvorrichtung (104) mittels der ersten Schwenkeinrichtung (166) von einer Arbeitsposition aus, in welcher sie sich auf der Vorderseite des Gehäuses (102) befindet, in eine Ausschwenkposition schwenkbar ist, in welcher sie zu einer Lateralseite des Gehäuses (102) hin weggeschwenkt ist;
• ein Vorderseiten-Abdeckelement (168);
• eine zweite Schwenkeinrichtung (170), mittels derer das Vorderseiten-Abdeckelement (168) schwenkbar an dem Gehäuse (102) angebracht ist und die eine zweite Schwenkachse definiert, die sich quer zur ersten Schwenkachse sowie parallel oder in einem Winkel von kleiner gleich 30°, optional kleiner gleich 10°, oder ferner optional kleiner gleich 5°, zur Vorderseitenebene verläuft, sodass das Vorderseiten-Abdeckelement (168) mittels der zweiten Schwenkeinrichtung (170) von einer Abdeckposition aus, in welcher es sich auf der Vorderseite über der Gehäuse-Öffnung befindet, um diese zumindest teilweise abzudecken, in eine Öffnungsposition schwenkbar ist, in welcher es nach vorne hin von der Vorderseite weggeschwenkt ist.

14. Selbstbedienungsterminal (100) gemäß Anspruch 13, wobei die Anzeige- und/oder Bedienvorrichtung (104) und das Vorderseiten-Abdeckelement (168) derart eingerichtet sind, dass die Anzeige- und/oder Bedienvorrichtung (104) in der Arbeitsposition ein Wegschwenken des Vorderseiten-Abdeckelements (168) von der Abdeckposition aus in die Öffnungsposition blockiert und dass die Anzeige- und/oder Bedienvorrichtung (104) in der Ausschwenkposition ein Wegschwenken des Vorderseiten-Abdeckelements (168) von der Abdeckposition aus in die Öffnungsposition nicht blockiert.

15. Selbstbedienungsterminal (100) gemäß Anspruch 13 oder 14, ferner aufweisend: eine mit dem Vorderseiten-Abdeckelement (168) mechanisch verbundene und sich durch eine Öffnung des Vorderseiten-Abdeckelements (168) erstreckende Scanner-Einheit, um, wenn das Vorderseiten-Abdeckelement (168) in der Abdeckposition ist, dem Benutzer bei dem Selbstbedienungsprozess am Selbstbedienungsterminal (100) ein Scannen von Barcodes zu ermöglichen.
